# EUROPEAN PATENT APPLICATION

(11) **EP 4 446 915 A1**
(43) Date of publication of application: **16.10.2024**
(21) Application number: 23737027.5
(22) Date of filing: 04.01.2023
(51) Int. Cl.: G06F 21/44

(54) **APPLICATION MANAGEMENT METHOD AND RELATED APPARATUS**

(30) Priority: 10.01.2022 CN 202210023166
(71) Applicant: Huawei Technologies Co., Ltd., Shenzhen, Guangdong 518129 (CN)
(72) Inventor: PAN, Dongxue, Shenzhen, Guangdong 518129 (CN); MA, Xiaoshuang, Shenzhen, Guangdong 518129 (CN); FANG, Xiwen, Shenzhen, Guangdong 518129 (CN)
(74) Representative: Thun, Clemens
(86) International application number: PCT/CN2023/070341
(87) International publication number: WO 2023/131163

(57) **Abstract**

An application management method and a related apparatus are provided. In the method, when it is detected that an APP requests to invoke a system capability, an electronic device may determine whether a user is informed that the APP requests to invoke the system capability. If it is determined that the user is informed that the APP requests to invoke the system capability, the electronic device may allow the APP to invoke the system capability. Otherwise, the electronic device may ask the user whether to agree with the APP to invoke the system capability, and allow the APP to invoke the system capability if the user agrees, or refuse to allow the APP to invoke the system capability if the user does not agree. The foregoing method can avoid a case in which an APP abuses device permission and collects user information when the user is not informed, thereby improving security of the user information.

## Description

This application claims priority to Chinese Patent Application No. 202210023166.X, filed with the China National Intellectual Property Administration on January 10, 2022 and entitled "APPLICATION MANAGEMENT METHOD AND RELATED APPARATUS", which is incorporated herein by reference in its entirety.

### TECHNICAL FIELD

This application relates to the field of terminal technologies, and in particular, to an application management method and a related apparatus.

### BACKGROUND

With development of electronic devices such as a mobile phone, a tablet computer, and a smartwatch, more applications (applications, APPs) can be installed in the electronic device. In a process of running some APPs on the electronic device, system capabilities such as a camera and a microphone of the electronic device may need to be used to provide a user with corresponding functions. Generally, when the electronic device starts an APP for the first time, the APP requests the user to agree to a privacy statement of the APP, and requests the user to grant, to the APP, permission for invoking one or more system capabilities. To quickly access the APP, the user usually does not carefully read the APP request, but directly agrees to the privacy statement and grants a corresponding permission to the APP.

After obtaining the permission for invoking one or more system capabilities, some APPs may invoke a system capability of the electronic device to obtain user information (for example, invoke the camera to capture an image) when the user is not informed. This may result in a security risk that private user information is leaked.

### SUMMARY

This application provides an application management method and a related apparatus. An electronic device may prompt a user when an APP requests to invoke a system capability, and provide a control for managing the APP that invokes the system capability, for example, a reject control for refusing to allow the APP to invoke the system capability, and an agree control for allowing the APP to invoke the system capability. The user can quickly manage, by using the foregoing control, the APP that invokes the system capability. This avoids a case in which the APP abuses device permission and invokes the system capability without permission to collect user information, thereby improving security of the user information.

According to a first aspect, this application provides an application management method. The method is applied to an electronic device. The electronic device includes a first APP. The electronic device may receive a first user operation on the first APP. The first user operation may be used to use a first function of the first APP. The first function is a function provided by the first APP by invoking a first system capability. The electronic device may receive a first request for the first APP to invoke the first system capability. The first request is sent by the first APP in response to the first user operation. The electronic device allows, based on the first request, the first APP to invoke the first system capability. The electronic device may receive a second request for the first APP to invoke the first system capability. The second request is received by the electronic device when the electronic device does not receive the first user operation. The electronic device refuses, based on the second request, to allow the first APP to invoke the first system capability.

The foregoing method for allowing the first APP to invoke the first system capability may include: The electronic device provides the first APP with an API for invoking the first system capability. The foregoing method for refusing to allow the first APP to invoke the first system capability may include: The electronic device refuses to provide the first APP with the API for invoking the first system capability.

It may be learned that the electronic device may determine, by determining whether a request for the first APP to invoke the first system capability is sent in response to the first user operation, whether the user is informed of the request for the first APP to invoke the first system capability. That the request (for example, the first request) for the first APP to invoke the first system capability is sent in response to the first user operation may indicate that the user is informed that the first APP invokes the first system capability. That the request (for example, the second request) for the first APP to invoke the first system capability is not sent in response to the first user operation may indicate that the user is not informed that the first APP invokes the first system capability. The electronic device may allow the first APP to invoke the first system capability when the user is informed, or refuse to allow the first APP to invoke the first system capability when the user is not informed. This can avoid a case in which the first APP invokes the first system capability and collects user information without permission when the user is not informed, thereby improving security of the user information.

With reference to the first aspect, in some embodiments, after allowing the first APP to invoke the first system capability, the electronic device may display a first notification. The first notification indicates that the first APP is invoking the first system capability. The first notification may include a first reject control. The first reject control may be used to trigger the electronic device to interrupt the first APP to invoke the first system capability.

It may be understood that after allowing the first APP to invoke the first system capability, the electronic device may prompt the user that the first APP invokes the first system capability. The first APP may continuously invoke the first system capability. When the electronic device prompts the user, the first APP may still invoke the first system capability. For example, the first APP invokes a camera. When the electronic device prompts the user, the camera of the electronic device is still in an on state. In this case, the electronic device may provide the first reject control in the first notification. The user may interrupt, by using the first reject control, the first APP to invoke the first system capability (for example, turn off the camera).

With reference to the first aspect, in some embodiments, after allowing the first APP to invoke the first system capability, the electronic device may display a second notification. The second notification may indicate the first APP to complete invoking the first system capability. The second notification includes a second reject control. The second reject control may indicate the electronic device to refuse, if the electronic device receives again a request for the first APP to invoke the first system capability, to allow the first APP to invoke the first system capability.

It may be understood that when the electronic device prompts the user, the first APP may have completed invoking the first system capability. For example, the first APP invokes a location information determining capability. When the electronic device prompts the user, the first APP has obtained location information of the user. In this case, the electronic device may provide the second reject control in the second notification. The user may refuse, by using the second reject control, to allow the first APP to subsequently invoke the first system capability.

In a possible implementation, the second reject control may indicate the electronic device to refuse, if a request for the first APP to invoke the first system capability is received within a preset time period (or at a preset location, or for a preset quantity of times), to allow the first APP to invoke the first system capability.

With reference to the first aspect, in some embodiments, after allowing the first APP to invoke the first system capability, the electronic device may display a first identifier. The first identifier indicates that the first APP is invoking the first system capability. If a user interface of the first APP is displayed, the electronic device receives a user operation of viewing a control bar of the electronic device, and displays the control bar. The control bar includes a third reject control. The third reject control is used to trigger the electronic device to interrupt the first APP to invoke the first system capability.

It may be learned that when the first APP invokes the first system capability when the user is informed, the electronic device may still provide the user with a service of refusing to allow the first APP to invoke the system capability. The electronic device may interrupt the first APP to currently invoke the system capability, or refuse to allow the first APP to subsequently invoke the system capability. In this way, the user may have greater permission to manage the first APP that invokes the system capability. The user may interrupt, at any time in a process in which the first APP invokes the system capability, the first APP to invoke the system capability, so as to protect privacy information of the user. In addition, the foregoing user operation is simple, and user experience can be improved.

With reference to the first aspect, in some embodiments, the first APP has first device permission. The first device permission is device permission required for invoking the first system capability. After allowing the first APP to invoke the first system capability, the electronic device may display a third notification. The third notification indicates the first APP to invoke the first system capability. The third notification includes a first cancel authorization control. The first cancel authorization control is used to trigger the electronic device to cancel the first device permission to the first APP.

If the first APP is invoking the first system capability, when receiving a user operation on the first cancel authorization control, the electronic device may interrupt the first APP to invoke the first system capability, and cancel the first device permission to the first APP. The electronic device may cancel the right of the first APP to use the first device permission within the preset time period (or at the preset location, or for the preset quantity of times).

With reference to the first aspect, in some embodiments, the first APP has the first device permission. The first device permission is device permission required for invoking the first system capability. After allowing the first APP to invoke the first system capability, the electronic device may display a second identifier. The second identifier indicates the first APP to invoke the first system capability. If the user interface of the first APP is displayed, the electronic device receives the user operation of viewing the control bar of the electronic device, and displays the control bar. The control bar includes a second cancel authorization control. The second cancel authorization control is used to trigger the electronic device to cancel the first device permission to the first APP.

If the first APP is invoking the first system capability, when receiving a user operation on the second cancel authorization control, the electronic device may interrupt the first APP to invoke the first system capability, and cancel the first device permission to the first APP. The electronic device may cancel the right of the first APP to use the first device permission within the preset time period (or at the preset location, or for the preset quantity of times).

It may be learned that the user may quickly cancel one or more pieces of device permission of the first APP by using the notification message or the reject control in the control interface. In this way, the user may cancel the device permission of the first APP by performing an operation on the user interface for managing the device permission of the first APP without performing a plurality of user operations. The foregoing embodiment can help the user quickly manage the device permission of the first APP, and avoid a case in which the first APP abuses the device permission, thereby improving security of the user information.

With reference to the first aspect, in some embodiments, before the electronic device refuses, based on the second request, to allow the first APP to invoke the first system capability, the electronic device may display a fourth notification. The fourth notification is used to prompt the user that the first APP requests to invoke the first system capability. The fourth notification includes a fourth reject control. The fourth reject control is used to trigger the electronic device to refuse to allow the first APP to invoke the first system capability. The electronic device receives a user operation on the fourth reject control.

It may be learned that when it is determined that the first APP requests to invoke the first system capability when the user is not informed, the electronic device may prompt the user, and ask the user whether to agree with the first APP to invoke the first system capability. If the user does not agree, the electronic device may refuse to allow the first APP to invoke the first system capability. In this way, the user may learn of an action of the first APP before the first APP to invoke the first system capability. If the user does not agree, the request for the first APP to currently invoke the first system capability fails. The foregoing method can avoid a case in which user information is leaked because the first APP abuses device permission and collects the user information without permission. This can help the user better manage the device permission of the first APP, thereby improving security of the user information, and providing the user with better experience.

With reference to the first aspect, in some embodiments, the first APP has the first device permission. The first device permission is device permission required for invoking the first system capability. The electronic device may cancel the first device permission to the first APP in response to the user operation on the fourth reject control. The electronic device may cancel the right of the first APP to use the first device permission within the preset time period (or at the preset location, or for the preset quantity of times).

It may be learned that when it is determined that the first APP requests to invoke the first system capability when the user is not informed, the electronic device may further provide the user with a control for canceling the first device permission. In this way, the user can quickly cancel the first device permission to the first APP, thereby avoding a case in which the first APP abuses the device permission.

With reference to the first aspect, in some embodiments, the fourth notification further includes a first agree control. The first agree control is used to trigger the electronic device to allow the first APP to invoke the first system capability.

It may be learned that when it is determined that the first APP requests to invoke the first system capability when the user is not informed, the electronic device may provide both the fourth reject control and the first agree control. The user may refuse, by using the fourth reject control, to allow the first APP to invoke the first system capability, or may agree, by using the first agree control, with the first APP to invoke the first system capability.

With reference to the first aspect, in some embodiments, when it is determined that the first APP requests to invoke the first system capability when the user is not informed, the electronic device may display the fourth notification, and wait, within the preset time period, for a user operation on the fourth notification. If no user operation (for example, a user operation performed on the fourth reject control or a user operation performed on the first agree control) on the fourth notification is received within the preset time period, the electronic device may refuse to allow the first APP to invoke the first system capability.

With reference to the first aspect, in some embodiments, before the electronic device refuses, based on the second request, to allow the first APP to invoke the first system capability, the electronic device may display a fifth notification. The fifth notification is used to prompt the user that the first APP requests to invoke the first system capability. The fifth notification includes a second agree control, but does not include a control for triggering the electronic device to refuse to allow the first APP to invoke the first system capability. The second agree control is used to trigger the electronic device to allow the first APP to invoke the first system capability. The electronic device does not receive a user operation on the second agree control in a first time period.

It may be learned that when it is determined that the first APP requests to invoke the first system capability when the user is not informed, the electronic device may first intercept the request for the first APP to invoke the first system capability. The electronic device may provide the second agree control, but does not provide the control for triggering the electronic device to refuse to allow the first APP to invoke the first system capability. The user may trigger, by using the second agree control, the electronic device to allow the first APP to invoke the first system capability. If the electronic device does not receive the user operation on the second agree control within the first time period, the electronic device may refuse to allow the first APP to invoke the first system capability.

With reference to the first aspect, in some embodiments, before the electronic device refuses, based on the second request, to allow the first APP to invoke the first system capability, the electronic device may display a third identifier. The third identifier indicates that an APP in the electronic device requests to invoke the first system capability. The electronic device receives the user operation of viewing the control bar of the electronic device, and displays the control bar. The control bar includes first prompt information and a fifth reject control. The first prompt information is used to prompt the user that the first APP requests to invoke the first system capability. The fifth reject control is used to trigger the electronic device to refuse to allow the first APP to invoke the first system capability. The electronic device receives a user operation on the fifth reject control.

The fifth reject control may be further used to trigger the electronic device to cancel the first device permission to the first APP. For example, the first APP has the first device permission. The first device permission is device permission required for invoking the first system capability. The electronic device may cancel the first device permission to the first APP in response to the user operation on the fifth reject control.

In some embodiments, the control bar further includes a third agree control. The third agree control is used to trigger the electronic device to allow the first APP to invoke the first system capability.

It may be learned that when it is determined that the first APP requests to invoke the first system capability when the user is not informed, the electronic device may prompt the user that the first APP requests to invoke the first system capability, and provide the user with the right to choose whether to agree with the first APP to invoke the first system capability. In this way, the user may learn of an action of the first APP before the first APP to invoke the first system capability. If the user does not agree, the request for the first APP to currently invoke the first system capability fails. The foregoing method can avoid a case in which user information is leaked because the first APP abuses device permission and collects the user information without permission. This can help the user better manage the device permission of the first APP, thereby improving security of the user information, and providing the user with better experience.

With reference to the first aspect, in some embodiments, the electronic device further includes a second APP. The electronic device receives a third request for the second APP to invoke the first system capability. The third request is received by the electronic device when the electronic device does not receive a second user operation on the second APP. The second user operation is used to use a second function of the second APP. The second function is a function provided by the first APP by invoking the first system capability. The electronic device allows, based on the third request, the second APP to invoke the first system capability. The electronic device may display a sixth notification. The sixth notification is used to prompt the user that the second APP is invoking the first system capability. Alternatively, the electronic device may display a seventh notification. The seventh notification is used to prompt the user that the second APP completes invoking the first system capability.

It may be understood that after allowing the first APP to invoke the first system capability, the electronic device may prompt the user that the first APP invokes the first system capability. When the electronic device prompts the user, if the first APP may still invoke the first system capability, the electronic device may display the sixth notification. When the electronic device prompts the user, if the first APP may have completed invoking the first system capability, the electronic device may display the seventh notification.

With reference to the first aspect, in some embodiments, the sixth notification includes a sixth reject control. The sixth reject control is used to trigger the electronic device to interrupt the second APP to invoke the first system capability. The seventh notification includes a seventh reject control. The seventh reject control indicates the electronic device to refuse, if the electronic device receives again a request for the second APP to invoke the first system capability, to allow the second APP to invoke the first system capability.

The seventh reject control may indicate the electronic device to refuse, if the request for the first APP to invoke the first system capability is received within the preset time period (or at the preset location, or for the preset quantity of times), to allow the first APP to invoke the first system capability.

It may be learned that the electronic device may first allow the first APP to invoke the first system capability. When allowing the first APP to invoke the system capability, the electronic device may prompt the user, and provide the sixth reject control or the seventh reject control. If the user does not expect the first APP to invoke the first system capability, the user may interrupt, by using the sixth reject control, the first APP to currently invoke the first system capability. Alternatively, the user may refuse, by using the seventh reject control, to allow the first APP to subsequently invoke the first system capability.

With reference to the first aspect, in some embodiments, before the electronic device refuses, based on the second request, to allow the first APP to invoke the first system capability, the electronic device determines that the second request does not meet a first condition. The first condition includes one or more of the following: time during which the first system capability is requested to be invoked is within a second time period, the electronic device is at a first location when the first system capability is requested to be invoked, and a quantity of times of requesting to invoke the first system capability does not exceed a first quantity threshold.

It may be learned that the electronic device may first determine whether the request for the first APP to invoke the first system capability is sent in response to the first user operation. If the request for the first APP to invoke the first system capability is not sent in response to the first user operation, the electronic device may further determine whether the request (for example, the second request) meets the first condition. When it is determined that the second request does not meet the first condition, the electronic device may directly refuse to allow the first APP to invoke the first system capability. Alternatively, when it is determined that the second request meets the first condition, the electronic device may prompt the user that the first APP requests to invoke the first system capability, and ask the user whether to agree with the first APP to invoke the first system capability.

In a possible implementation, the electronic device may first determine whether the request for the first APP to invoke the first system capability meets the first condition. If the request for the first APP to invoke the first system capability does not meet the first condition, the electronic device may further determine whether the request for the first APP to invoke the first system capability is sent in response to the first user operation. When it is determined that the request for the first APP to invoke the first system capability is not sent in response to the first user operation, the electronic device may directly refuse to allow the first APP to invoke the first system capability. Alternatively, when it is determined that the request for the first APP to invoke the first system capability is not sent in response to the first user operation, the electronic device may prompt the user that the first APP requests to invoke the first system capability, and ask the user whether to agree with the first APP to invoke the first system capability.

The first condition may be set by the user.

With reference to the first aspect, in some embodiments, the electronic device receives a fourth request for the first APP to invoke the first system capability. The fourth request is received by the electronic device when the electronic device does not receive the first user operation. The electronic device determines whether the fourth request meets the first condition. The first condition includes one or more of the following: the time during which the first system capability is requested to be invoked is within the second time period, the electronic device is at the first location when the first system capability is requested to be invoked, and the quantity of times of requesting to invoke the first system capability does not exceed the first quantity threshold. If it is determined that the fourth request meets the first condition, the electronic device allows the first APP to invoke the first system capability. If it is determined that the fourth request does not meet the first condition, the electronic device refuses to allow the first APP to invoke the first system capability.

It may be learned that the electronic device may further determine, by determining whether the request for the first APP to invoke the first system capability meets the first condition, whether the user is informed of the request for the first APP to invoke the first system capability. That the request for the first APP to invoke the first system capability meets the first condition may indicate that the user is informed of the request for the first APP to invoke the first system capability. That the request for the first APP to invoke the first system capability does not meet the first condition may indicate that the user is not informed of the request for the first APP to invoke the first system capability. In this case, when it is determined that the user is informed, the electronic device may allow the first APP to invoke the first system capability. Otherwise, the electronic device may refuse to allow the first APP to invoke the first system capability.

With reference to the first aspect, in some embodiments, the electronic device may establish a communication connection to another electronic device. For example, when a third APP in another electronic device invokes a second system capability of the another electronic device when the user is not informed, the another electronic device may send a message to the electronic device. According to the message sent by the another electronic device, the electronic device may prompt the user that the third APP requests to invoke the second system capability of the another electronic device, and ask the user whether to agree. If the user does not agree, the electronic device may send, to the another electronic device, a message for indicating that the user does not agree. Based on the message for indicating that the user does not agree, the another electronic device may refuse to allow the third APP to invoke the second system capability.

Before the another electronic device sends the message to the electronic device, the another electronic device may determine that the user is using the electronic device.

With reference to the first aspect, in some embodiments, the electronic device may display P information fields. The P information fields are classifications of to-be-collected information in a privacy statement of the first APP. The electronic device receives a user operation on a first information field in the P information fields, and displays first content and options of Q functions. The first content indicates an introduction to information corresponding to the first information field in the privacy statement of the first APP. The Q functions include a function provided by the first APP for collecting the information corresponding to the first information field. An option of one function in the options of the Q functions is used to enable or disable the function.

In a possible implementation, the electronic device obtains the privacy statement of the first APP, and determines, based on the privacy statement of the first APP, the P information fields and a function provided by the first APP for collecting information corresponding to the P information fields. A method for the electronic device to obtain the privacy statement of the first APP may include: The electronic device receives a first message from the first APP, where the first message includes the privacy statement of the first APP. Alternatively, the electronic device performs simulated clicking on controls included in the first APP one by one, to obtain the privacy statement of the first APP.

It may be learned that the electronic device can help the user quickly find a location of the privacy statement of the first APP, so that the user views the privacy statement. The user may not need to spend time and effort in searching the first APP for the location of the privacy statement of the first APP. In addition, the electronic device can help the user determine locations of information corresponding to different information fields in the privacy statement of the first APP. In this way, when the user wants to view information corresponding to an information field, the electronic device may quickly locate content displayed in the user interface to a location of the information corresponding to the information field in the privacy statement of the first APP. The user may not need to spend time and effort in searching the lengthy privacy statement for expected information. The foregoing method can help the user quickly understand the privacy statement, and determine which information collected by the first APP is not expected to be obtained by the first APP, so as to disable a corresponding function of the first APP or cancel corresponding device permission. This can help the user better manage the first APP, and protect the user information from being leaked.

According to a second aspect, this application provides an electronic device. The electronic device includes a communication apparatus, a memory, and a processor. The memory may be configured to store a computer program, the processor may be configured to invoke the computer program, so that the electronic device is enabled to perform any one of the possible implementations of the first aspect.

According to a third aspect, this application provides a computer storage medium, including instructions. When the instructions are run on an electronic device, the electronic device is enabled to perform any one of the possible implementations of the first aspect.

According to a fourth aspect, an embodiment of this application provides a chip. The chip is applied to an electronic device. The chip includes one or more processors. The processor is configured to invoke computer instructions, and the electronic device is enabled to perform any one of the possible implementations of the first aspect.

According to a fifth aspect, an embodiment of this application provides a computer program product including instructions. When the computer program product runs on a device, the electronic device is enabled to perform any one of the possible implementations of the first aspect.

It may be understood that the electronic device provided in the second aspect, the computer storage medium provided in the third aspect, the chip provided in the fourth aspect, and the computer program product provided in the fifth aspect are all configured to perform the method provided in embodiments of this application. Therefore, for beneficial effects that can be achieved by the electronic device, the computer storage medium, the chip, and the computer program product, refer to the beneficial effects in the corresponding method. Details are not described herein again.

### BRIEF DESCRIPTION OF DRAWINGS

FIG. 1A to FIG. 1C are diagrams of some scenarios in which a user is asked whether to agree to a privacy statement according to an embodiment of this application;
FIG. 1D to FIG. 1G are diagrams of some scenarios of viewing a privacy statement according to an embodiment of this application;
FIG. 2A to FIG. 2C are diagrams of some scenarios in which an APP invokes a system capability of an electronic device 100 according to an embodiment of this application;
FIG. 3A to FIG. 3C are diagrams of some scenarios in which monitoring a case in which an APP invokes a system capability is enabled or disabled according to an embodiment of this application;
FIG. 3D to FIG. 3F are diagrams of some other scenarios in which an APP invokes a system capability of an electronic device 100 according to an embodiment of this application;
FIG. 3G to FIG. 3J are diagrams of some other scenarios in which an APP invokes a system capability of an electronic device 100 according to an embodiment of this application;
FIG. 4A and FIG. 4B are diagrams of some scenarios of setting an invoking condition for an APP to invoke a system capability according to an embodiment of this application;
FIG. 5A is a flowchart of an APP management method according to an embodiment of this application;
FIG. 5B is a flowchart of a method for determining whether a user is informed that an APP invokes a system capability according to an embodiment of this application;
FIG. 6A and FIG. 6B are diagrams of some scenarios in which an invoking status of a system capability is selected to be monitored according to an embodiment of this application;
FIG. 7 is a diagram of a scenario of monitoring a case in which an APP invokes a system capability according to an embodiment of this application;
FIG. 8A to FIG. 8E are diagrams of some scenarios of viewing a privacy statement of an APP according to an embodiment of this application;
FIG. 8F to FIG. 8L are diagrams of some scenarios of disabling a function provided by an APP according to an embodiment of this application;
FIG. 8M and FIG. 8N are diagrams of some scenarios of viewing a status in which an APP obtains device permission according to an embodiment of this application;
FIG. 9A-1 and FIG. 9A-2 are a flowchart of another APP management method according to an embodiment of this application;
FIG. 9B-1 and FIG. 9B-2 are a flowchart of another APP management method according to an embodiment of this application;

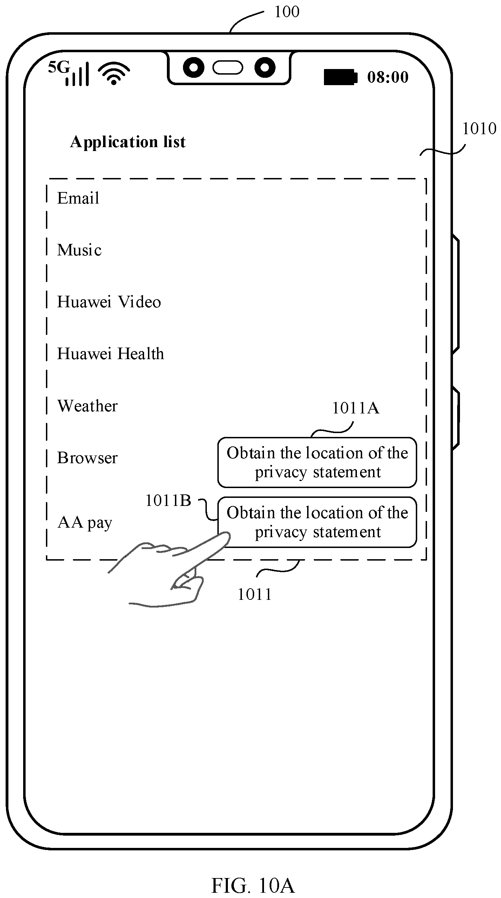

FIG. 10A to FIG. 10C are diagrams of some scenarios of viewing a privacy statement of an APP according to an embodiment of this application;

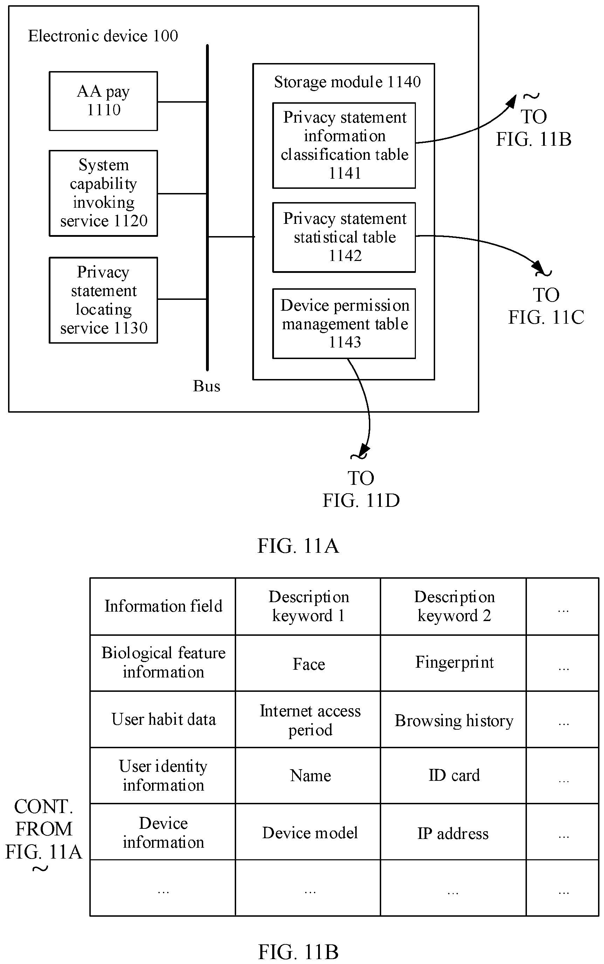

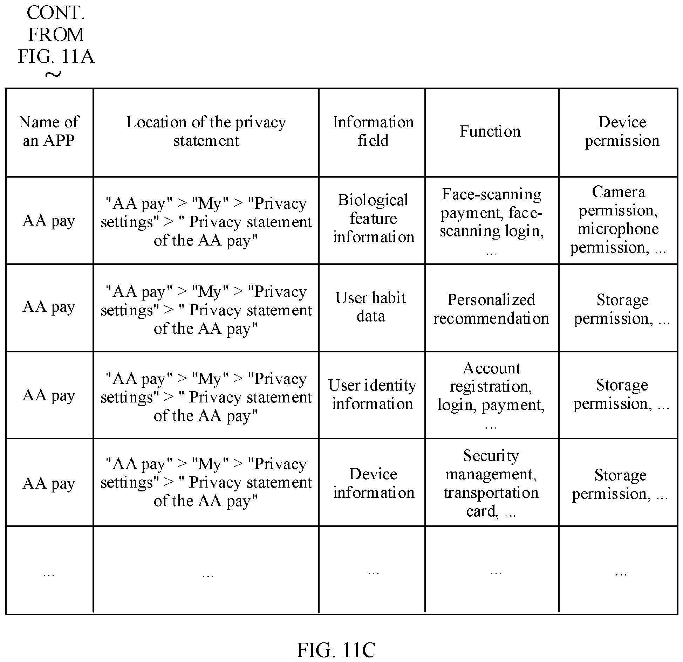

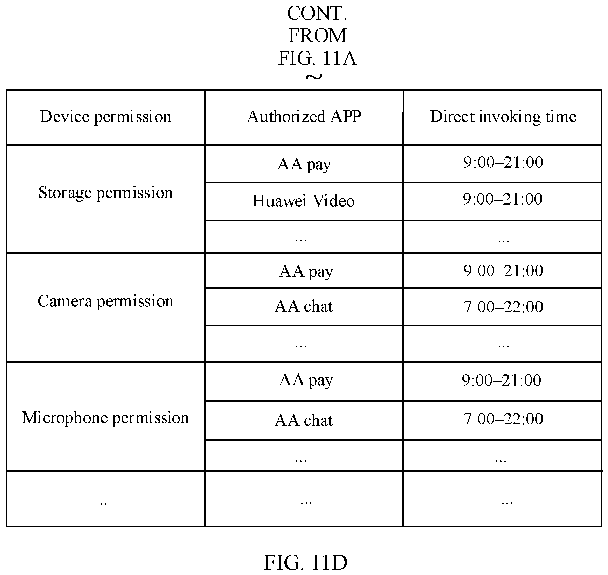

FIG. 11A to FIG. 11D are a diagram of a structure of an electronic device 100 according to an embodiment of this application;

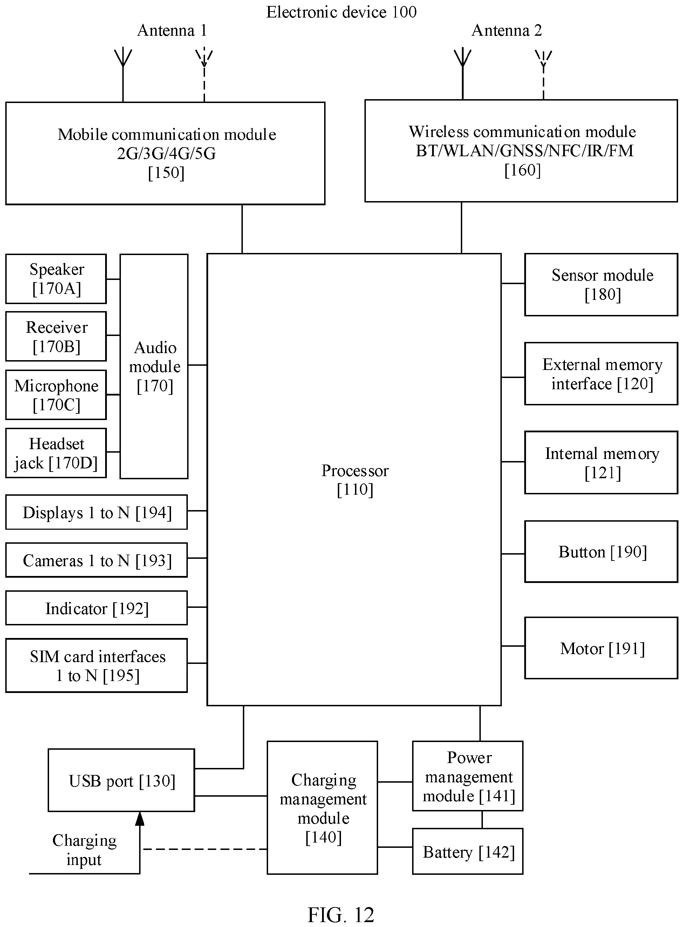

FIG. 12 is a diagram of a structure of another electronic device 100 according to an embodiment of this application; and

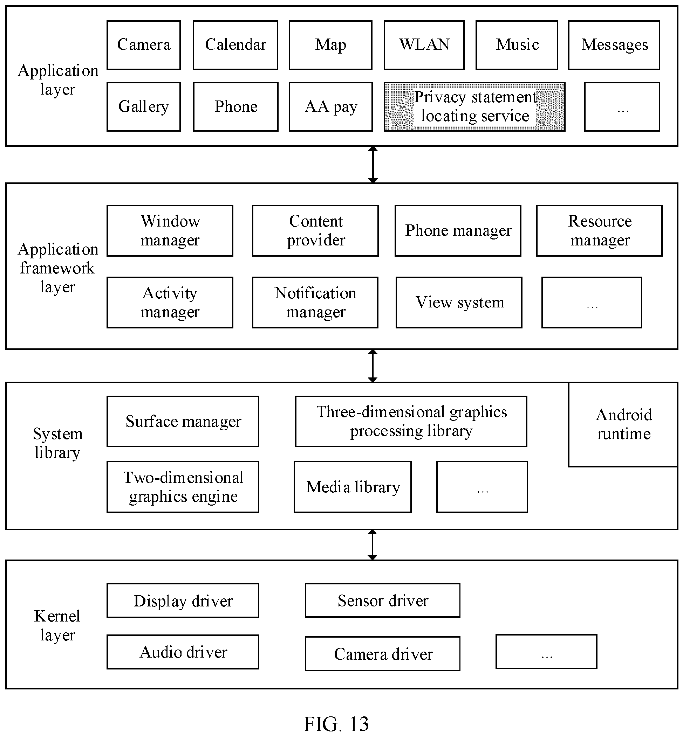

FIG. 13 is a block diagram of a software structure of an electronic device 100 according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

For ease of understanding, some concepts in this application are first described herein.

### 1. System capability

The system capability may include a function provided by a system APP in an electronic device, and a capability provided by a hardware apparatus of the electronic device. The system APP may be an APP provided or developed by a manufacturer of the electronic device. The manufacturer of the electronic device may include a manufacturer, a supplier, a provider, an operator, or the like of the electronic device.

For example, the system APP in the electronic device may include a phone APP, a message APP, a contact APP, a calendar APP, a camera APP, and the like. The phone APP may provide a function of making a call, a function of reading a call status and an identifier of a device, and the like. The identifier may include a subscriber identity module (subscriber identity module, SIM) card number in the electronic device, an identity (identity, ID) of the electronic device, and the like. The message APP may provide a function of reading an SMS message, a function of sending an SMS message, and the like. The contact APP may provide a function of reading information about contacts, a function of editing (for example, creating, modifying, or deleting) contacts, and the like. The calendar APP may provide a function of reading schedule information, a function of editing (for example, creating, modifying, or deleting) a schedule, and the like. The camera APP may be used to provide functions such as photographing and video recording.

The hardware apparatus of the electronic device may include a memory, a camera, a microphone, a locating apparatus, and the like. The memory may have a capability of storing data such as a photo, a video, and an audio file in the electronic device. The camera may have an image capture capability. The microphone may have a sound signal collecting capability. The locating apparatus may have a location information determining capability.

An APP may invoke one or more system capabilities in the electronic device to provide a corresponding function for a user. For example, a payment APP may provide functions such as shopping payment, payment collection, and passenger code for the user. A chat APP may provide functions such as instant messaging, voice calls, and video calls. In a scenario in which the user performs shopping payment by using the payment APP, the payment APP needs to authenticate an identity of the user to ensure security of a payment account. If the user performs identity authentication in a facial recognition manner, the payment APP needs to invoke the image capture capability of the electronic device (that is, invoke the camera) to collect a face image of the user. In a scenario in which the user uses the passenger code of the payment APP to take a bus, the payment APP needs to invoke the location information determining capability of the electronic device (that is, invoke the foregoing locating apparatus) to obtain location information of the user, to determine to provide passenger code of a corresponding city.

Generally, the APP may invoke the system capability only after obtaining permission for invoking the system capability in the electronic device. The obtaining permission for invoking the system capability in the electronic device is obtaining device permission. The device permission may include: phone permission, message permission, contact permission, calendar permission, camera permission, microphone permission, storage permission, and location information permission. For example, the obtaining phone permission may indicate obtaining permission for invoking a function provided by the phone APP. When the electronic device grants the phone permission to the APP, the APP may make a call, and read a call status and an identifier of the device.

When the system APP may provide a plurality of functions, or the hardware apparatus of the electronic device has a plurality of capabilities, the system APP or the hardware apparatus of the electronic device may correspond to a plurality of system capabilities. For example, the phone APP may provide a function of making a call, and a function of reading a call status and an identifier of a device. The phone permission may include permission for making a call and permission for reading a call status and an identifier of a device. The electronic device may grant one or more pieces of permission in the phone permission to an APP.

### 2. Privacy statement

When an APP runs, information of a user needs to be collected and used. To ensure that the user trustingly provides the information to the APP, the APP provides a privacy statement to the user and asks the user whether to agree to the privacy statement.

The privacy statement of the APP may be used to describe content such as which user information is collected by the APP, how to collect user information, how to use user information, and how to protect user information. The foregoing privacy statement may also be referred to as a privacy policy, a privacy clause, or the like. This is not limited in embodiments of this application.

That the user agrees to the privacy statement of the APP may indicate that the user agrees to grant, to the APP, one or more system capabilities related to the privacy statement of the APP in an electronic device, so that the APP collects information mentioned in the privacy statement. For example, the privacy statement of the APP proposes to capture a face image of the user, to implement a function of performing identity authentication in a facial recognition manner. In this case, the electronic device 100 may grant the camera permission (that is, for invoking an image capture capability) to the APP.

### 3. Foreground and background

An APP may run in the foreground of an electronic device, or may run in the background of the electronic device. When the APP runs in the foreground of the electronic device, the electronic device 100 may display a user interface of the APP on a display. A user may interact with the APP by using a control in the user interface of the APP. A case in which the APP runs in the electronic device but does not run in the foreground is a case in which the APP runs in the background of the electronic device. The case in which the APP runs in the background of the electronic device may include that a process of the APP exists in the electronic device, but the user interface of the APP is not displayed on the display. Because the user interface of the APP running in the background is not displayed on the display, the user usually cannot directly interact with the APP running in the background. The background may also be referred to as a "non-foreground".

There may be one or more APPs running in the foreground of the electronic device, and there may also be one or more APPs running in the background of the electronic device. When one or more APPs run in the foreground of the electronic device, one or more APPs may run in the background of the electronic device.

In some embodiments, if the APP has device permission, the APP may invoke a system capability corresponding to the device permission when the user is not informed. For example, the APP has device permission A. If no operation performed by the user on the APP is received, the APP directly invokes a system capability corresponding to the device permission A when running in the background. For another example, the APP has device permission B, and the APP runs in the foreground. If no user operation performed by the user on the APP for using a function B provided by the APP is received, the APP directly invokes a system capability corresponding to the device permission B. The function B is a function that can be provided by the APP by invoking the system capability corresponding to the device permission B. In other words, that the APP invokes the system capability corresponding to the device permission when the user is not informed may indicate that the user does not perform, on the APP, a user operation of using a function provided by the system capability corresponding to the device permission, and the APP directly invokes the system capability corresponding to the device permission.

It may be learned that after the APP has the device permission, the APP may abuse the device permission and collect user information without permission and against the user's intention. As a result, private user information may be leaked, and risks are brought to the user.

For ease of description and better understanding, an AA pay APP is specifically used as an example for description in subsequent embodiments of this application. The APP is not limited to the AA pay, and may be another APP. Persons skilled in the art should understand that, for a privacy statement of another APP, refer to a privacy statement of the AA pay. For a method for managing another APP, refer to a method for managing the AA pay. The privacy statement of the another APP and the management method for managing the another APP are not described in detail in this application.

The following specifically describes a scenario in which an APP asks a user whether to agree to a privacy statement provided in this application.

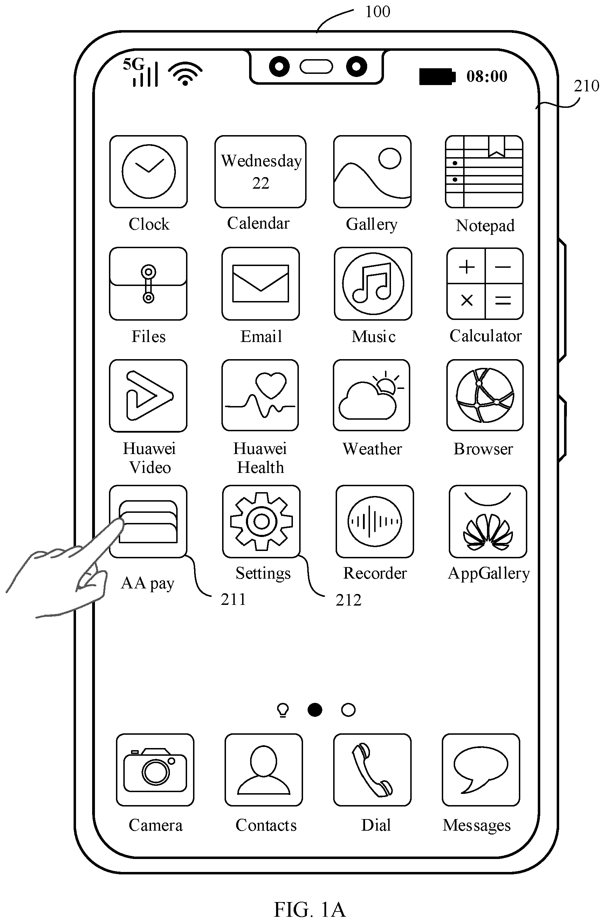

**FIG. 1A to FIG. 1C** **are example diagrams of scenarios in which an APP asks a user whether to agree to a privacy statement.**

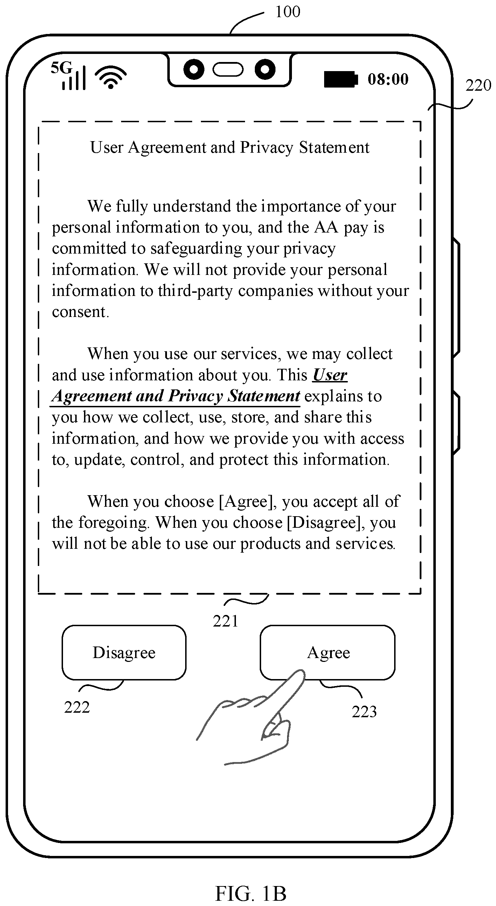

As shown in FIG. 1A, an electronic device 100 may display a user interface 210. The user interface 210 may include one or more APP icons, for example, an AA pay icon 211 and a setting icon 212. An APP icon may be used to trigger the electronic device 100 to open an APP corresponding to the APP icon. An APP corresponding to the AA pay icon 211 is AA pay. In response to an operation performed on the AA pay icon 211, for example, a touch operation, the electronic device 100 may open the AA pay, and display a user interface 220 shown in FIG. 1B.

As shown in FIG. 1B, the user interface 220 may be used to request the user to agree to a privacy statement of the AA pay. The user interface 220 may include a privacy statement overview 221, a disagree control 222, and an agree control 223. The privacy statement overview 221 may be used to explain to the user that the AA pay collects, uses, stores, and shares content such as user information according to the *User Agreement and Privacy Statement.* The *User Agreement and Privacy Statement* is the privacy statement of the AA pay. The text content *"User Agreement and Privacy Statement"* in the privacy statement overview 221 may be a link. In response to a user operation performed on the text content *"User Agreement and Privacy Statement",* the electronic device 100 may display specific content of the privacy statement of the AA pay. The privacy statement overview 221 may be further used to explain to the user that the AA pay can be used only when the user agrees to the privacy statement of the AA pay. A specific expression manner in the privacy statement overview 221 is not limited in embodiments of this application.

The disagree control 222 may indicate that the privacy statement of the AA pay is not agreed to. In some embodiments, in response to a user operation performed on the disagree control 222, the electronic device 100 may close the AA pay. In other words, if the user does not agree to the privacy statement of the AA pay, the electronic device 100 may cancel running of the AA pay.

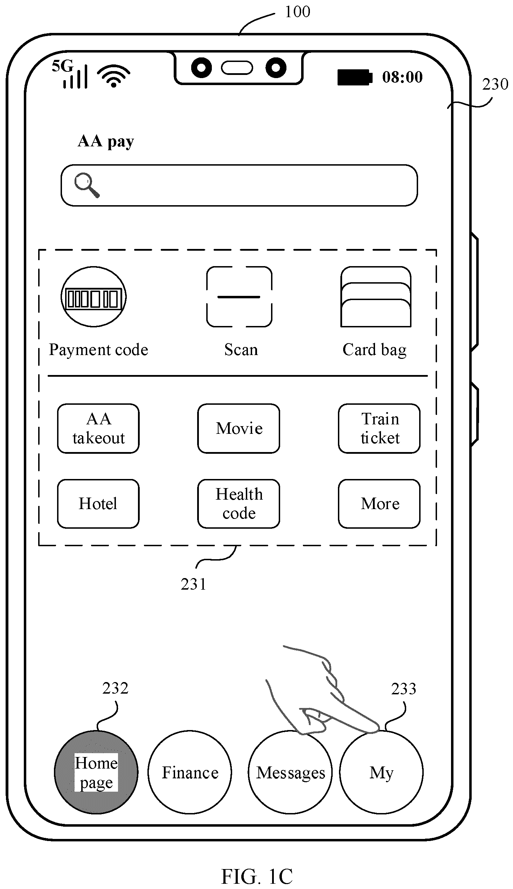

The agree control 223 may indicate that the privacy statement of the AA pay is agreed to. In response to a user operation performed on the agree control 223, the electronic device 100 may display a user interface 230 shown in FIG. 1C.

As shown in FIG. 1C, the user interface 230 may be a home screen of the AA pay. The user interface 230 may include a function option display area 231, a home page control 232, and a my control 233.

The function option display area 231 may display function options corresponding to one or more functions that can be provided by the AA pay, for example, a payment code option and a scan option.

The home page control 232 may be used to trigger the electronic device 100 to display the home screen (namely, the user interface 230) of the AA pay.

The my control 233 may be used to trigger the electronic device 100 to display a setting interface of the AA pay.

It may be learned from FIG. 1A to FIG. 1C that after agreeing to the privacy statement of the AA pay, the user may use a function provided by the AA pay. Otherwise, the user cannot use the function provided by the AA pay. When detecting a user operation performed on the agree control 223, the electronic device 100 may grant one or more pieces of device permission related to the privacy statement of the AA pay to the AA pay.

In some embodiments, when the AA pay is opened for the first time after installation, the electronic device 100 may display the user interface 220 shown in FIG. 1B, and ask the user whether to agree to the privacy statement of the AA pay. If the user agrees to the privacy statement and opens the AA pay again, the AA pay does not need to ask the user whether to agree to the privacy statement of the AA pay. If the privacy statement of the AA pay is updated, when the AA pay is opened again, the AApay may ask the user whether to agree to an updated privacy statement.

After agreeing to the privacy statement, the user may view, in the AA pay, the privacy statement of the AA pay.

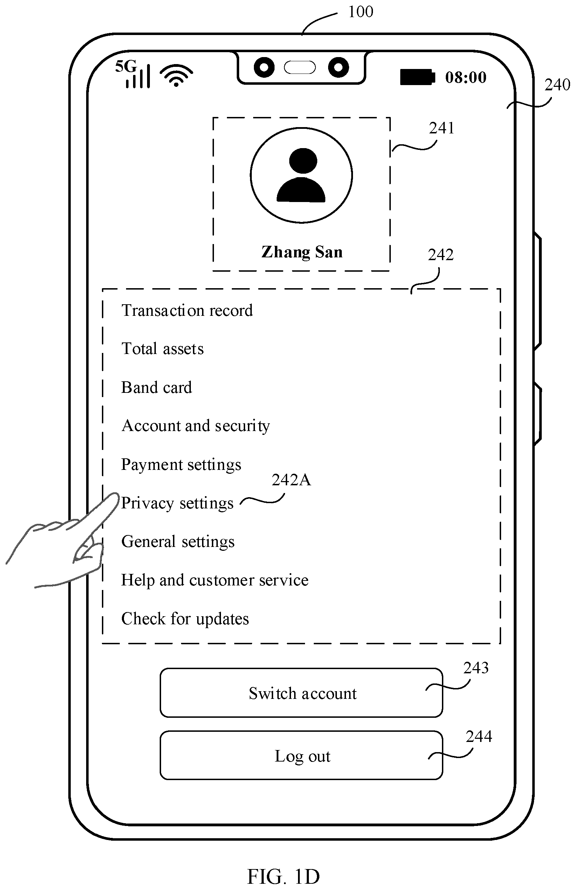

**FIG. 1D to FIG. 1G** **are example diagrams of scenarios of viewing a privacy statement of an APP.**

For example, in response to a user operation performed on the my control 233 shown in FIG. 1C, the electronic device 100 may display a user interface 240 shown in FIG. 1D.

As shown in FIG. 1D, the user interface 240 may include a user information display area 241, a setting option display area 242, a switch account control 243, and a log out option 244.

The user information display area 241 may display information such as a user avatar and a user name (for example, "Zhang San") that correspond to a login account in the AA pay.

The setting option display area 242 may display a setting option for setting the AA pay, for example, a privacy setting option 242A and a payment setting option.

The switch account control 243 may be used to switch login accounts in the AA pay, for example, switch an account whose user name is "Zhang San" to an account whose user name is "Li Si".

The log out control 244 may be used to log out a current login account in the AA pay.

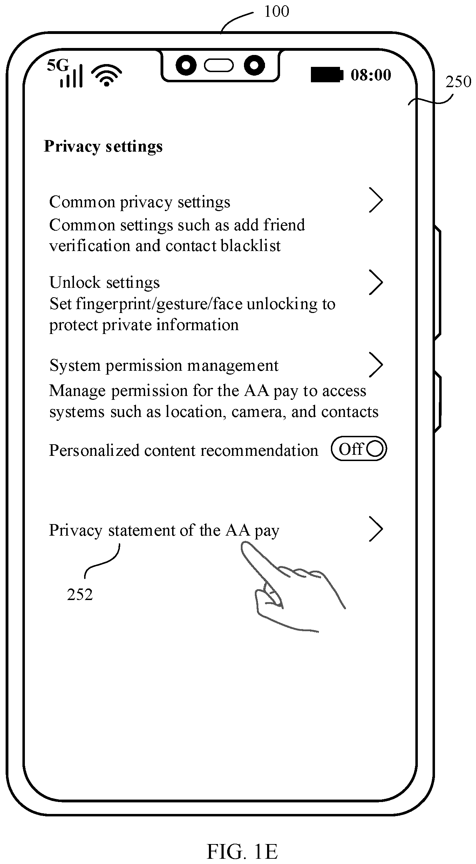

As shown in FIG. 1D, in response to a user operation performed on the privacy setting 242A, the electronic device 100 may display a user interface 250 shown in FIG. 1E. The user interface 250 may be used to view a setting option for setting a function related to user privacy. The user interface 250 may include a privacy statement option 252. The privacy statement option 252 may be used by the user to view specific content of the privacy statement of the AA pay.

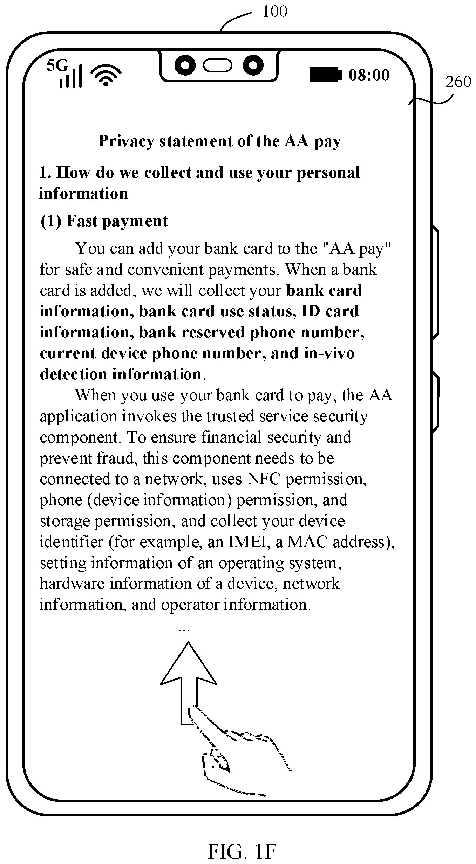

In response to a user operation performed on the privacy statement option 252, the electronic device 100 may display a user interface 260 shown in FIG. 1F.

The user interface 260 may display the specific content of the privacy statement of the AA pay. As shown in FIG. 1F, the privacy statement of the AA pay proposes that the AA pay may provide a fast payment function for the user. When the fast payment function is used, if the user adds a bank card, the AA pay collects bank card information, a bank card use status, ID card information, a bank reserved phone number, a current device phone number, and liveness detection information of the user. The specific content of the privacy statement is usually long, and the user may swipe up or down in the user interface 260 to view the privacy statement.

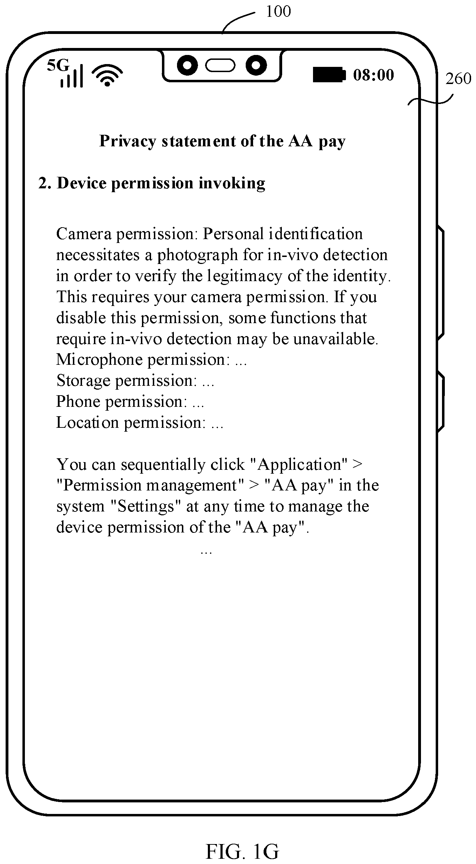

As shown in FIG. 1E, in response to a user operation of swiping up in the user interface 260, the electronic device 100 may display the user interface 260 shown in FIG. 1G. As shown in FIG. 1G, the privacy statement of the AA pay proposes which functions provided by the AA pay can be used if the user grants, to the AA, permission (for example, camera permission, microphone permission, and storage permission) for invoking a system capability of the electronic device 100.

The specific content of the privacy statement and the user operation required for viewing the privacy statement are merely examples for description in this application, and shall not constitute a limitation on this application.

It may be learned from FIG. 1D to FIG. 1G that a user may learn, by viewing a privacy statement of an APP, which user information is obtained by the APP, which system capabilities of the electronic device are invoked, and which functions can be provided for the user. In this way, the user may cancel, based on a use status and a trust degree of the APP for the user, permission of the APP for invoking one or more system capabilities, or disable one or more functions in the APP, so that privacy security of the user is protected, thereby avoding a case in which personal private information is leaked.

However, the APP usually actively asks the user whether to agree to the privacy statement only when the APP is opened for the first time after installation or when the privacy statement of the APP is updated. The specific content of the privacy statement is usually quite long. To quickly access the APP, the user usually directly agrees to the privacy statement of the APP instead of carefully reading the privacy statement to understand which information is obtained and which permission is required by the APP. However, a control for viewing the privacy statement is hidden in the APP. It is difficult for the user to review the privacy statement after agreeing to the privacy statement of the APP. For example, in the embodiments shown in FIG. 1D to FIG. 1G, if the user wants to view the privacy statement of the AA pay, the user needs to sequentially click "My control 233" > "Privacy setting option 242A" > "Privacy statement option 252" in the AApay. A path of the foregoing user operation is long, the user needs to click for a plurality of times, and the user operation is complex. As a result, after the user agrees to the privacy statement, the user usually does not individually review the specific content of the privacy statement to determine which permission should not be granted to the APP.

In some embodiments, after the user agrees to the privacy statement of the AA pay, the AApay may have one or more pieces of device permission of the electronic device 100. The APP may invoke a system capability of the electronic device 100 when the user is not informed, to obtain user information. This brings security risks to private user information.

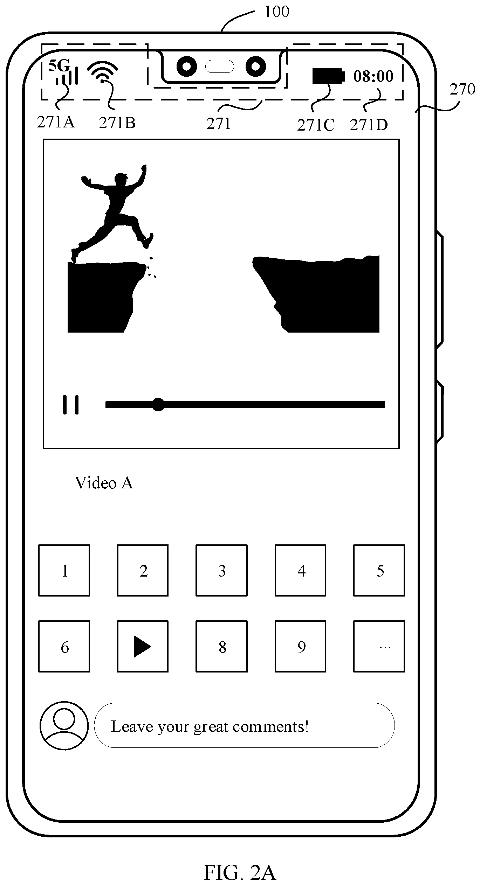

**FIG. 2A to FIG. 2C** **show examples of scenarios in which an APP invokes a system capability of an electronic device 100 when the user is not informed.**

In a scenario in which a user watches a video by using the electronic device 100, the electronic device 100 may display a video playback interface 270 shown in FIG. 2A. The video playback interface 270 may include a status bar 271.

The status bar 271 may include a signal strength indicator 271A of a mobile communication signal, a signal strength indicator 271B of a wireless high fidelity (wireless fidelity, Wi-Fi) signal, a battery status indicator 271C, and a time indicator 271D. Not limited to the foregoing indicator, the status bar 271 may further include more or less content.

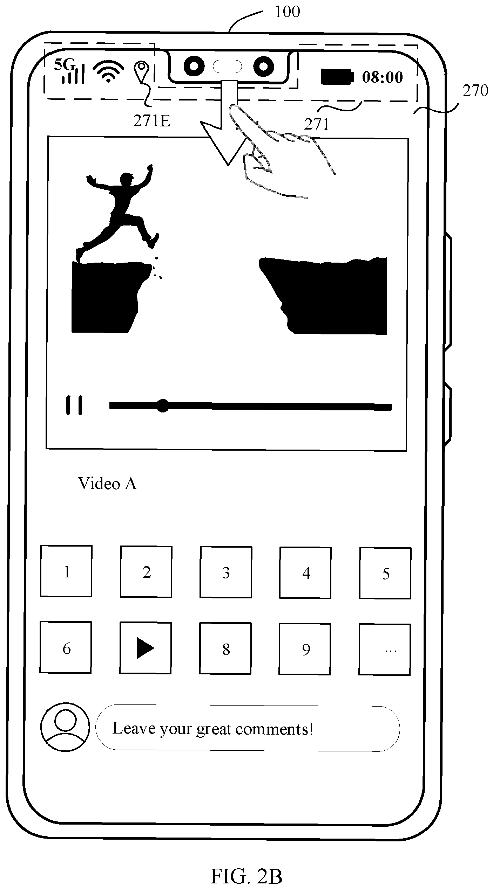

In a video playback process, the electronic device 100 detects that the AA pay is running in the background, and obtains current location information of the user by using location information permission of the electronic device 100. The electronic device 100 may display, in the status bar 271, a location indicator 271E shown in FIG. 2B. The location indicator 271E may indicate that the system capability corresponding to the location information permission in the electronic device 100 is invoked.

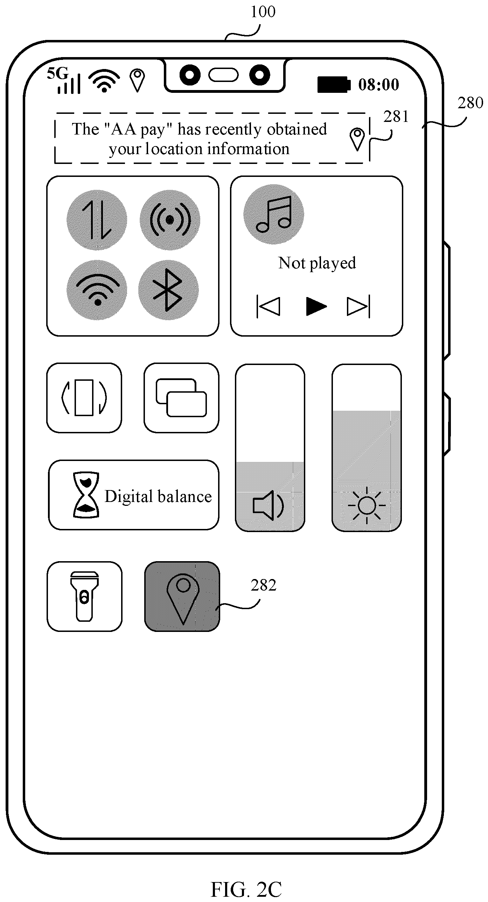

In some embodiments, in response to a user operation of swiping down in the video playback interface 270 from a location of the status bar 271, the electronic device 100 may display a user interface 280 shown in FIG. 2C. The user interface 280 may be a control interface of the electronic device 100. The user interface 280 may include one or more controls for controlling the electronic device 100, for example, a Bluetooth control for enabling or disabling Bluetooth, a Wi-Fi control for enabling or disabling a Wi-Fi signal connection function, and a location control 282 for enabling or disabling a location information determining function.

Because the AA pay uses the location information permission to obtain the location information of the user, the electronic device 100 may further display, in the user interface 280, a permission invoking prompt 281 shown in FIG. 2C. By using the permission invoking prompt 281, the user may learn that the AA pay obtains the location information of the user when running in the background.

In the foregoing video playback scenario, a video playback APP runs in the foreground of the electronic device 100, and the AA pay runs in the background of the electronic device 100. Although the AA pay has the location information permission, the AA pay uses the location information permission to obtain the location information of the user when not receiving the user operation. A behavior of the AApay shown in FIG. 2A to FIG. 2C may be that the AApay collects the location information of the user without permission and against the user's intention. A security risk that private user information is leaked may exist.

It may be learned from FIG. 2A to FIG. 2C that when the user learns that the AA pay obtains the location information of the user, the AA pay has obtained the location of the user by using the location information permission. Even if the user does not want the AA pay to obtain the location information of the user, the user cannot prevent the AA pay from collecting the location information of the user in a timely manner when the AA pay has the location information permission. To prevent the AA pay from collecting the location information without permission, the user may cancel the location information permission of the AA pay. However, when the user uses a function that needs to be provided by the AA pay by invoking the system capability corresponding to the location information permission, the user needs to grant the location information permission to the AA pay again. Operations of repeatedly canceling the location permission of the AA pay and granting the location permission to the AA pay are complex. Optionally, the user may perform an operation on the location control 282 shown in FIG. 2C, to disable a location information determining function of the electronic device 100. When the electronic device 100 disables the location information determining function, all APPs in the electronic device 100 cannot obtain the location information. This affects use, by the user, of a function provided by a system capability that corresponds to location information permission and that needs to be invoked in another APP, thereby affecting user experience.

In some embodiments, the AA pay uses device permission to obtain corresponding information when the user is not informed. The electronic device 100 may not prompt the user immediately. For example, the AA pay uses calendar permission to read schedule information recorded by the user in a calendar APP. The AA pay uses contact permission to read contact information from a contact APP. The AA pay uses phone permission to read a call status and an identifier of a device. The electronic device 100 may not display, in the status bar 271 and the user interface 280, an indicator for indicating that the AA pay reads the schedule information, an indicator for indicating that the AA pay reads the contact information, and an indicator for indicating that the AA pay reads the call status and the identifier of the device. In this case, it may be difficult for the user to learn that the AA pay is obtaining the user information. This also causes a security risk of user information leakage.

The user interfaces shown in FIG. 2A to FIG. 2C are merely examples for description, and should not constitute a limitation on this application.

This application provides an APP management method. In the method, when detecting a request for an APP to invoke a system capability A corresponding to device permission A, the electronic device 100 may determine whether the request for invoking the system capability A is sent in response to a user operation. If the request for invoking the system capability A is sent in response to the user operation, the electronic device 100 may allow the APP to invoke the system capability A. Otherwise, the electronic device 100 may ask the user whether to allow the APP to invoke the system capability A. The foregoing user operation may be, for example, a user operation of using a function that can be provided by the APP by invoking the system capability A.

If the user agrees, the electronic device 100 may allow the APP to invoke the system capability A. If the user does not agree, the electronic device 100 may refuse to allow the APP to invoke the system capability A.

It may be learned from the foregoing method that the electronic device 100 may determine, by determining whether there is the user operation of using the function that can be provided by the APP by invoking the system capability A, whether the user is informed that the APP invokes the system capability A. If it is determined that the user is informed, the electronic device 100 may consider that the APP invokes the system capability A in line with the user's intention. In this case, the electronic device 100 may allow the APP to invoke the system capability A. If it is determined that the user is not informed, the electronic device 100 may prompt the user that the APP requests to invoke the system capability A, and provide the user with the right to choose whether to agree with the APP to invoke the system capability A. In this way, the user may learn of an action of the APP before the APP invokes the system capability A. If the user does not agree, the request for the APP to currently invoke the system capability A fails. The foregoing method can avoid a case in which user information is leaked because the APP abuses device permission and collects the user information without permission. This can help the user better manage the device permission of the APP, thereby improving security of the user information, and providing the user with better experience.

In some embodiments, the APP management method may be completed by a privacy statement locating service in the electronic device 100. The privacy statement locating service may be a system APP in the electronic device 100. The privacy statement locating service may monitor, in real time, a status in which each APP in the electronic device 100 invokes a system capability, so that the user is helped to manage device permission of the APP. The privacy statement locating service may also be referred to as another name, for example, an APP management service, a permission management service, or a privacy protection service. This is not limited in embodiments of this application. In subsequent embodiments of this application, the privacy statement locating service is specifically used as an example for description.

In some embodiments, a function of monitoring a case in which the APP invokes the system capability in the privacy statement locating service may be enabled or disabled.

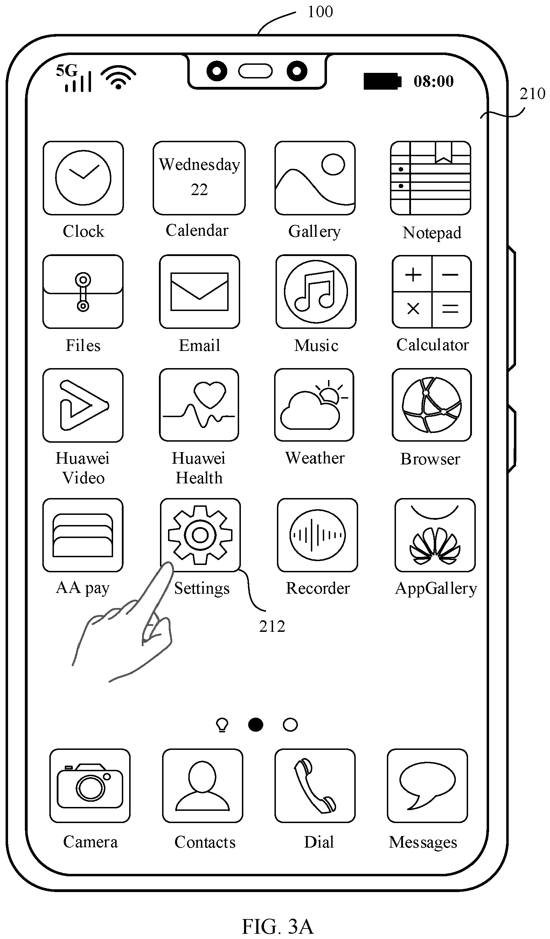

**FIG. 3A to FIG. 3C** **are example diagrams of scenarios in which a function of monitoring a case in which an APP invokes a system capability is enabled or disabled according to an embodiment of this application.**

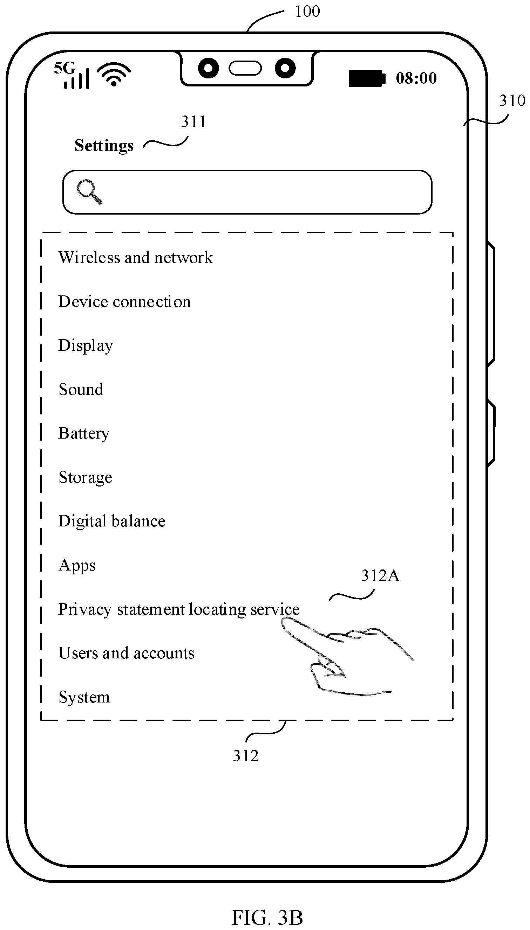

As shown in FIG. 3A, the electronic device 100 may display the user interface 210. For the user interface 210, refer to the description of FIG. 1A. In response to a user operation performed on the setting icon 212, the electronic device 100 may display a user interface 310 shown in FIG. 3B. The user interface 310 may be a user interface for setting an APP.

As shown in FIG. 3B, the user interface 310 may include a title bar 311 and a setting option display area 312.

The title bar 311 may indicate that a currently displayed user interface is the user interface for setting the APP. A representation form of the title bar 311 may include text information "Settings".

The setting option display area 312 displays one or more setting options, for example, a wireless and network option, a device connection option, a display option, and a privacy statement locating service option 312A. The setting option may be used to set a corresponding function of the electronic device 100.

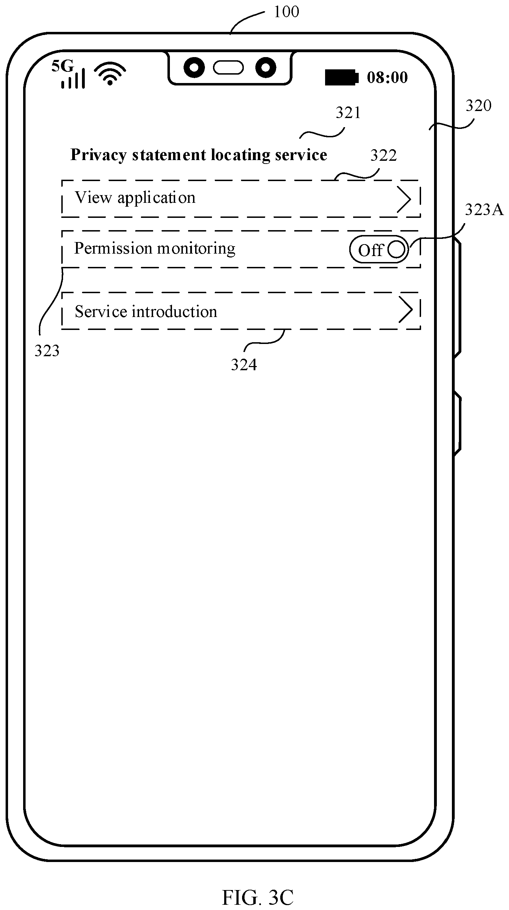

In response to a user operation performed on the privacy statement locating service option 312A, the electronic device 100 may display a user interface 320 shown in FIG. 3C.

As shown in FIG. 3C, the user interface 320 may include a title bar 321, a view application option 322, a permission monitoring option 323, and a service introduction option 324.

The title bar 321 may indicate that a currently displayed user interface is a user interface of the privacy statement locating service. A representation form of the title bar 321 may include text information "Privacy statement locating service".

The view application option 322 may be used by the user to view a privacy statement of one or more APPs in the electronic device 100. The privacy statement locating service can analyze the privacy statement of the one or more APPs, so that the user can quickly view the privacy statement of the APP and more clearly learn of the content of the privacy statement. The foregoing implementation method for the privacy statement locating service to analyze the primary statement of the APP is described in a subsequent embodiment. Details are not described herein.

The permission monitoring option 323 may be used to enable or disable a function of monitoring a case in which the APP invokes the system capability in the privacy statement locating service. For example, the permission monitoring option 323 includes a switch control 323A. If the switch control 323A is in an on state shown in FIG. 3C, it may indicate that a function of monitoring an invoking status of a system capability in the privacy statement locating service is enabled. When the switch control 323A is in the on state, in response to a user operation performed on the switch control 323A, the electronic device 100 may disable the function of monitoring the invoking status of the system capability, and switch the switch control 323A to an off state. When the switch control 323A is in the off state, in response to a user operation performed on the switch control 323A, the electronic device 100 may enable the function of monitoring the invoking status of the system capability, and switch the switch control 323A to the on state.

The service introduction option 324 may be used by the user to view a function of the privacy statement locating service. For example, the privacy statement locating service may monitor, in real time, a status in which each APP in the electronic device 100 uses device permission. Description of specific content of the function of the privacy statement locating service is not limited in embodiments of this application.

In a possible implementation, the function of monitoring the invoking status of the system capability may not need to be manually enabled or disabled by the user. In a process of running on the electronic device 100, the privacy statement locating service may monitor the status in which each APP invokes the system capability.

In a possible implementation, the privacy statement locating service may run in real time after the electronic device 100 is turned on, or the privacy statement locating service may start to run or end running in the electronic device 100 in response to a user operation of manually enabling or disabling the privacy statement locating service. For example, the privacy statement locating service option 312A shown in FIG. 3B may include a control for enabling or disabling the privacy statement locating service.

An implementation of enabling or disabling the privacy statement locating service is not limited in embodiments of this application.

When the function of monitoring the invoking status of the system capability is enabled, the privacy statement locating service may monitor whether an APP requests to invoke a system capability. The privacy statement locating service may determine, according to whether the user is informed of the request for the APP to invoke the system capability, whether to allow the APP to invoke the system capability.

The following describes a scenario in which the privacy statement locating service monitors the case in which the APP invokes the system capability provided in this embodiment of this application.

In some embodiments, in response to a user operation of using a function in the APP, the APP may invoke a system capability required for providing the function. That is, the privacy statement locating service may allow the APP to use the device permission and invoke the system capability corresponding to the device permission when the user is informed.

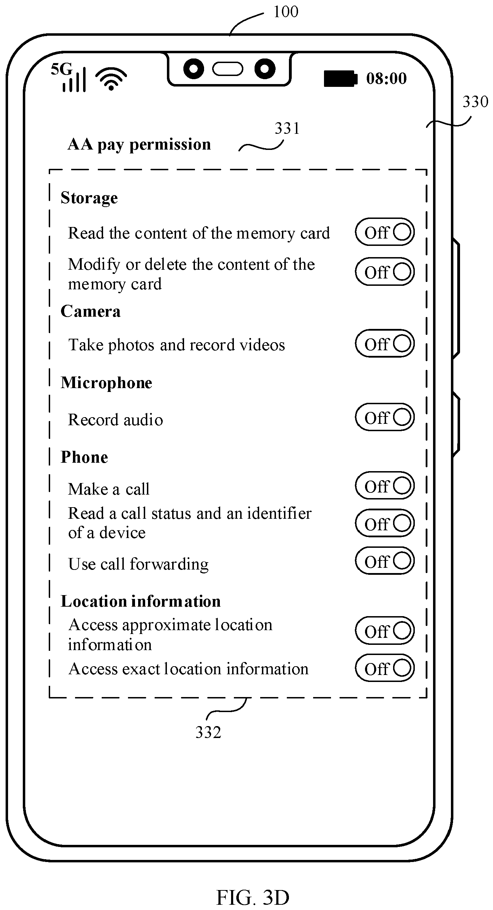

**FIG. 3D to FIG. 3F** **are example diagrams of scenarios in which an APP requests to invoke a system capability when the user is informed.**

The AA pay in the electronic device 100 has the camera permission, and may invoke the camera of the electronic device 100. The AA pay invokes the camera, that is, invokes the image capture capability of the camera. As shown in FIG. 3D, the electronic device 100 may display a user interface 330. The user interface 330 may be used to present the device permission of the AA pay.

The user interface 330 may include a title bar 331 and a device permission display area 332.

The title bar 331 may indicate that a currently displayed user interface is a user interface that presents the device permission of the AA pay. A representation form of the title bar 331 may include text information "AA pay permission".

The device permission display area 332 may display one or more device permission options, for example, a storage permission option, a camera permission option, a microphone permission option, a phone permission option, and a location information permission option. Both the storage permission option and the location information permission option may include two permission options. The phone permission option may include three permission options. A permission option may include a corresponding switch control. The switch control can be used to grant or cancel the corresponding permission of the AA pay.

As shown in FIG. 3D, a switch control corresponding to a camera permission option in the device permission display area 332 is in an on state. It may indicate that the AA pay has the camera permission. When detecting an operation on the switch control corresponding to the camera permission option shown in FIG. 3D, the electronic device 100 may cancel the camera permission of the AA pay, and switch the switch control to an off state.

In some embodiments, the device permission of the AA pay may be granted to the AA pay by the electronic device 100 when it is detected that the user agrees to the privacy statement of the AA pay. In some other embodiments, the device permission of the AA pay may be obtained by requesting in a running process of the AA pay. For example, if the AA pay does not have the camera permission, the AA pay may display, in the user interface, a message notification for requesting the camera permission. The message notification may include a control for granting the camera permission and a control for refusing to grant the camera permission. When detecting an operation performed on the control for granting the camera permission, the electronic device 100 may grant the camera permission to the AA pay. Optionally, the electronic device 100 may determine, based on the corresponding user operation, a quantity of times for which the AA pay can use the camera permission (for example, the camera permission can be used once or the camera permission can be always used). That the AApay can use the camera permission once may indicate that the AA pay invokes the camera, and a quantity of times of image capture is one. After the AA pay uses the camera permission once, the AA pay does not have the camera permission. An implementation method for the AA pay to obtain the camera permission is not limited in embodiments of this application.

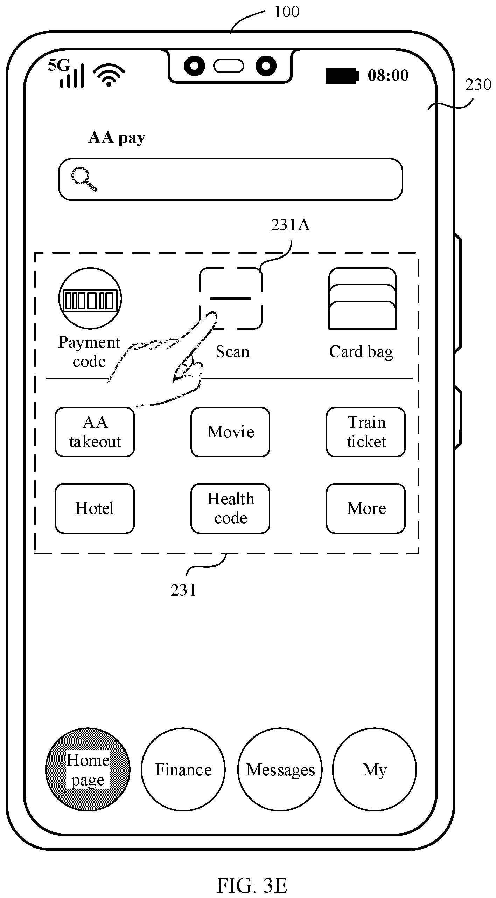

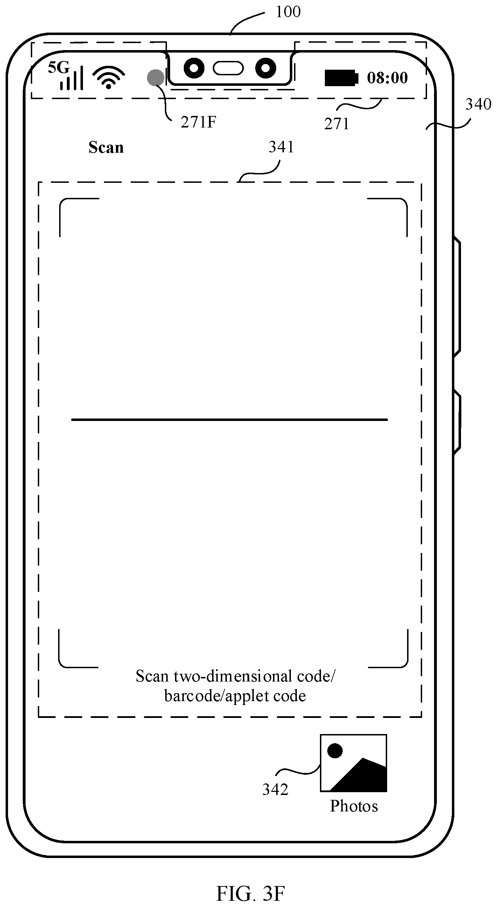

As shown in FIG. 3E, the electronic device 100 may display the user interface 230. For the user interface 230, refer to the description of FIG. 1C. The user interface 230 may include a scan option 231A. In response to a user operation performed on the scan option 231A, the electronic device 100 may display a user interface 340 shown in FIG. 3F. The AApay may provide a scanning function corresponding to the scan option 231A for the user.

As shown in FIG. 3F, the user interface 340 may include a status bar 271, a scan box display area 341, and an album control 342.

For the status bar 271, refer to the description in the foregoing embodiment. In FIG. 3F, the status bar 271 includes a camera indicator 271F. The camera indicator 271F may indicate to turn on the camera (for example, a front-facing camera or a rear-facing camera) of the electronic device 100. An implementation of indicating to turn on the camera of the electronic device 100 is not limited in embodiments of this application. For example, an area in which the camera turned on in the electronic device 100 is located is lit up.

The scan box display area 341 may be used to display an image captured by the camera.

The album control 342 may be used to invoke a system capability corresponding to the storage permission, to read an image in a gallery APP.

It may be understood that the AA pay needs to invoke the system capability corresponding to the camera permission to provide a scanning function. In a possible implementation, because the AA pay has the camera permission, the AA pay may send a camera invoking request to a system capability invoking service. The system capability invoking service may be used to provide an application programming interface (application programming interface, API) for invoking a system capability, so that the APP in the electronic device 100 can invoke a corresponding system capability in an API of the system capability. When receiving a request for the AA pay to invoke the camera, the system capability invoking service may notify the privacy statement locating service, and indicate the AA pay to request to invoke the camera. Further, the privacy statement locating service may determine whether the AA invokes the camera when the user is informed. When it is determined that the request for the AA pay to invoke the camera is initiated in response to a user operation of using the scanning function in the AA pay, the privacy statement locating service may indicate the system capability invoking service to provide the AA pay with an API for invoking the camera, and allow the AA pay to invoke the camera.

In other words, in response to the user operation performed on the scan option 231A, the AA pay requests to invoke the camera. The electronic device 100 may turn on the camera, and display the camera indicator 271F in the status bar. Optionally, after turning on the camera, the electronic device 100 may not display the indicator for indicating to turn on the camera.

As shown in FIG. 3E and FIG. 3F, the AA pay invokes the camera when the user is informed. The privacy statement locating service allows the AA pay to invoke the camera.

In some embodiments, when it is determined that the AA pay invokes the camera when the user is informed, the privacy statement locating service may further display a notification message to prompt the user that the AA pay invokes the camera. For example, the AA pay requests to invoke the camera based on the user operation on the scan option 231A shown in FIG. 3E. The electronic device 100 may display, in the user interface 340 shown in FIG. 3F, the notification message from the privacy statement locating service. The notification message may be used to prompt the user that the AA pay is invoking the camera. The notification message may include a reject control. In response to a user operation performed on the reject control, the electronic device 100 may turn off the camera of the electronic device 100. In other words, the reject control may be used to trigger the electronic device 100 to interrupt the AA pay to invoke the camera. It may be understood that a process in which the AA pay invokes some system capabilities needs to last for a period of time, and a process of invoking some other system capabilities needs to last for a very short time. For example, the AA pay usually invokes the camera for a period of time, and an image captured in a time period of invoking the camera is obtained by using the camera. It takes a quite short time for the AA pay to invoke a location information determining capability to obtain location information. That the AA pay needs to invoke the system capability for a period of time may indicate that the AA pay continuously invokes the system capability. That it takes a quite short time for the AA pay to invoke the system capability may indicate that the AA pay immediately invokes the system capability.

If the AA pay continuously invokes the system capability, the electronic device 100 may provide a reject control 1. The reject control 1 may be used to trigger the electronic device 100 to interrupt the AA pay to invoke the system capability.

If the AApay immediately invokes the system capability, the electronic device 100 may provide a reject control 2. The reject control 2 may indicate the electronic device 100 to refuse, when the electronic device 100 receives again a request for the AA pay to invoke the system capability, to allow the AA pay to invoke the system capability. In response to a user operation on the reject control 2, the electronic device 100 may refuse, if the request for the AA pay to invoke the system capability is received within a preset time period (or for a preset quantity of times, or at a preset location), to allow the AA pay to invoke the system capability. Values of the preset time period, the preset quantity of times, and the preset location are not limited in embodiments of this application.

For example, when it is determined that the AA pay invokes the location information determining capability when the user is informed, the privacy statement locating service may allow the AA pay to invoke the location information determining capability. The AA pay invokes the location information determining capability once to obtain the location information of the user. The privacy statement locating service may further display a notification message to prompt the user that the AA pay invokes the location information determining capability. The notification message may include a reject control. The privacy statement locating service has allowed the AA pay to invoke the location information determining capability. In addition, when the privacy statement locating service displays the notification message, the AA pay may have invoked the location information determining capability to obtain the location information of the user. In this case, it is difficult for the electronic device 100 to cancel a behavior that the AA pay has invoked the location information determining capability. The reject control included in the notification message may indicate the electronic device 100 to refuse, when the electronic device 100 receives again a request for the AA pay to invoke the location information determining capability, to allow the AA pay to invoke the location information determining capability.

In some embodiments, in response to a user operation of swiping down in the user interface 340 shown in FIG. 3F from a location of the status bar 271, the electronic device 100 may display a control interface. For the control interface, refer to the description of FIG. 2C. The control interface may also be referred to as a control bar, a control center, or the like. When it is determined that the AA pay invokes the camera when the user is informed, the electronic device 100 may display the reject control in the control interface. The reject control may be used to trigger the electronic device 100 to turn off the camera. In other words, the electronic device 100 may interrupt the AA pay to invoke the camera. It may be understood that when it is determined that the AA pay immediately invokes a system capability when the user is informed, the electronic device 100 may display a reject control in the control interface. The reject control may indicate the electronic device 100 to refuse, if the electronic device 100 receives again that the AA pay invokes the system capability, to allow the AA pay to invoke the system capability.

It may be learned from the foregoing embodiment that when the AA pay invokes the system capability when the user is informed, the electronic device 100 may still provide the user with a service of refusing to allow the AA pay to invoke the system capability. The electronic device 100 may interrupt the AA pay to currently invoke the system capability, or refuse to allow the AA pay to subsequently invoke the system capability. In this way, the user may have greater permission to manage the AA pay that invokes the system capability. The user may interrupt, at any time in a process in which the AApay invokes the system capability, the AApay to invoke the system capability, so as to protect privacy information of the user. In addition, the foregoing user operation is simple, and user experience can be improved.

In some embodiments, when it is determined that the AA pay invokes the system capability when the user is informed, the reject control provided by the electronic device 100 in the notification message or in the control interface may be used to trigger the electronic device 100 to cancel the device permission that corresponds to the system capability and that is granted to the AA pay.

For example, when it is determined that the AApay invokes the system capability when the user is informed, the privacy statement locating service may further display a notification message to prompt the user that the AA pay invokes the camera. The notification message may include a reject control. The electronic device 100 may cancel the camera permission of the AA pay in response to a user operation on the reject control.

It may be learned from the foregoing embodiment that the user may quickly cancel one or more pieces of device permission of the AA pay by using the notification message or the reject control in the control interface. In this way, the user may cancel the device permission of the AA pay by performing an operation on the user interface for managing the device permission of the AA pay without performing a plurality of user operations. The foregoing embodiment can help the user quickly manage the device permission of the AA pay, and avoid a case in which the AA pay abuses the device permission, thereby improving security of the user information.

In some embodiments, if the APP requests to invoke the system capability when running in the background, the privacy statement locating service may prompt the user that the APP requests to invoke the system capability, and determine, depending on the user's choice, whether to allow the APP to invoke the system capability. That is, the privacy statement locating service does not allow the APP to directly invoke the system capability when the user is not informed.

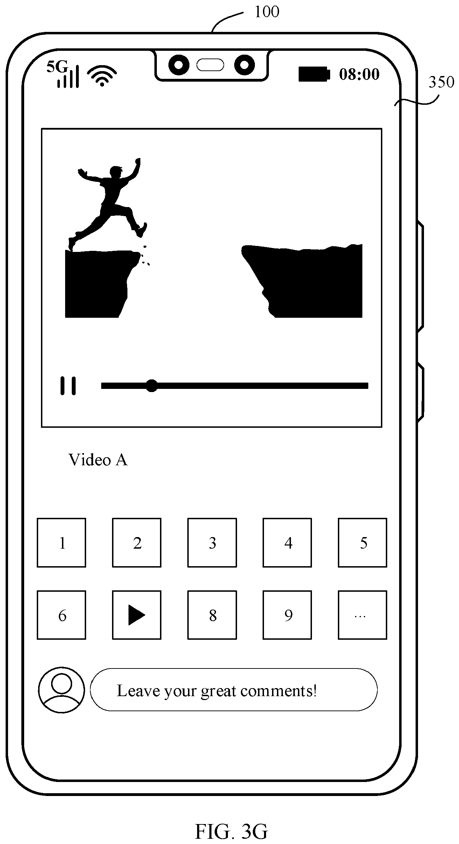

**FIG. 3G to FIG. 3J** **are example diagrams of scenarios in which an APP requests to invoke a system capability when the user is not informed.**

In a scenario in which the electronic device 100 is used to watch a video, the electronic device 100 may display a video playback interface 350 shown in FIG. 3G. For the video playback interface 350, refer to the description of FIG. 2A.

During video playback, the privacy statement locating service detects that AA pay is running in the background and requests to invoke the camera. In this case, the privacy statement locating service may prompt the user that the AA pay requests to invoke the camera, and ask the user whether to agree with the AA pay to invoke the camera.

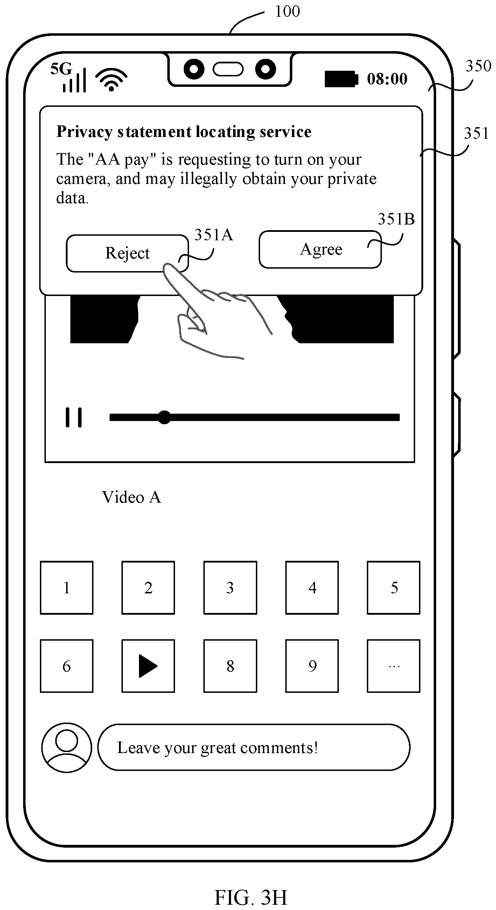

For example, the electronic device 100 may display, in the video playback interface 350, a notification message 351 shown in FIG. 3H. The notification message 351 may be the notification message of the privacy statement locating service.

As shown in FIG. 3H, the notification message 351 may include message content, a reject control 351A, and an agree control 351B. The message content may be specifically as follows: The "AA pay" is requesting to turn on your camera, and may illegally obtain your private data. The message content is not limited in embodiments of this application.

The reject control 351A may be used to reject the request for the AA pay to invoke the camera. In response to a user operation performed on the reject control 351A, the privacy statement locating service may indicate the system capability invoking service to refuse to provide the AA pay with the API for invoking the camera.

The agree control 351B may be used to agree to the request for the AA pay to invoke the camera. In response to a user operation performed on the agree control 351B, the privacy statement locating service may indicate the system capability invoking service to provide the AA pay with the API for invoking the camera, and allow the AA pay to invoke the camera.

In this embodiment of this application, a user operation of agreeing to or reject the request for the AA pay to invoke the camera application is not limited. For example, the user may further reject, based on a user operation of swiping left on the notification message 351, the request for the AA pay to invoke the camera. The user may agree, based on a user operation of swiping right on the notification message 351, to the request for the AA pay to invoke the camera.

In a possible implementation, the privacy statement locating service may wait for a user operation on the notification message 351 within a preset time period. If no user operation on the notification message 351 is received within the preset time period, the privacy statement locating service may indicate the system capability invoking service to refuse to provide the AA pay with the API for invoking the camera. In other words, if the user neither clicks the reject control 351A nor the agree control 351B within the preset time period, the privacy statement locating service may refuse to allow the AA pay to invoke the camera. Alternatively, if no user operation on the notification message 351 is received within the preset time period, the privacy statement locating service may indicate the system capability to provide the AA pay with the API for invoking the camera. A value of the preset time period is not limited in embodiments of this application.

In a possible implementation, the notification message 351 may include the agree control 351B, but does not include the reject control 351A. The privacy statement locating service may first intercept the request for the AA pay to invoke the camera, and display the notification message 351 that includes the agree control 351B but does not include the reject control 351A. If the privacy statement locating service receives a user operation on the agree control 351B within the preset time period, the privacy statement locating service may indicate the system capability invoking service to provide the AA pay with the API for invoking the camera. If no user operation on the agree control 351B is received within the preset time period, the privacy statement locating service may indicate the system capability invoking service to refuse to provide the AA pay with the API for invoking the camera.

Optionally, the reject control 351A and the agree control 351B may also be in the control interface of the electronic device 100. For example, when it is determined that the AApay requests to invoke the camera when the user is not informed, the privacy statement locating service may display an identifier 1 in the status bar of the electronic device 100. The identifier 1 may indicate that an APP in the electronic device 100 requests to invoke the camera. In response to a user operation of swiping down from a location of the status bar, the electronic device 100 may display the control interface. The control interface may include the agree control 351B, or include both the agree control 351B and the reject control 351A. Display styles of the agree control 351B and the reject control 351A are not limited in embodiments of this application.

A method for the electronic device 100 to provide the agree control 351B and the reject control 351A is not limited in embodiments of this application, is not limited to the foregoing control interface, and may further be the notification bar of the electronic device 100 or the like.

It may be learned that when it is determined that the AA pay requests to invoke the camera when the user is not informed, the privacy statement locating service may first intercept the request for the AA pay to invoke the camera, notify the user, and ask the user whether to agree. If the user does not agree, the privacy statement locating service may reject the request for the AA pay to currently invoke the camera. In this way, the user may learn whether the APP abuses permission and obtains the user information without permission, and prevent the APP from invoking the system capability before the APP invokes the system capability, thereby avoiding a case in which personal information is leaked.

In addition, the privacy statement locating service shown in FIG. 3H rejects the request for the AA pay to currently invoke the camera, and does not cancel the camera permission of the AA pay. In other words, although the user rejects the request for the AA pay to invoke the camera, the AA pay still has the camera permission. When the user needs to invoke the camera function (for example, a scanning function) when using the AA pay, the privacy statement locating service may allow the AA pay to invoke the camera. In this way, the user does not need to re-perform the user operation of granting the camera permission to the AA pay. According to the foregoing embodiment, the user information is protected, a case in which the APP invokes the system capability without permission is avoided, and a function of the APP is used by the user without being affected.

In some other embodiments, if the APP requests to invoke the system capability when running in the background, the privacy statement locating service may first allow the APP to invoke the system capability, prompt the user that the APP invokes the system capability, and provide a reject control for refusing to allow the APP to invoke the system capability. If the APP continuously invokes the system capability, the privacy statement locating service may interrupt, in response to a user operation on the reject control, the APP to invoke the system capability. If the APP immediately invokes the system capability, the privacy statement locating service may refuse, in response to a user operation on the reject control, to allow the AA pay to subsequently invoke the system capability.

For example, a scenario in which the AA pay invokes the camera when the user is not informed shown in FIG. 3G to FIG. 3J is used as an example for description. When it is determined that the AA pay invokes the camera when the user is not informed, the privacy statement locating service may allow the AA pay to invoke the camera. The privacy statement locating service may indicate the system capability invoking service to provide the AA pay with the API for invoking the camera. The privacy statement locating service may further display a notification message in the video playback interface 350 shown in FIG. 3G. The notification message may include a reject control. In response to a user operation on the reject control, the privacy statement locating service may turn off the camera (that is, interrupt the AA pay to invoke the camera).

For example, a scenario in which the AA pay invokes the location information determining capability when the user is not informed is used as an example for description. When it is determined that the AA pay invokes the location information determining capability when the user is not informed, the privacy statement locating service may allow the AA pay to invoke the location information determining capability. The privacy statement locating service may indicate the system capability invoking service to provide the AApay with the API for invoking the location information determining capability. In response to a user operation on the reject control, the privacy statement locating service may refuse, when the privacy statement locating service receives a request for the AA pay to invoke the location information determining capability within a preset time period (or at a preset location, or for a preset quantity of times), to allow the AA pay to invoke the location information determining capability.

Optionally, the reject control may alternatively be in the control interface of the electronic device 100. For example, when it is determined that the AA pay requests to invoke the camera when the user is not informed, the privacy statement locating service may display an identifier 2 in the status bar of the electronic device 100. The identifier 2 may indicate that an APP in the electronic device 100 is invoking the camera. In response to the user operation of swiping down from the location of the status bar, the electronic device 100 may display the control interface. The control interface may include the reject control. A display style of the reject control is not limited in embodiments of this application.

A method for the electronic device 100 to provide the reject control is not limited in embodiments of this application, is not limited to the foregoing control interface, and may further be the notification bar of the electronic device 100 or the like.

In a possible example, the reject control is used to disable the camera permission of the AA pay. The permission may be currently disabled, or may be disabled for a period of time, or the permission for the AA pay to use the camera may be permanently disabled.

In a possible example, the control may always exist in the control interface, or may be dynamically displayed. That is, the corresponding control is displayed only after the AA pay invokes the camera.

In a possible example, the reject control and the agree control may be hidden, and are displayed on the screen when the user drags the control interface, or are displayed in front of a control component after the AA pay invokes the camera instead of being hidden.

In a possible example, the reject control and the agree control may be one control. The control is clicked to determine whether to turn on or off the camera.

In a possible example, the AA pay runs in the background. If the camera permission is invoked, a prompt indicating that the camera is being used is displayed on the home screen (a display interface excluding an XX application). In this case, if the user swipes down to invoke the control interface, the reject control in the control interface is for the camera permission of the AA pay, but not for camera use permission of an application (an application different from the AApay) displayed on the home screen. In a possible example, if the user invokes the AA pay in the background to the foreground for use, the electronic device 100 may display prompt information on the screen, to restore the camera permission of the AA pay. Optionally, if the user invokes the AApay in the background to the foreground for use, the electronic device may directly restore the camera permission of the AA pay.

In a possible example, the reject control may disable all camera permission of the electronic device 100. That is, none of applications of the electronic device 100 can use the camera.

The camera permission is permission for an application to invoke the camera of the electronic device 100. The camera may be any one or more of a front-facing camera or a rear-facing camera of the electronic device 100. This is not limited in this application.

Optionally, when it is detected that the APP invokes the system capability when the user is not informed, the privacy statement locating service may prompt the user and ask the user whether to cancel the device permission that corresponds to the system capability and that is granted to the APP.

For example, during video playback shown in FIG. 3G, the privacy statement service detects that the AA pay is running in the background, and requests to invoke the camera. In this case, the privacy statement locating service may prompt the user that the AA pay requests to invoke the camera, and ask the user whether to cancel the camera permission of the AA pay.

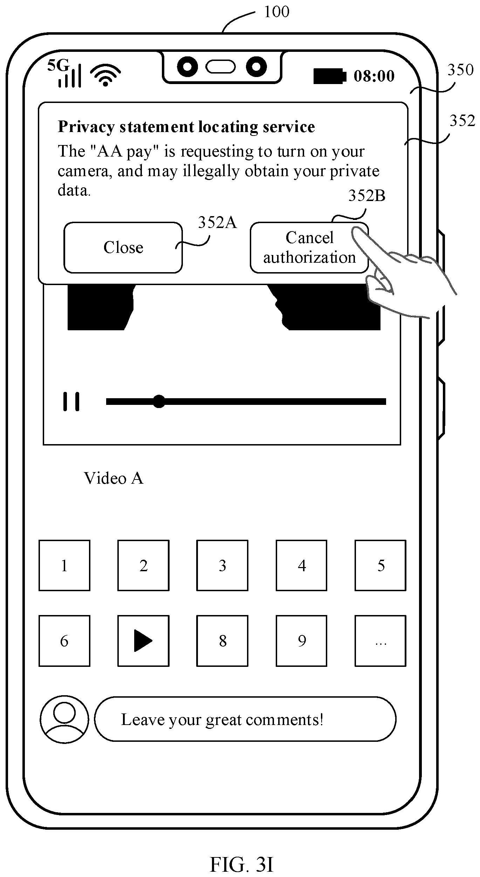

The electronic device 100 may display, in the video playback interface 350, a notification message 352 shown in FIG. 3I. The notification message 352 may be the notification message of the privacy statement locating service.

As shown in FIG. 3I, the notification message 352 may include message content, a close control 352A, and a cancel authorization control 352B. The message content may be specifically as follows: The "AA pay" is requesting to turn on your camera, and may illegally obtain your private data. The message content is not limited in embodiments of this application.

The close control 352A may be used to close the notification message 352. An operation performed by the user on the close control 352A may indicate that the user agrees with the AA pay to invoke the camera. In this case, in response to a user operation performed on the close control 352A, the privacy statement locating service may indicate the system capability invoking service to provide the AA pay with the API for invoking the camera, and allow the AA pay to invoke the camera.

The cancel authorization control 352B may be used to cancel the camera permission of the AA pay. An operation performed by the user on the cancel authorization control 352B may indicate that the user refuses to allow the AA pay to invoke the camera. In this case, in response to the user operation performed on the cancel authorization control 352B, the privacy statement locating service may indicate the system capability invoking service to refuse to provide the AA pay with the API for invoking the camera, and cancel the camera permission of the AA pay. In this way, when the user does not agree, the AApay cannot invoke the camera to capture an image. This can avoid a case in which user information is leaked.

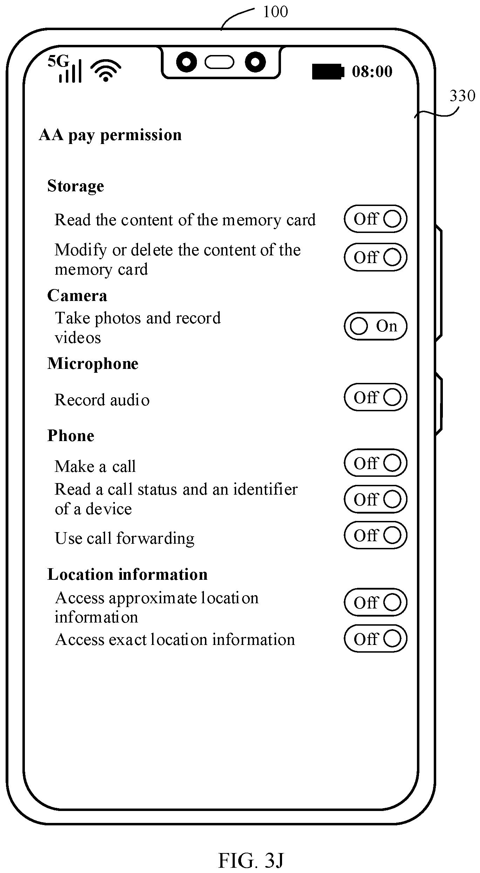

In response to a user operation of viewing permission of the AA pay, the electronic device 100 may display a user interface 330 shown in FIG. 3J. For the user interface 330, refer to the description of FIG. 3D. It may be learned from FIG. 3D and FIG. 3J that after the operation of canceling the camera permission of the AA pay shown in FIG. 3I, the AA pay currently has no camera permission. A corresponding switch control in a camera permission option shown in FIG. 3J is in an off state.

In some embodiments, the cancel authorization control 352B may alternatively be displayed in the control interface of the electronic device 100. A method for the electronic device 100 to provide the cancel authorization control 352B is not limited in embodiments of this application, is not limited to the foregoing control interface, and may further be the notification bar of the electronic device 100 or the like.

In some embodiments, if the APP requests to invoke the system capability when the user is not informed, and the privacy statement locating service has obtained the API for invoking the system capability before notifying the user, after receiving the user operation performed on the cancel authorization in the notification message, the privacy statement locating service may still cancel the device permission that corresponds to the system capability and that is granted to the APP. If the APP is still invoking the system capability when receiving the user operation performed on the cancel authorization in the notification message, the privacy statement service may disable a function provided by the system capability. For example, before the privacy statement locating service displays the notification message 352, the AA pay has invoked the camera. The camera of the electronic device 100 has been turned on. If the AA pay is still invoking the camera and the camera is still in an on state when the user operation performed on the cancel authorization control 352B is received, the privacy statement locating service may turn off the camera of the electronic device 100. This can avoid a case in which user information is leaked after the user refuses to allow the APP to invoke the system capability.

In some embodiments, the user may grant or cancel the device permission of the APP, and may further set the invoking condition for the APP to invoke the system capability corresponding to the device permission. The invoking condition may include one or more of the following: direct invoking time, a direct invoking location, and a quantity of direct invoking times. The foregoing direct invoking time may indicate that the privacy statement locating service may allow the APP to directly invoke the system capability within time that is set by the user and during which the system capability can be directly invoked. If the APP invokes the system capability within the time during which the system capability can be directly invoked, it may be considered that the user is informed. Similarly, the foregoing direct invoking location may indicate that the privacy statement locating service may allow the APP to directly invoke the system capability when the electronic device 100 is at a location that is set by the user and at which the system capability can be directly invoked. The foregoing quantity of direct invoking times may indicate that the privacy statement locating service may allow the APP to directly invoke the system capability, but the quantity of times for which the APP can directly invoke the system capability is a quantity of times that is set by the user and for which the system capability can be directly invoked.

In other words, the privacy statement locating service may determine, by using the foregoing invoking condition, whether the user is informed that the APP invokes the system capability. If the foregoing invoking condition is met for the APP to invoke the system capability, the privacy statement locating service may consider that the user is informed that the APP currently invokes the system capability. In this case, the privacy statement locating service does not need to ask the user whether to allow the APP to invoke the system capability.

The following uses an example in which the invoking condition set by the user is the direct invoking time for description. Persons skilled in the art should understand that, for setting of another invoking condition and an implementation of determining, by using the another invoking condition, whether the user is informed of the privacy statement, refer to the direct invoking time. Details are not described herein again.

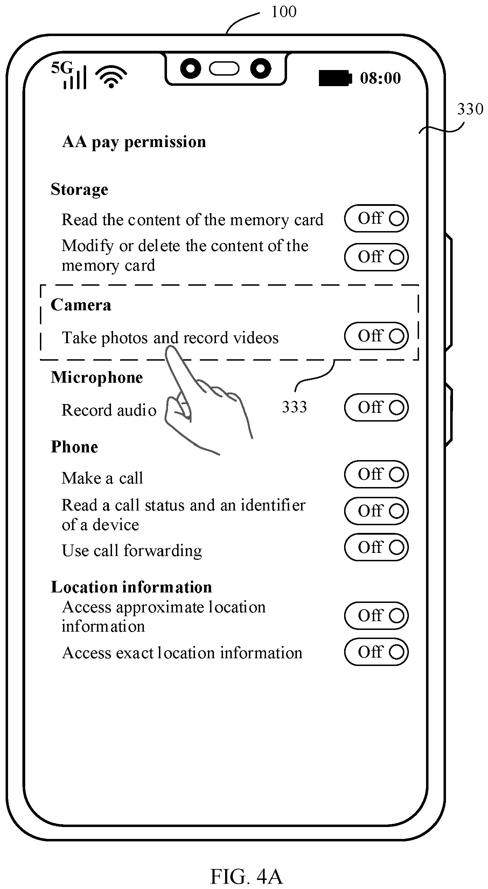

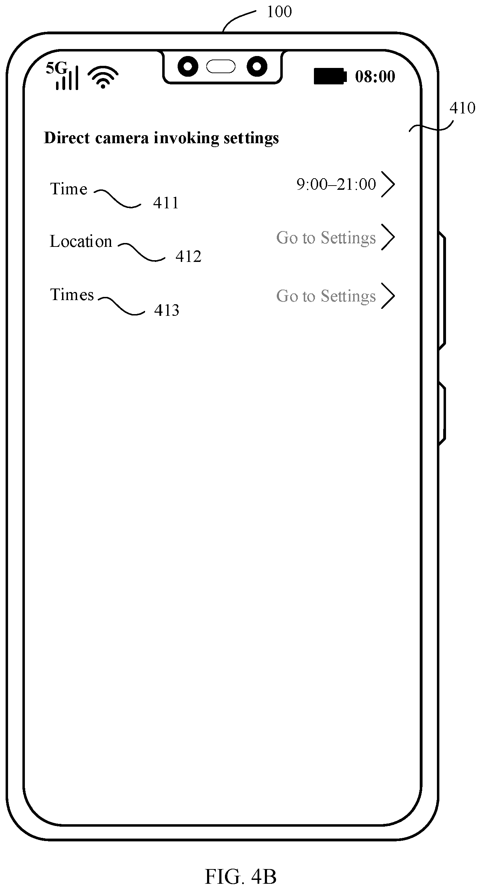

**FIG. 4A** **and** **FIG. 4B** **are example diagrams of scenarios of setting time during which an APP can directly invoke a system capability.**

In response to a user operation of viewing permission of the AA pay, the electronic device 100 may display the user interface 330 shown in FIG. 4A. For the user interface 330, refer to the description of the foregoing embodiment. In a possible implementation, the device permission option in the user interface 330 may be used to trigger the electronic device 100 to display the setting interface for setting the invoking condition for invoking the system capability corresponding to the device permission.

For example, the user interface 330 includes a camera permission option 333. In response to a user operation on the camera permission option 333, the electronic device 100 may display a user interface 410 shown in FIG. 4B. The user interface 410 may be configured to set the invoking condition for invoking the camera.

As shown in FIG. 4B, the user interface 410 may include a time condition option 411, a location condition option 412, and a times condition option 413.

The time condition option 411 may be used to set time during which the AA pay may directly invoke the camera.

The location condition option 412 may be used to set a location condition. When the location of the electronic device 100 meets the foregoing location condition, the AA pay may directly invoke the camera.

The times condition option 413 may be used to set a quantity of times for which the AA pay may directly invoke the camera.

The foregoing invoking condition is not limited in embodiments of this application. The user interface 410 may further include more or fewer setting options for setting the invoking condition.

In a possible implementation, the electronic device 100 may store device permission management table. The device permission management table may include an invoking condition for each APP to invoke a system capability corresponding to device permission. For the device permission management table, refer to Table 1 below.

**Table 1**

| Device permission | Authorized APP | Direct invoking time |
|---|---|---|
| Storage permission | AA pay | 9:00-21:00 |
| | Huawei Video | 9:00-21:00 |
| | ... | ... |
| Camera permission | AA pay | 9:00-21:00 |
| | AA chat | 7:00-21:00 |
| | ... | ... |
| Microphone permission | AA pay | 9:00-21:00 |
| | AA chat | 7:00-21:00 |
| | ... | ... |
| ... | ... | ... |

When detecting a user operation of setting the invoking condition of the system capability for the APP, the electronic device 100 may record, in the device permission management table, the invoking condition set by the user operation. If the invoking condition for the APP to invoke the system capability changes, the electronic device 100 may update corresponding content in the device permission management table.

This is not limited to the invoking condition, namely, the direct invoking time, shown in Table 1. There may be one or more invoking conditions for one APP to invoke a system capability corresponding to one device permission. For example, the device permission management table may further include the direct invoking location. When detecting a user operation of setting the location condition by using the location condition option 412 shown in FIG. 4B, the electronic device 100 may write, based on the location condition set by the user operation, the location information into the column of the direct invoking location at which the AA pay invokes the system capability corresponding to the camera permission in the device permission management table.

A structure of the device permission management table is not limited in embodiments of this application. For example, the electronic device 100 may divide, in the device permission management table by using APP as a category, the invoking condition for each APP to invoke the system capability corresponding to the device permission. To be specific, the first column of the device permission management table may be a classification of the APP, the second column may be device permission of the APP, and the third column may be the direct invoking time during which the APP invokes the system capability corresponding to the device permission.

The methods for setting the invoking condition shown in FIG. 4A and FIG. 4B are merely examples for description of this application, and should not constitute a limitation on this application. For example, the electronic device 100 may provide the user with a function of setting a running condition for the APP in the electronic device 100, for example, "Digital balance" and "Focus mode". If the user sets the APP to automatically enable a function under a preset condition, and the APP needs to invoke a system capability to provide the function, it may be considered that the APP invokes the system capability under the preset condition when the user is informed. The privacy statement locating service may allow the APP to invoke the system capability under the preset condition. If the user sets a limiting condition for the APP (for example, the APP is hidden within preset time to avoid interfering with the user), it may be considered that the APP invokes the system capability under the limiting condition when the user is not informed or even when the user does not expect. The privacy statement locating service may refuse to allow the APP to invoke the system capability under the limiting condition.

In a possible implementation, the privacy statement locating service determines, based on whether the request for the APP to invoke the system capability meets the invoking condition, whether the user is informed that the APP invokes the system capability.

Specifically, when it is detected that the AA pay requests to invoke the camera, the privacy locating service may determine, according to the device permission management table, whether the request for the AA pay to invoke the camera meets a corresponding invoking condition. For example, the invoking condition for the AA pay to invoke the camera includes: The direct invoking time is 9:00-21:00.

If it is determined that the time during which the AA pay requests to invoke the camera is within 9:00-21:00, the privacy statement locating service may indicate the system capability invoking service to provide the AA pay with the API for invoking the camera.

If it is determined that the time during which the AA pay requests to invoke the camera is not within 9:00-21:00, the privacy statement locating service may indicate the system capability invoking service to refuse to provide the AA pay with the API for invoking the camera. Alternatively, the privacy statement locating service may ask, according to the embodiment shown in FIG. 3H or FIG. 3I, whether the user agrees with the AA pay to invoke the camera.

Optionally, the privacy statement locating service may further determine, according to the embodiments shown in FIG. 3D to FIG. 3J, whether the user is informed that the APP invokes the system capability.

For example, if it is determined that the time during which the AA pay requests to invoke the camera is not within 9:00-21:00, the privacy statement locating service may determine whether the request for the AA pay to invoke the camera is initiated in response to a user operation of using a function provided by the AA pay by invoking the camera.

If the request for the AA pay to invoke camera is initiated in response to the user operation of using the function provided by the AA pay by invoking the camera, the privacy statement locating service may indicate the system capability invoking service to provide the AA pay with the API for invoking the camera.

If the request for the AA pay to invoke the camera is not initiated in response to the user operation of using the function provided by the AA pay by invoking the camera, the privacy statement locating service may indicate the system capability invoking service to refuse to provide the AA pay with the API for invoking the camera. Alternatively, the privacy statement locating service may ask, according to the embodiment shown in FIG. 3H or FIG. 3I, whether the user agrees with the AA pay to invoke the camera.

In some embodiments, there are a plurality of invoking conditions for the APP to invoke one system capability. The privacy statement locating service may allow the APP to invoke the system capability only when the request for the APP to invoke the system capability meets the foregoing plurality of invoking conditions. For example, the invoking condition for the AA pay to invoke the camera includes: The direct invoking time is 9:00-21:00, and the direct invoking location is an XX company. When it is detected that the AA pay requests to invoke the camera, the privacy statement locating service may determine whether time during which the AA pay requests to invoke the camera is within 9:00-21:00, and whether the location of the electronic device 100 is the XX company. If the request for the AA pay to invoke the camera meets both the invoking conditions about the time and the location, the privacy statement locating service may allow the AA pay to invoke the camera.

In some other embodiments, there are a plurality of invoking conditions for the APP to invoke one system capability. The privacy statement locating service may allow the APP to invoke the system capability when the request for the APP to invoke the system capability meets any one of the foregoing plurality of invoking conditions.

It may be learned from the foregoing embodiment that the user may set, for the APP, the invoking condition for invoking the system capability. When the request for the APP to invoke the system capability meets a corresponding invoking condition, the privacy statement locating service may directly allow the APP to invoke the system capability, without asking the user whether to agree with the APP to invoke the system capability. This can protect security of user information and avoid a case in which an APP abuses device permission and obtains user information without permission, and can also reduce a quantity of times for which the privacy statement locating service asks the user and improve user experience.

**With reference to the scenarios shown in** **FIG. 3D to FIG. 3J****,** **FIG. 4A****, and** **FIG. 4B****, the following specifically describes an APP management method according to an embodiment of this application.**

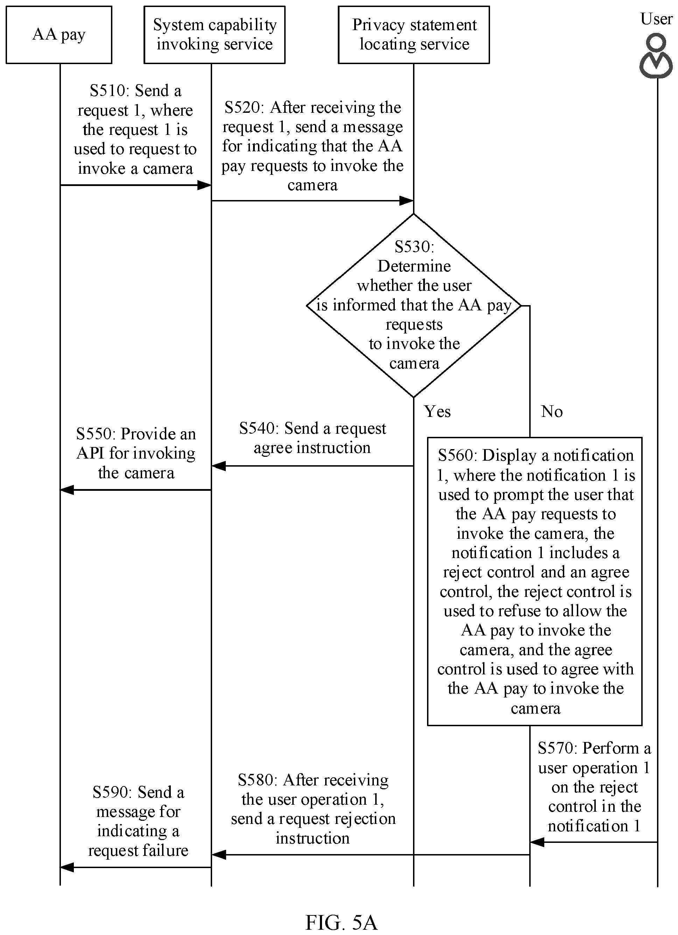

Refer to FIG. 5A. FIG. 5A shows an example of a flowchart of an APP management method. As shown in FIG. 5A, the method may include steps S510 to S590.

S510: The AA pay sends a request 1 to the system capability invoking service, where the request 1 is used to request to invoke the camera.

In a possible implementation, the AA pay may provide a function A1. The function A1 may be, for example, an image scanning function, a face-scanning payment function, or a face-scanning login function. The AA pay needs to invoke the camera to implement the function A1. In response to a user operation of using the function A1, the AA pay may send the request 1 to the system capability invoking service to request to invoke the camera. The user operation of using the function A1 may be, for example, a user operation performed on a control for providing the function A1.

In another possible implementation, there is a case in which the AA pay abuses device permission and invokes a system capability to obtain user information without permission. For example, when the AA pay does not receive a user operation of using a function that needs to be implemented by invoking the camera, the AA pay sends the request 1 to the system capability invoking service.

The request 1 may include a system capability requester, system capability indication information, and authentication information. The system capability requester may indicate that the AA pay requests to invoke the system capability. The system capability indication information may indicate that the system capability that the AA pay requests to invoke is an image capture capability (that is, invoking the camera). The authentication information may indicate that the AA pay has device permission, namely, the camera permission, corresponding to the system capability that the AA pay requests to invoke.

S520: After receiving the request 1, the system capability invoking service sends, to the privacy statement locating service, a message for indicating that the AApay requests to invoke the camera.

In a possible implementation, the system capability invoking service may determine whether the AA pay has the camera permission. For example, the request 1 includes the authentication information. Based on the authentication information, the system capability invoking service may determine that the AA pay has the camera permission.

If the system capability invoking service determines that the AA pay does not have the camera permission, the system capability invoking service may send, to the AA pay, a message for indicating that the AA pay is not authorized and cannot request to invoke the camera. When receiving the foregoing message for indicating that the AA pay is not authorized and cannot request to invoke the camera, the AA pay may display a message notification for requesting the camera permission in the user interface, to request the user to grant the camera permission. The user may use a corresponding control in the message notification to agree to grant the camera permission to the AA pay or refuse to grant the camera permission to the AA pay. When detecting a user operation of agreeing to grant the camera permission to the AA pay, the electronic device 100 may grant the camera permission to the AA pay. When the AA pay has the camera permission, the AA pay may be authenticated by the system capability invoking service. A method for the system capability invoking service to determine whether the AA pay has the camera permission is not limited in embodiments of this application.

When it is determined that the AApay has the camera permission, the system capability invoking service may send, to the privacy statement locating service, a message for indicating the AA pay to request to invoke the camera.

S530: The privacy statement locating service determines whether the user is informed that the AA pay requests to invoke the camera.

When it is detected that the AA pay requests to invoke the camera, the privacy statement locating service may determine whether the user is informed that the AA pay requests to invoke the camera. It may be learned that the privacy statement may detect, by using the system capability invoking service, whether an APP in the electronic device 100 invokes a system capability.

The privacy statement locating service may determine, by determining whether the user is informed, whether to directly allow the AA pay to invoke the camera. That the AA pay invokes the camera when the user is not informed may be considered as that the AA pay invokes the camera against the user's intention. It may be understood that the user grants the camera permission to the AApay, but generally does not expect the AApay to randomly use the camera permission to invoke the camera to capture an image. As a result, user information may be leaked, and user security is not facilitated. In this case, if it is determined that the user is not informed, the privacy statement locating service should not directly allow the AA pay to invoke the camera. For example, the privacy statement locating service may directly refuse to allow the AA pay to invoke the camera. Alternatively, the privacy statement locating service may ask the user whether to agree to the request for the AA pay to currently invoke the camera.

A method for the privacy statement locating service to determine whether the user is informed is described in a subsequent embodiment. Details are not described herein.

S540: If it is determined that the user is informed that the AA pay invokes the camera, the privacy statement locating service may send a request agree instruction to the system capability invoking service.

S550: After receiving the request agree instruction, the system capability invoking service may provide the AA pay with the API for invoking the camera.

The AApay may turn on the camera of the electronic device 100 in the API for invoking the camera.

S560: If it is determined that the user is not informed that the AA pay invokes the camera, the privacy statement locating service may display a notification 1, where the notification 1 is used to prompt the user that the AA pay requests to invoke the camera, the notification 1 includes a reject control and an agree control, the reject control is used to refuse to allow the AA pay to invoke the camera, and the agree control is used to agree with the AA pay to invoke the camera.

For the notification 1, refer to the notification message 351 shown in FIG. 3H. The agree control in the notification 1 may be the agree control 351B in the notification message 351. The reject control in the notification 1 may be the reject control 351A in the notification message 351.

Optionally, for the notification 1, refer to the notification message 352 shown in FIG. 3I. The agree control in the notification 1 may be the close control 352Ain the notification message 352. The reject control in the notification 1 may be the cancel authorization control 352B in the notification message 352.

S570: The user performs a user operation 1 on the reject control in the notification 1.

S580: After receiving the user operation 1, the privacy statement locating service sends a request rejection instruction to the system capability invoking service.

S590: After receiving the request rejection instruction, the system capability invoking service may send, to the AA pay, a message for indicating a request failure.

In another possible implementation, if it is determined that the user is not informed that the AA pay invokes the camera, the privacy statement locating service may directly indicate the system capability invoking service to refuse to provide the AA pay with the API for invoking the camera. A process in which the privacy statement locating service indicates the system capability invoking service to refuse to provide the AA pay with the API for invoking the camera may include the foregoing step S580 and the foregoing step S590.

In some embodiments, after performing the foregoing step S520, the system capability invoking service may wait, within the preset time, for an instruction sent by the privacy statement locating service. If an instruction (for example, the request agree instruction or the request rejection instruction) sent by the privacy statement locating service is received within the preset time, the system capability invoking service may perform a corresponding operation according to the instruction. If the instruction sent by the privacy statement locating service is not received within the preset time (that is, the system capability invoking service waits overtime), the system capability invoking service may provide the AA pay with the API for invoking the camera.

It should be noted that the system capability invoking service and the privacy statement locating service may be a same service. That is, a service may provide both a function that can be provided by the system capability invoking service and a function that can be provided by the privacy statement locating service. In this case, the AA pay may send the request 1 to the service. When the request 1 is received, the service may determine whether the user is informed that the AA pay requests to invoke the camera.

**The following describes an implementation method for determining whether a user is informed that an APP invokes a system capability according to an embodiment of this application.**

Herein, an example in which the AA pay invokes the camera is specifically used for description.

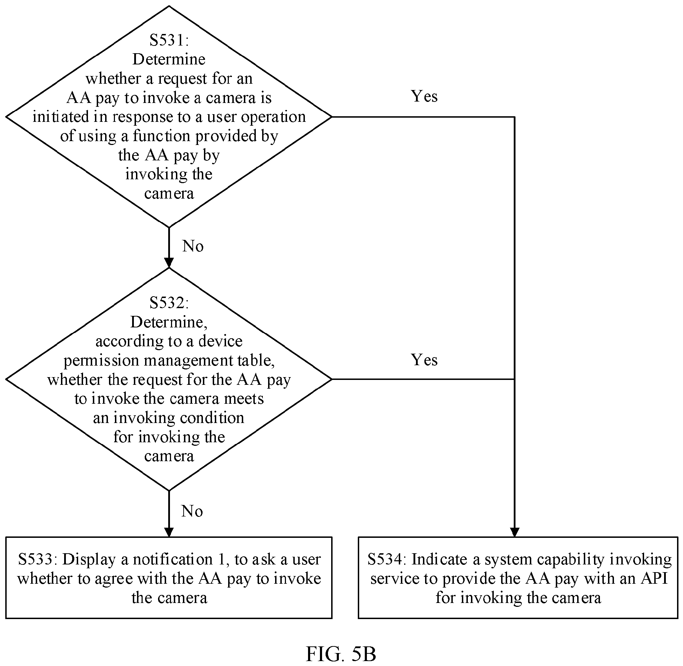

Refer to FIG. 5B. FIG. 5B shows an example of a flowchart of the method for determining, by the privacy statement locating service, whether the user is informed that the AA pay invokes the camera. As shown in FIG. 5B, the method may include steps S531 to S534.

S531: Determine whether the request for the AA pay to invoke the camera is initiated in response to the user operation of using the function provided by the AA pay by invoking the camera.

S532: Determine, according to the device permission management table, whether the request for the AA pay to invoke the camera meets the invoking condition for invoking the camera.

For the device permission management table, refer to the description in the foregoing embodiment. Details are not described herein again.

S533: If the request for the AA pay to invoke the camera is not initiated in response to the user operation of using the function provided by the AA pay by invoking the camera, and the request for the AA pay to invoke the camera does not meet the invoking condition for invoking the camera, the privacy statement locating service may display the notification 1, to ask the user whether to agree with the AA pay to invoke the camera.

In the following cases, the request for the AA pay to invoke the camera is not initiated in response to the user operation of using the function provided by the AA pay by invoking the camera, and the request for the AA pay to invoke the camera does not meet the invoking condition for invoking the camera, the privacy statement locating service may determine that the user is not informed that the AA pay invokes the camera. For a process in which the privacy statement locating service displays the notification 1, refer to the description of step S560 in FIG. 5A. Details are not described herein again.

In another possible implementation, if it is determined that the user is not informed that the AA pay invokes the camera, the privacy statement locating service may directly indicate the system capability invoking service to refuse to provide the AA pay with the API for invoking the camera.

S534: If the request for the AA pay to invoke the camera is initiated in response to the user operation of using the function provided by the AA pay by invoking the camera, or if the request for the AA pay to invoke the camera meets the invoking condition for invoking the camera, the privacy statement locating service may indicate the system capability invoking service to provide the AA pay with the API for invoking the camera.

If the request for the AA pay to invoke the camera is initiated in response to the user operation of using the function provided by the AA pay by invoking the camera, or if the request for the AA pay to invoke the camera meets the invoking condition for invoking the camera, the privacy statement locating service may determine that the user is informed that the AApay invokes the camera.

The foregoing process in which the privacy statement locating service may indicate the system capability invoking service to provide the AA pay with the API for invoking the camera may include step S540 and step S550 shown in FIG. 5A.

An execution sequence of step S531 and step S532 is not limited in embodiments of this application. In some embodiments, the privacy statement locating service may first perform step S532. When it is determined that the request for the AA pay to invoke the camera does not meet the invoking condition for invoking the camera, the privacy statement locating service may perform the foregoing step S531. In some other embodiments, the privacy statement locating service may perform only one of step S531 and step S532. For example, when it is determined that the request for the AA pay to invoke the camera is not initiated in response to the user operation of using the function provided by the AA pay by invoking the camera, the privacy statement locating service may perform the foregoing step S533.

In addition to detecting whether there is the user operation of using the function provided by the APP by requesting to invoke the system capability and detecting whether the condition for the APP to invoke the system capability meets the condition permission in the device permission management table to determine whether the user is informed that the APP invokes the system capability, there may further be another method for the privacy statement locating service to determine whether the user is informed that the APP invokes the system capability.

For example, the electronic device 100 stores an APP whitelist. The APP whitelist may include an identifier of an APP and an identifier of one or more system capabilities that can be directly invoked by the APP. When an APP in the APP whitelist invokes a system capability that can be directly invoked by the APP and that is indicated by the APP whitelist, the privacy statement locating service may determine that the user is informed that the APP invokes the system capability. In this case, the privacy statement locating service may directly allow the APP to invoke the system capability, without asking the user whether to agree with the APP to invoke the system capability.

It may be learned from the methods shown in FIG. 5A and FIG. 5B that when it is determined that the AA pay requests to invoke the camera when the user is not informed, the privacy statement locating service may notify the user and ask the user whether to agree before the AA pay invokes the camera. If the user does not agree, the privacy statement locating service may reject the request for the AA pay to currently invoke the camera. In this way, the user may learn whether the APP abuses permission and obtains the user information without permission, and prevent the APP from invoking the system capability before the APP invokes the system capability, thereby avoiding a case in which personal information is leaked. The foregoing method can help the user better manage the device permission of the APP, thereby improving security of the user information, and providing the user with better experience.

In addition, the privacy statement locating service rejects the request for the AA pay to currently invoke the camera, and does not cancel the camera permission of the AA pay. In other words, although the user rejects the request for the AA pay to invoke the camera, the AA pay still has the camera permission. When the user needs to invoke the camera function (for example, the scanning function) when using the AA pay, the privacy statement locating service may allow the AA pay to invoke the camera. In this way, the user does not need to re-perform the user operation of granting the camera permission to the AA pay. The user may further preset the invoking condition for the AA pay to invoke the camera. When the request for the AA pay to invoke the camera meets the invoking condition set by the user, the privacy statement locating service may directly allow the AA pay to invoke the camera without asking the user. This can reduce the interference caused by the privacy statement locating service to the user by frequently asking the user. According to the foregoing method, the user information is protected, a case in which the APP invokes the system capability without permission is avoided, and a function of the APP is used by the user without being affected.

In some embodiments, an invoking status of a specific system capability in the electronic device 100 may be selected by the user to be monitored by the privacy statement locating service.

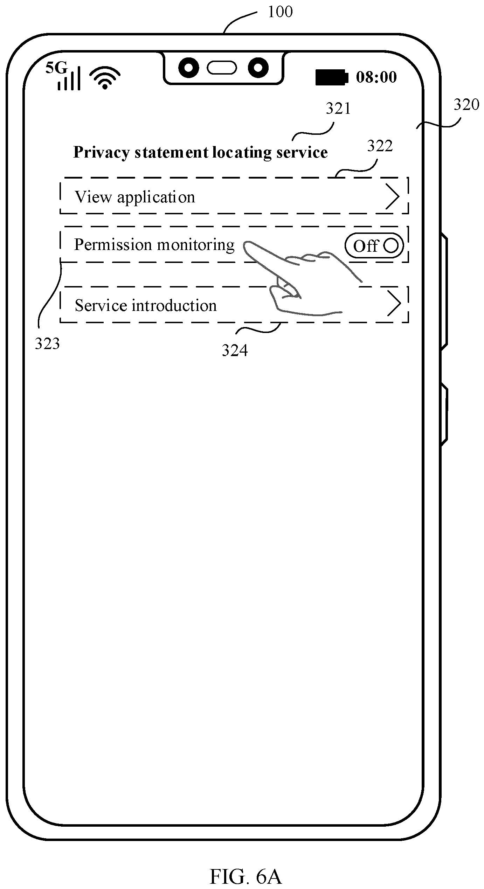

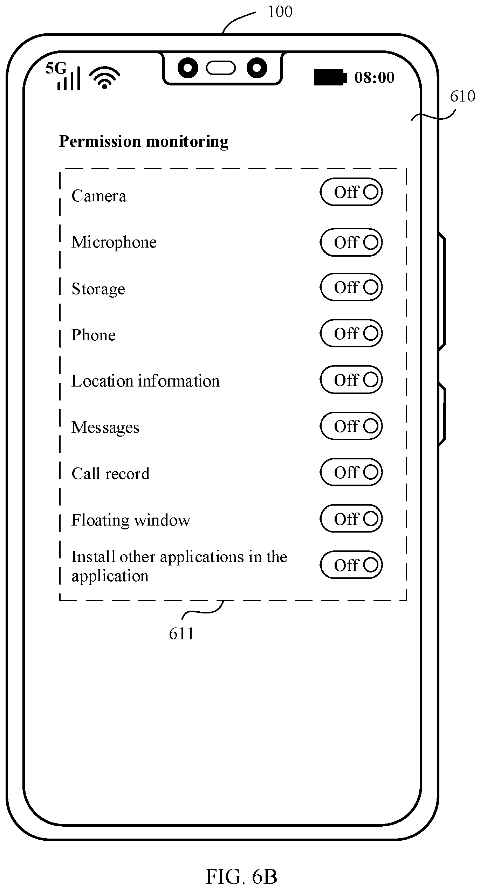

**FIG. 6A** **and** **FIG. 6B** **show an example of a scenario in which an invoking status of a specific system capability is selected by the user to be monitored by the privacy statement locating service.**

As shown in FIG. 6A, an electronic device 100 may display a user interface 320. For the user interface 320, refer to the description of FIG. 3C. In response to a user operation on the permission monitoring option 323, the electronic device 100 may display a user interface 610 shown in FIG. 6B. The user interface 610 may include a permission option display area 611. The permission option display area 611 may display options corresponding to one or more pieces of device permission. An option corresponding to device permission may be used to enable or disable a function of monitoring, by the privacy statement locating service, an invoking status of a system capability corresponding to the device permission.

For example, the privacy statement locating service may monitor a system capability corresponding to floating window permission. In response to a user operation on an option corresponding to the floating window permission, the privacy statement locating service may cancel monitoring of the system capability corresponding to the floating window permission. In this case, if the APP has the floating window permission, the system capability invoking service may provide the APP with a corresponding API when receiving that the APP invokes the system capability corresponding to the floating window permission. The APP may display a floating window in the user interface.

An implementation method for selecting an invoking status of a specific system capability to be monitored by the privacy statement locating service is not limited in embodiments of this application. The user interfaces shown in FIG. 6A and FIG. 6B are merely examples for description, and should not constitute a limitation on this application.

There is a low probability that some system capabilities (for example, a capability of displaying a floating window) in the electronic device 100 are invoked by the APP, causing user information leakage. The privacy statement locating service may not need to monitor the invoking statuses of all system capabilities. It may be understood that if the privacy statement locating service monitors the invoking statuses of all the system capabilities, the privacy statement locating service may frequently prompt the user about statuses in which various APPs invoke the system capabilities, and ask the user whether to agree. The user may indicate the privacy statement locating service to cancel monitoring of invoking statuses of some system capabilities, and keep monitoring an invoking status of a system capability related to highly private information. The foregoing method can help the user manage the APP that invokes the system capability, and improve user experience.

In some embodiments, the electronic device 100 may establish a communication connection to another electronic device. The communication connection may include a wired communication connection and a wireless communication connection (for example, a Bluetooth communication connection or a Wi-Fi communication connection). A manner of the communication connection is not limited in embodiments of this application. When the APP in the another electronic device invokes the system capability when the user is not informed, the electronic device 100 may prompt the user, and ask the user whether to allow the APP in the another electronic device to invoke the system capability.

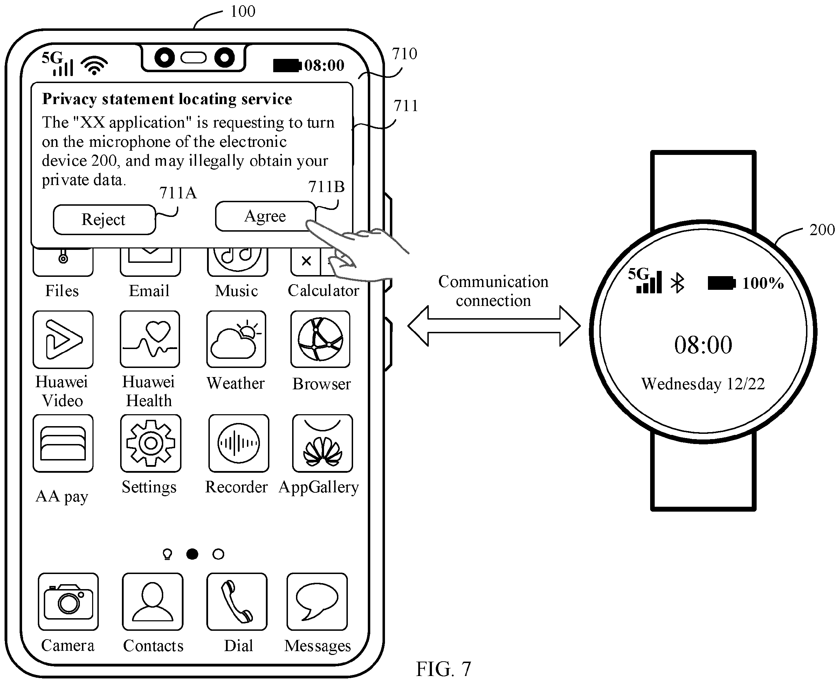

For example, as shown in FIG. 7, the electronic device 100 establishes a communication connection to the electronic device 200. The electronic device 200 may include the foregoing privacy statement locating service. When it is detected that an XX application in the electronic device 200 requests to invoke a microphone (that is, invoke a sound collection capability of the microphone), the privacy statement locating service may determine whether the user is informed that the XX application requests to invoke the microphone. If it is determined that the user is not informed that the XX application requests to invoke the microphone, the privacy statement locating service in the electronic device 200 may send a message to the electronic device 100. The privacy statement locating service in the electronic device 100 may obtain the message.

When receiving the message, the electronic device 100 may display a user interface 710 shown in FIG. 7. The user interface 710 may include a notification message 711. The notification message 711 may be used to prompt the user that the XX application in the electronic device 200 requests to invoke the microphone, and ask the user whether to agree.

The notification message 711 may include message content, a reject control 711A, and an agree control 711B. The message content may be specifically as follows: The "XX application" is requesting to turn on the microphone of the electronic device 200, and may illegally obtain your private data. The message content is not limited in embodiments of this application.

The reject control 711A may be used to reject the request for the XX application to invoke the microphone of the electronic device 200. In response to a user operation performed on the reject control 711A, the privacy statement locating service in the electronic device 100 may send a request rejection instruction to the electronic device 200. The privacy statement locating service in the electronic device 200 may obtain the request rejection instruction, and refuse to allow the XX application to invoke the microphone.

The agree control 711B may be used to agree to the request for the XX application to invoke the microphone of the electronic device 200. In response to a user operation performed on the agree control 711B, the privacy statement locating service in the electronic device 100 may send a request agree instruction to the electronic device 200. The privacy statement locating service in the electronic device 200 may obtain the request notification instruction, and allow the XX application to invoke the microphone.

In some embodiments, when the privacy statement locating service in the electronic device 200 detects that the XX application invokes the microphone when the user is not informed, it may be determined whether the user is using the electronic device 200. If it is determined that the user is using the electronic device 200, the privacy statement locating service in the electronic device 200 may display a notification message on a screen of the electronic device 200, to prompt the user of a behavior of the XX application. The privacy statement locating service in the electronic device 200 may not need to send a message to the electronic device 100.

If it is determined that the user is not using the electronic device 200, the electronic device 200 and the electronic device 100 may communicate to jointly determine an electronic device that is being used by the user. For example, if it is determined that the user is using the electronic device 100, the privacy statement locating service in the electronic device 200 may send a message to the electronic device 100, to indicate the XX application to request to invoke the microphone of the electronic device 200. After obtaining the message, the privacy statement locating service in the electronic device 100 may display the notification message 711 shown in FIG. 7.

A method for the privacy statement locating service in the electronic device 100 to notify the user that an APP in the electronic device 200 requests to invoke the microphone, and a method for providing the reject control 711A and the agree control 711B are not limited in embodiments of this application. For example, when it is determined that the XX application requests to invoke the microphone of the electronic device 200 when the user is not informed, the electronic device 100 may display a microphone invoking identifier in the status bar. The microphone invoking identifier may indicate that an APP in the electronic device 200 requests to invoke the microphone. In response to the user operation of swiping down from the location of the status bar, the electronic device 100 may display the control interface. The control interface may prompt the user that the XX application requests to invoke the microphone of the electronic device 200, and may include the reject control 711A and the agree control 711B.

In a possible example, the reject control 711Ais used to disable microphone permission of the XX application. The permission may be currently disabled, or may be disabled for a period of time, or the permission for the XX application to use the microphone may be permanently disabled.

In a possible example, the control may always exist in the control interface, or may be dynamically displayed. That is, the corresponding control is displayed only after the XX application invokes the microphone.

In a possible example, the reject control 711A and the agree control 711B may be hidden, and are displayed on the screen when the user drags the control interface, or are displayed in front of a control component after the XX application invokes the microphone instead of being hidden.

In a possible example, the reject control 711A and the agree control 711B may be one control. The control is clicked to determine whether to turn on or off.

In a possible example, the XX application runs in the background. If the microphone permission is invoked, a prompt indicating that the microphone is being used is displayed on the home screen (the display interface excluding the XX application). In this case, if the user swipes down to invoke the control interface, the reject control 711A in the control interface is for the microphone permission of the XX application, but not for microphone use permission of an application displayed on the home screen. In a possible example, if the user invokes the XX application in the background to the foreground for use, the electronic device 100 may display prompt information on the screen, to restore the microphone permission of the XX application.

In a possible example, the reject control 711A may disable all microphone permission of the electronic device 200. That is, none of applications of the electronic device 200 can use the microphone.

Optionally, the privacy statement locating service in the electronic device 200 may alternatively first intercept the request for the XX application to invoke the microphone. The privacy statement locating service in the electronic device 100 may provide the agree control 711B, but does not provide the reject control 711A. Alternatively, the privacy statement locating service in the electronic device 200 may first allow the request for the XX application to invoke the microphone. The privacy statement locating service in the electronic device 100 may provide the reject control 711A, but does not provide the agree control 711B. For an implementation in which the electronic device 100 provides only one of the agree control 711B and the reject control 711A, refer to the embodiments shown in FIG. 3G to FIG. 3J.

The foregoing embodiment can help the user quickly view the notification message for indicating that the XX application requests to invoke the microphone of the electronic device 200, so as to determine whether to agree with the XX application to invoke the microphone.

Device types of the electronic device 100 and the electronic device 200 are not limited in embodiments of this application. The electronic device 100 shown in FIG. 7 is a mobile phone, and the electronic device 200 is a smartwatch. This is merely an example for description, and should not constitute a limitation on this application.

This application provides an APP management method. In the method, the electronic device 100 may obtain a privacy statement of each APP in the electronic device 100, and provide an interface for viewing the privacy statement of each APP. The interface can simplify the user operation of viewing the privacy statement of the APP, and help the user quickly view the privacy statement of the APP. For example, to view privacy statements of a plurality of APPs, the user may view the privacy statement without searching each APP for a location of the privacy statement and performing a plurality of clicking operations.

When obtaining the privacy statement of the APP, the electronic device 100 may further analyze the privacy statement of the APP, to determine content such as which user information is obtained by the APP, which system capabilities of the electronic device 100 are invoked, and which functions can be provided for the user. The electronic device 100 may provide a keyword. The keyword may include one or more of the following: a name of user information, a name of a system capability, and a name of an APP function. The keyword may be used to trigger the electronic device 100 to find a location of the keyword in the privacy statement. This can help the user quickly view, based on the keyword, content related to the keyword in the privacy statement.

The electronic device 100 may further provide, based on a system capability invoked by the APP and a function provided by the APP, a control for granting or canceling device permission of the APP and a control for enabling or disabling the function of the APP. This can help the user manage the device permission of the APP and the function provided by the APP, and improve user experience.

In some embodiments, the foregoing APP management method for helping the user quickly search for the privacy statement of the APP and understand the terms of the privacy statement, and helping the user manage the device permission and the function of the APP may be completed by the privacy statement locating service in the electronic device 100. In subsequent embodiments of this application, an example in which the privacy statement locating service implements the foregoing APP management method is used for description.

**The following describes a scenario of viewing a privacy statement of an APP according to an embodiment of this application.**

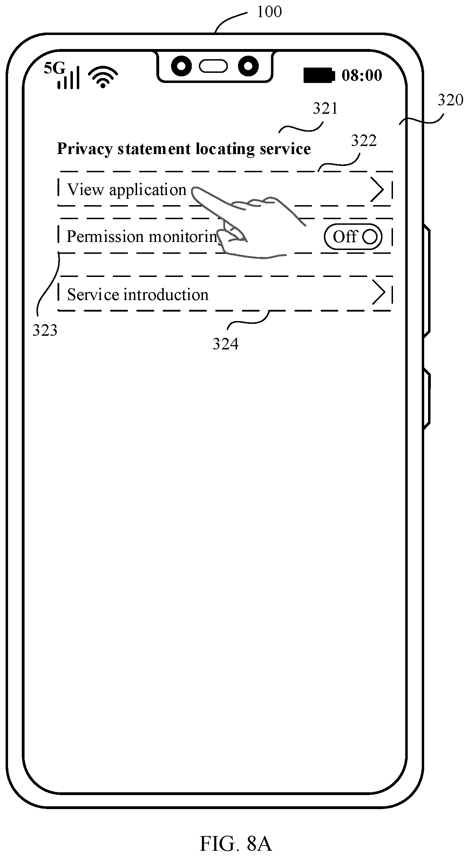

FIG. 8A to FIG. 8E are example diagrams of scenarios of viewing a privacy statement of an APP.

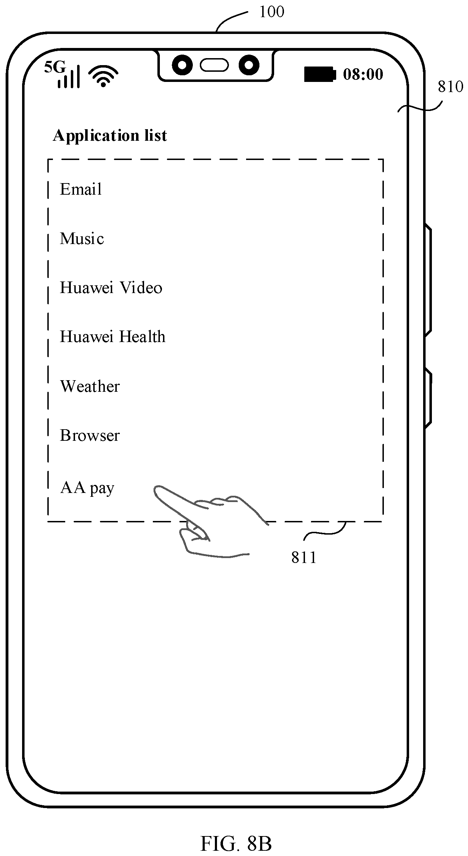

As shown in FIG. 8A, the electronic device 100 may display the user interface 320. For the user interface 320, refer to the description of FIG. 3C. The user interface 320 may include the view application option 322. In response to a user operation performed on the view application option 322, the electronic device 100 may display a user interface 810 shown in FIG. 8B.

As shown in FIG. 8B, the user interface 810 may include an APP display area 811. The APP display area 811 may display options of one or more APPs in the electronic device 100, for example, an option of an email APP, an option of a music APP, an option of a Huawei Video APP, and an option of the AA pay. An option of an APP may be used to view a privacy statement of the APP.

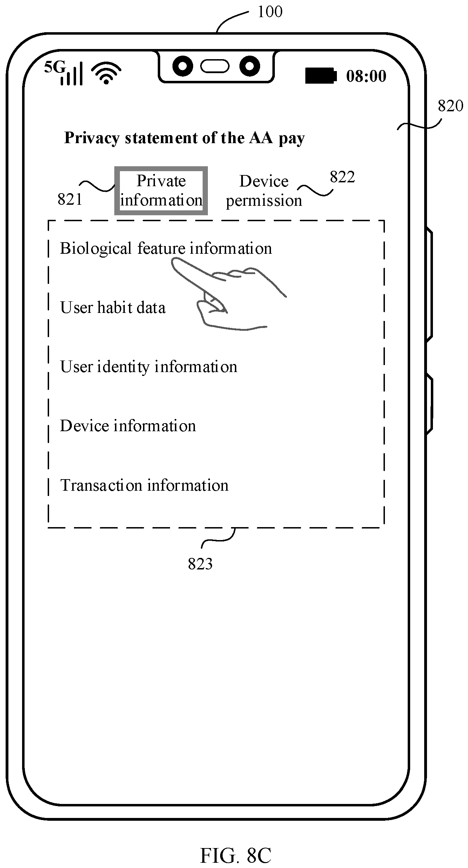

For example, in response to a user operation performed on the option of the AA pay, the electronic device 100 may display a user interface 820 shown in FIG. 8C. The user interface 820 may include a privacy information option 821, a device permission option 822, and an information field display area 823.

The privacy information option 821 may be used to trigger the electronic device 100 to display options corresponding to different types of information related to the privacy statement of the AA pay. This can help the user view description content about expected information in the privacy statement of the AA pay. The user may not need to spend effort in searching the lengthy privacy statement for expected content.

The device permission option 822 may be used to trigger the electronic device 100 to display a status in which the AA pay obtains the device permission. This can help the user quickly grant or cancel the device permission of the AA pay.

The information field display area 823 may include options corresponding to one or more types of information related to the privacy statement of the AApay, for example, a biological feature information option, a user habit data option, a user identity information option, a device information option, and a transaction information option.

The biological feature information option may be used to trigger the electronic device 100 to display content about biological feature information in the privacy statement of the AApay. The biological feature information may include face information, fingerprint information, voiceprint information, and the like.

The user habit data option may be used to trigger the electronic device 100 to display content about user habit data in the privacy statement of the AA pay. The user habit data may include an Internet access period, a browsing history, and the like.

The user identity information option may be used to trigger the electronic device 100 to display content about user identity information in the privacy statement of the AA pay. The user identity information may include a name of the user, an ID card number of the user, and the like.

The device information option may be used to trigger the electronic device 100 to display content about device information in the privacy statement of the AA pay. The device information may include a device identifier (for example, an international mobile equipment identity), setting information of an operating system, hardware information of a device, network information of the device, and the like.

The transaction information may be used to trigger the electronic device 100 to display content about transaction information in the privacy statement of the AA pay. The transaction information may include an expenditure record, an expenditure account, an income record, an income account, and the like.

Keywords of the biological feature information, the user habit data, the user identity information, the device information, and the transaction information are described above. These keywords can help the user select the part that the user wants to view in the privacy statement of the AA pay.

The information field display area 823 may further include options of more or fewer types of information, and is not limited to the foregoing enumerated information types.

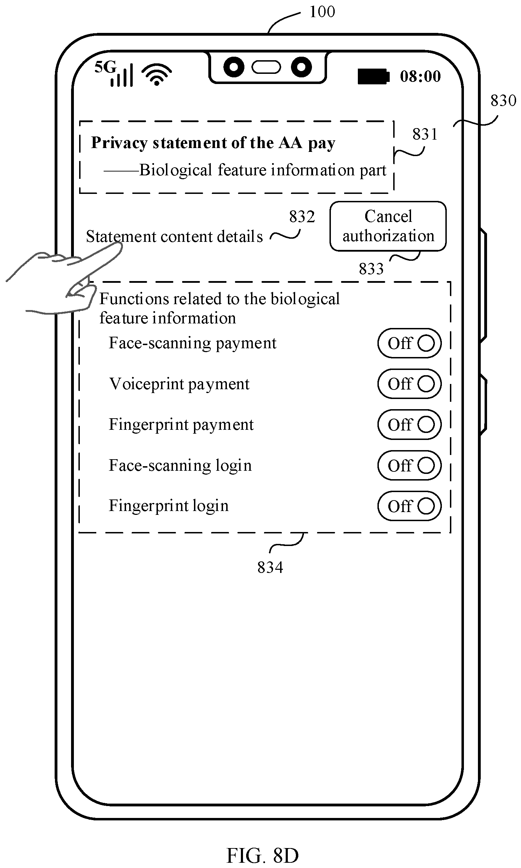

For example, in response to a user operation performed on the biological feature information option shown in FIG. 8C, the electronic device 100 may display a user interface 830 shown in FIG. 8D. The user interface 830 may be used by the user to view a function that can be provided by the AA pay by using the biological feature information.

As shown in FIG. 8D, the user interface 830 may include a title bar 831, a details control 832, a cancel control 833, and a function display area 834.

The title bar 831 may indicate that a currently displayed user interface is a user interface for viewing related content about the biological feature information in the privacy statement of the AApay. A representation form of the title bar 831 may include text information "Privacy statement of the AA pay-Biometric feature information part". Content of the title bar 831 is not limited in embodiments of this application.

The details control 832 may be used to trigger the electronic device 100 to display the part related to the biological feature information in the privacy statement of the AA pay.

The cancel control 833 may be used to disable all functions that can be provided by the AApay by using the biological feature information.

The function display area 834 may display an option corresponding to the function that can be provided by the AA pay by using the biological feature information, for example, a face-scanning payment option, a voiceprint payment option, a fingerprint payment option, a face-scanning login option, and a fingerprint login option. An option corresponding to a function may include a switch control. The switch control may be used to enable or disable the function.

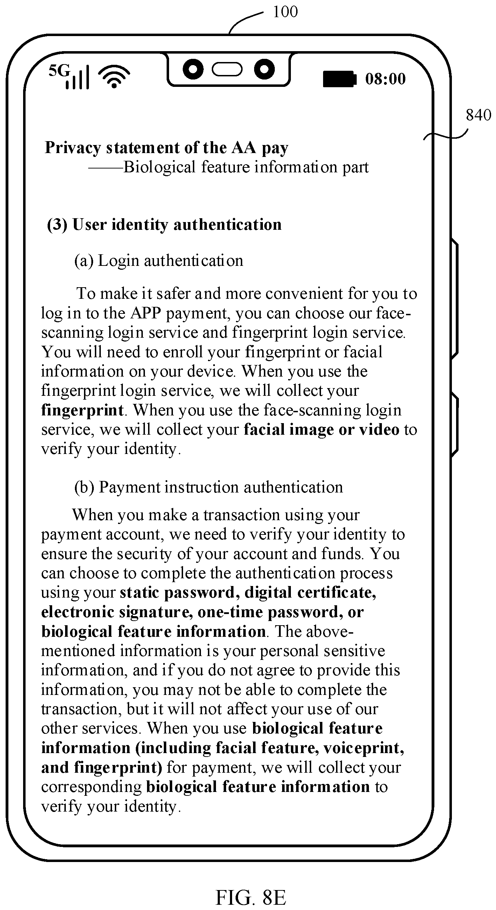

For example, in response to a user operation performed on the details control 832, the electronic device 100 may display a user interface 840 shown in FIG. 8E. The user interface 840 may display a part related to the biological feature information in the privacy statement of the AA pay. It may be learned from the user interface 840 that the AA pay may provide the user with a function (for example, face-scanning login or fingerprint login) of performing login authentication by using the biological feature information (such as fingerprint and facial information). The AA pay may further provide the user with a function (for example, face-scanning payment, voiceprint payment, or fingerprint payment) of verifying a payment instruction by using the biological feature information. Optionally, the user interface 840 may display complete content of the privacy statement of the AA pay. The part related to the biological feature information in the privacy statement of the AA pay may be highlighted. The foregoing highlighting method may be, for example, bold font, and highlighted background color of the text. This is not limited in embodiments of this application.

Content of the privacy statement shown in FIG. 8E is merely an example for description, and should not constitute a limitation on this application.

It may be learned from the embodiments shown in FIG. 8A to FIG. 8E that the user may quickly view the privacy statement of the APP by using the privacy statement locating service in the electronic device 100. The user does not need to search each APP for a control for viewing the privacy statement and invoke the privacy statement of the APP through complex operations. In addition, the privacy statement locating service may analyze the privacy statement of the AA pay, to determine which types of information to be obtained in the statement of the AA pay. This can help the user better understand the privacy statement of the AA pay. The user may not need to search the lengthy privacy statement of the APP paragraph by paragraph for the content that the user wants to view.

**The following describes a scenario of disabling a function provided by an APP according to an embodiment of this application.**

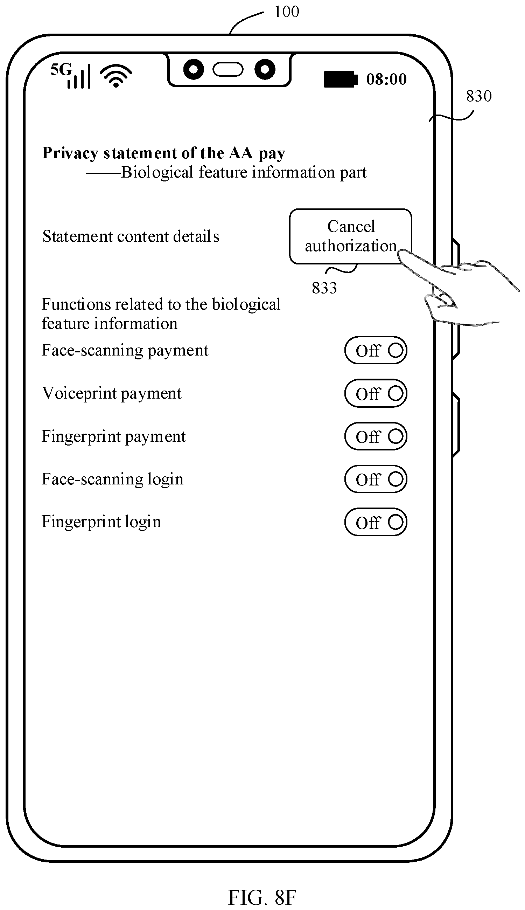

FIG. 8F to FIG. 8L are example diagrams of scenarios of disabling a function provided by an APP.

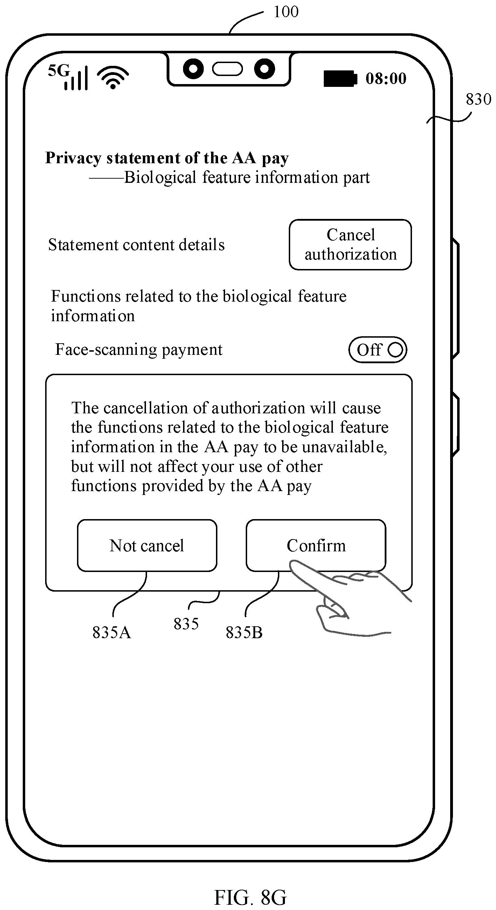

As shown in FIG. 8F, in response to a user operation performed on the cancel control 833, the electronic device 100 may display, in the user interface 830, a prompt box 835 shown in FIG. 8G. The prompt box 835 may include prompt content, a not cancel control 835A, and a confirm control 835B.

The prompt content in the prompt box 835 may be used to prompt the user of impact generated when all functions that can be provided by the AA pay by using the biological feature information are disabled. For example, if all the functions that can be provided by the AA pay by using the biological feature information are disabled, these disabled functions cannot be used. However, other functions that are provided by the AA pay and are not related to the biological feature information can still be used.

The not cancel control 83 5A may be used to give up disabling all the functions that can be provided by the AA pay by using the biological feature information. In response to a user operation on the not cancel control 835A, the electronic device 100 may display the user interface 830 shown in FIG. 8F.

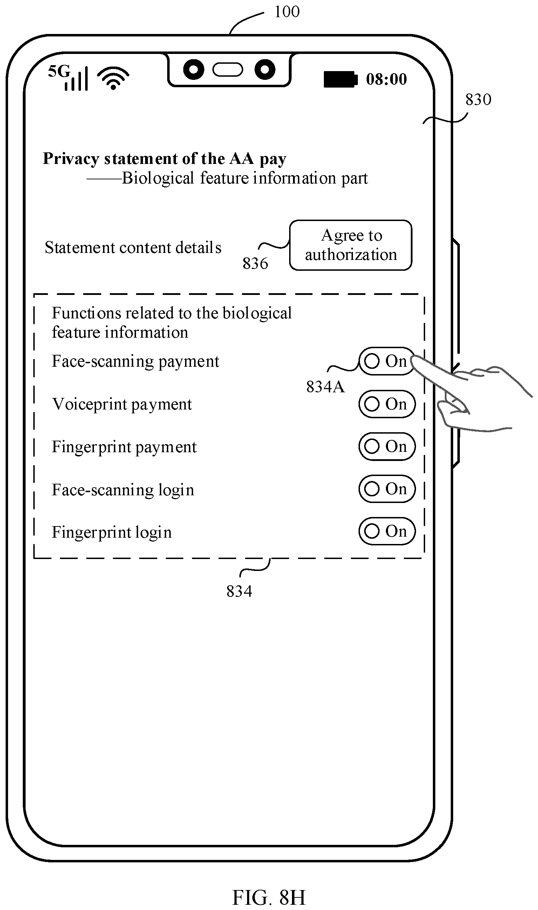

The confirm control 835B may be used to trigger the electronic device 100 to disable all the functions that can be provided by the AA pay by using the biological feature information. In response to a user operation on the confirm control 835B, the electronic device 100 may display the user interface 830 shown in FIG. 8H.

As shown in FIG. 8H, in response to the user operation on the confirm control 835B, the electronic device 100 may change the cancel control 833 to an agree control 836, and change switch controls included in options corresponding to all the functions in the function display area 834 from an on state shown in FIG. 8F to an off state shown in FIG. 8H. That is, the electronic device 100 disables all the functions that can be provided by the AA pay by using the biological feature information.

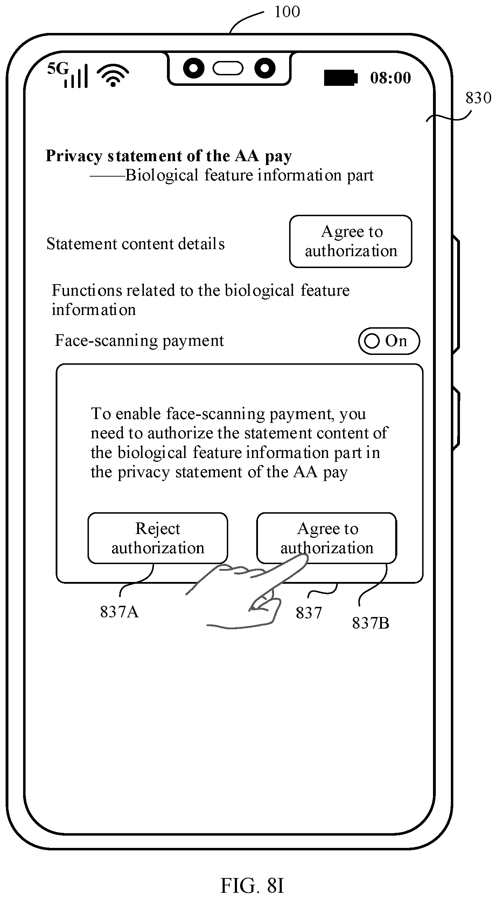

A switch control 834A included in the face-scanning payment option in the function display area 834 is in an off state shown in FIG. 8H. In response to a user operation on the switch control 834A, the electronic device 100 may display, in the user interface 830, a prompt box 837 shown in FIG. 8I. The prompt box 837 may include prompt content, a reject authorization control 837A, and an agree to authorization control 837B.

The prompt content in the prompt box 837 may be used to prompt the user to enable any function that can be provided by the AA pay by using only the biological feature information, and statement content of the biological feature information part in the privacy statement of the AA pay needs to be first authorized.

The reject authorization control 837A may be used by the user to reject authorization of the statement content of the biological feature information part in the privacy statement of the AA pay.

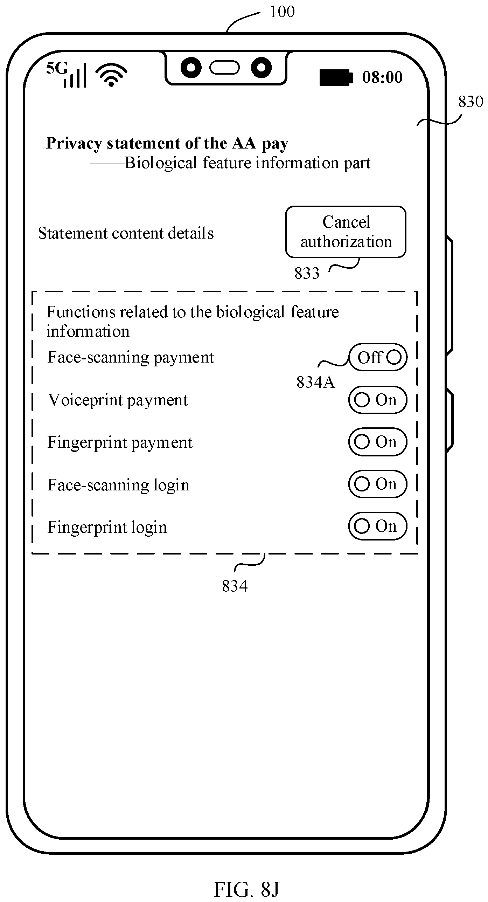

The agree to authorization control 837B may be used by the user to agree to authorization of the statement content of the biological feature information part in the privacy statement of the AA pay. As shown in FIG. 8I, in response to a user operation on the agree to authorization control 837B, the electronic device 100 may display the user interface 830 shown in FIG. 8J.

As shown in FIG. 8J, in response to the user operation on the agree to authorization control 837B, the electronic device 100 may change the agree control 836 to the cancel control 833, and change the switch control 834A included in the face-scanning payment option in the function display area 834 from the off state shown in FIG. 8H to an on state shown in FIG. 8J. That is, the electronic device 100 enables the face-scanning payment function in the AApay.

In a possible implementation, an option corresponding to a function in the function display area 834 shown in FIG. 8J may be further used to trigger the electronic device 100 to jump from a currently displayed user interface to a user interface for controlling to turn on or off the function in the AA pay.

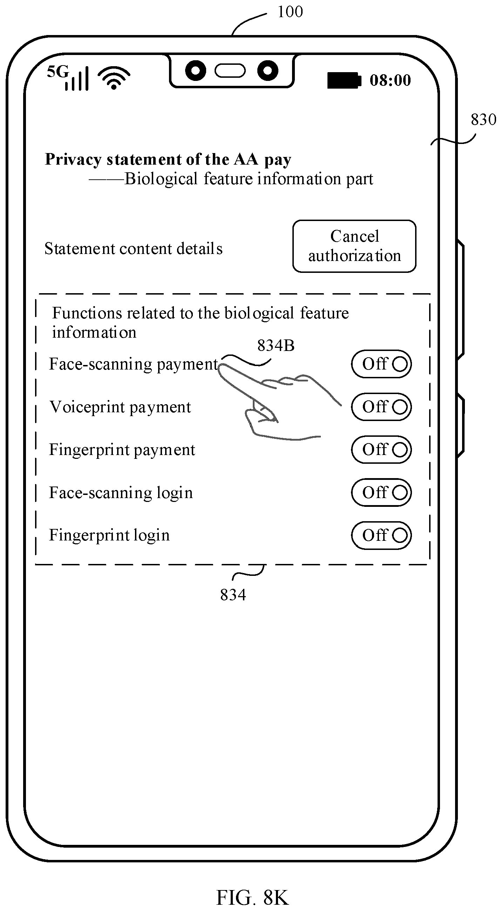

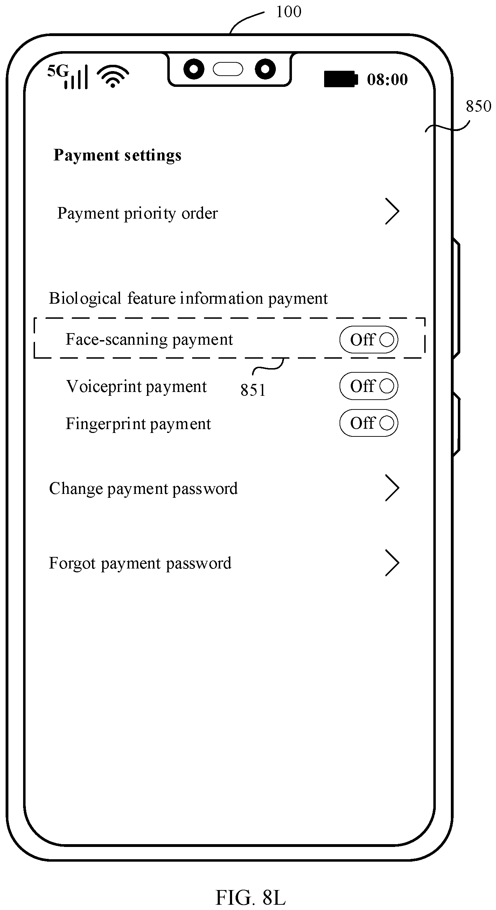

For example, the electronic device 100 may display the user interface 830 shown in FIG. 8K. For the user interface 830, refer to the description of the foregoing embodiment. In response to a user operation on an option identifier 834B included in the face-scanning payment option in the function display area 834, the electronic device 100 may display a user interface 850 shown in FIG. 8L. The user interface 850 may be a user interface of the AA pay.

As shown in FIG. 8L, the user interface 850 may include a face-scanning payment option 851. The face-scanning payment option 851 may be used to enable or disable the face-scanning payment function in the AA pay.

It may be learned from the foregoing embodiment that the privacy statement locating service may provide the control for enabling or disabling the function in the APP. The user may directly disable, by using the privacy statement locating service, the function that needs to obtain the user information in the APP. The privacy statement locating service may further provide the control for jumping to the user interface of the APP. The user may quickly find, by using the privacy statement locating service, the control for enabling or disabling the one or more functions in the APP, so as to enable or disable the function in the APP. The foregoing method can help the user quickly disable the function in the APP when the user views the privacy statement of the APP and determines that enabling of the one or more functions of the APP may cause user information leakage. In this way, the user may not need to spend time to search the APP for a method for enabling or disabling the function in the APP. The foregoing embodiments can help the user better manage the functions in the APP, protect security of the user information, and improve user experience.

**The following describes a scenario of viewing a status in which an APP obtains device permission according to an embodiment of this application.**

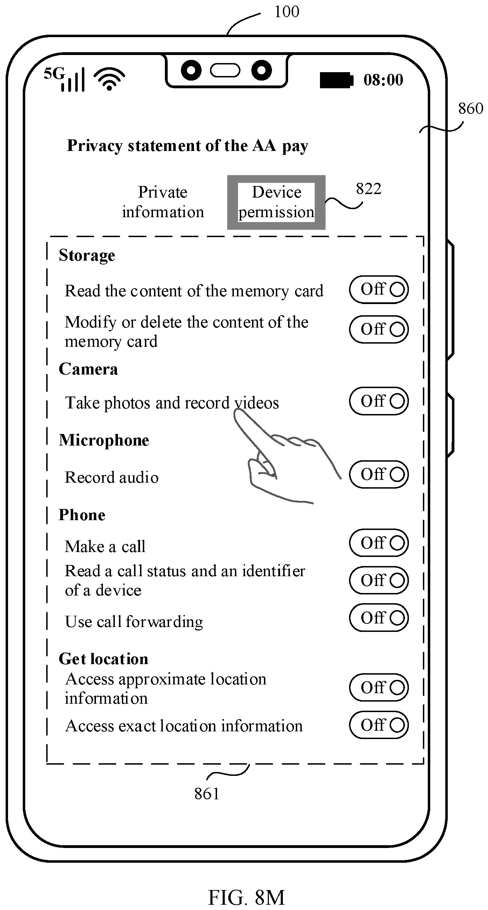

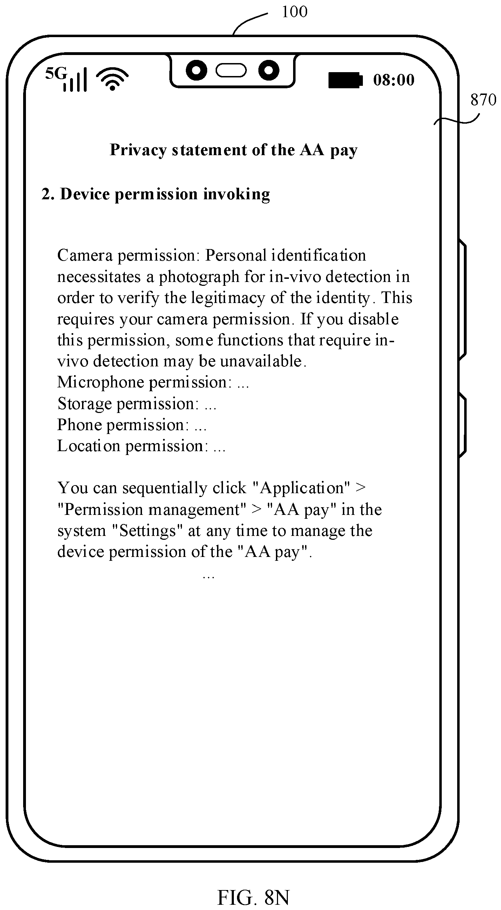

FIG. 8M and FIG. 8N are example diagrams of scenarios of viewing a status in which an APP obtains device permission.

In some embodiments, in response to a user operation performed on the device permission option 822 shown in FIG. 8C, the electronic device 100 may display a user interface 860 shown in FIG. 8M.

As shown in FIG. 8M, the user interface 860 may include the device permission option 822 and a device permission option display area 861. The device permission option 822 is in a selected state. The device permission option display area 861 may include options corresponding to one or more pieces of device permission. An option corresponding to one piece of device permission may be used to grant or cancel the device permission of the AA pay. For the device permission option display area 861, refer to the foregoing description of FIG. 3D.

An option corresponding to one piece of device permission may be further used to view content related to the device permission in the privacy statement of the AA pay. For example, in response to a user operation performed on the option corresponding to the camera permission shown in FIG. 8M, the electronic device 100 may display a user interface 870 shown in FIG. 8N. The user interface 870 may display a part related to the camera permission in the privacy statement of the AA pay.

In a possible implementation, an option corresponding to one piece of device permission may be further used to trigger the electronic device 100 to display an option corresponding to a function that can be provided by the AA pay by using the device permission. An option corresponding to a function may be used to enable or disable the function in the AA pay. For example, in response to the user operation performed on the option corresponding to the camera permission, the electronic device 100 may display a user interface 870 shown in FIG. 8N. In addition to the privacy statement of the AA pay, the user interface 870 may further display an option corresponding to a function that can be provided by the AA pay by using the camera permission, for example, a face-scanning payment option and a face-scanning login option. The face-scanning payment option may be used to enable or disable the face-scanning payment function in the AA pay. The face-scanning login option may be used to enable or disable the face-scanning login option in the AA pay.

It may be learned from the embodiments shown in FIG. 8M and FIG. 8N that the user may view, by using the option corresponding to the device permission shown in FIG. 8M, a part related to the device permission in the privacy statement of the AA pay. In this way, the user may not need to search the entire lengthy privacy statement for content that needs to be viewed, but quickly view, by using the option corresponding to the device permission, user information obtained by and functions provided by the AA pay by using the device permission. This can help the user quickly find the privacy statement of the AA pay and help the user better understand the privacy statement.

**With reference to the scenarios shown in** **FIG. 8A to FIG. 8N****, the following specifically describes an APP management method according to an embodiment of this application.**

Refer to FIG. 9A-1 and FIG. 9A-2. FIG. 9A-1 and FIG. 9A-2 show an example of a flowchart of an APP management method. As shown in FIG. 9A-1 and FIG. 9A-2, the method may include steps S911 to S918.

S911: The AA pay may send a message 1 to the privacy statement locating service, where the message 1 includes the privacy statement of the AA pay and a location of the privacy statement of the AA pay in the AA pay.

In a possible implementation, the AA pay may actively provide the privacy statement locating service with information related to the privacy statement. The information related to the privacy statement may include the privacy statement of the AA pay and the location of the privacy statement of the AA pay in the AA pay. The location of the privacy statement of the AA pay in the AA pay may be represented by the path of the user operation of viewing the privacy statement in the AA pay. For example, the location of the privacy statement shown in FIG. 1C to FIG. 1G is: "My control 233" > "Privacy setting option 242A" > "Privacy statement option 252".

When the AA pay is installed in the electronic device 100, the AA pay may send the message 1 to the privacy statement locating service. Optionally, when the privacy statement of the AA pay is updated, the AA pay may send the message 1 to the privacy statement locating service. Time during which the AA pay sends the message 1 to the privacy statement locating service is not limited in embodiments of this application. In addition to the privacy statement of the AApay and the location of the privacy statement of the AA pay in the AA pay, the message 1 may further include other content.

S912: The privacy statement locating service may obtain a privacy statement information classification table, and determine, according to the privacy statement information classification table, an information field included in the privacy statement of the AA pay, a function that can be provided by the AA pay by using information corresponding to one information field, and device permission required by the AA pay for using information corresponding to one information field.

The privacy statement information classification table may be used to summarize information that may be included in privacy statements of various APPs and keywords for describing various types of information in the privacy statements. For the privacy statement information classification table, refer to Table 2 below.

**Table 2**

| Information field | Description keyword 1 | Description keyword 2 | ... |
|---|---|---|---|
| Biological feature information | Face | Fingerprint | ... |
| User habit data | Internet access period | Browsing history | ... |
| User identity information | Name | ID card | ... |
| Device information | Device model | IP address | ... |
| ... | ... | ... | ... |

In the foregoing Table 2, the information field may indicate a classification of information that the APP needs to obtain and that is indicated in the privacy statement. For example, the information that the APP needs to obtain may include one or more of the following types: biological feature information, user habit data, user identity information, and device information. Description names of a same type of information in privacy statements of different APPs may be different. The privacy statement locating service may determine, based on the description keyword corresponding to an information field in the privacy statement information classification table, the information that the APP needs to obtain.

For example, the description keyword corresponding to the biological feature information may include a face, a fingerprint, a facial feature, a voiceprint, and the like. The description keyword corresponding to the user habit data may include an Internet access period, a browsing history, concerned information, comment information, and the like. The description keyword corresponding to the user identity information may include a name, an ID card, an ID card number, a gender, and the like. The description keyword corresponding to the device information may include a device model, an IP address, and the like. A method for classifying the information that the APP needs to obtain and the description keywords for describing various types of information are not limited in embodiments of this application. The privacy statement information classification table shown in Table 2 is merely an example for description of this application, and should not constitute a limitation on this application.

In a possible implementation, the electronic device 100 may store the privacy statement information classification table. The privacy statement information locating service may obtain the privacy statement information classification table from a storage module of the electronic device 100. In another possible implementation, the privacy statement locating service may obtain the privacy statement information classification table from a server (for example, a cloud server).

For example, when the privacy statement of the AA pay is obtained, the privacy statement locating service determines, by using the description keywords in the privacy statement information classification table, which information fields are included in the privacy statement of the AA pay. For example, the privacy statement locating service determines that the privacy statement of the AA pay includes biological feature information, user habit data, user identity information, and device information. The privacy statement locating service may determine a location of information corresponding to each information field in the privacy statement.

Further, the privacy statement locating service may analyze the privacy statement of the AA pay, and determine a function that can be provided by the AA pay by using information corresponding to an information field, and device permission required for using the information corresponding to the information field. The foregoing analysis method may be, for example, a text recognition method or a semantic recognition method. This is not limited in embodiments of this application. For example, the privacy statement locating service may determine, by analyzing the privacy statement of the AA pay, that the function that can be provided by the AA pay by using the biological feature information includes a face-scanning payment function, a voiceprint payment function, a fingerprint payment function, a face-scanning login function, and a fingerprint login function. Device permission required by the AA pay for using the biological feature information includes camera permission, microphone permission, and fingerprint sensor permission.

S913: The privacy statement locating service may store privacy statement statistical information of the AA pay, where the privacy statement statistical information includes: a location of the privacy statement of the AA pay, an included information field, a function that can be provided by using information corresponding to one information field, and device permission required for using information corresponding to one information field.

In a possible implementation, the electronic device 100 may store a privacy statement statistical table. The privacy statement statistical table may be used to store privacy statement statistical information of one or more APPs in the electronic device 100. When a privacy statement of an APP is obtained, the privacy statement locating service may determine privacy statement statistical information of the APP according to the privacy statement information classification table, and store the privacy statement statistical information of the APP in the privacy statement statistical table.

For example, it may be learned from the foregoing step S912 that the privacy statement locating service may determine, according to the privacy statement information classification table, an information field included in the privacy statement of the AA pay, a function that can be provided by using information corresponding to one information field, and device permission required for using information corresponding to one information field. In addition, the privacy statement locating service may further obtain the location of the privacy statement from the message 1 from the AA pay.

For the privacy statement statistical information of the AA pay in the privacy statement statistical table, refer to Table 3 below.

**Table 3**

| Name of an APP | Location of the privacy statement | Information field | Function | Device permission |
|---|---|---|---|---|
| AA pay | "AA pay" > "My" > "Privacy settings" > " Privacy statement of the AA pay" | Biological feature information | Face-scanning payment, face-scanning login, ... | Camera permission, microphone permission, ... |
| AApay | "AA pay" > "My" > "Privacy settings" > " Privacy statement of the AA pay" | User habit data | Personalized recommendation | Storage permission, ... |
| AApay | "AA pay" > "My" > "Privacy settings" > " Privacy statement of the AA pay" | User identity information | Account registration, login, payment, ... | Storage permission, ... |
| AApay | "AA pay" > "My" > "Privacy settings" > " Privacy statement of the AA pay" | Device information | Security management, transportation card, ... | Storage permission, ... |
| ... | ... | ... | ... | ... |

It may be learned from Table 3 that the privacy statement locating service may search the privacy statement statistical table for the privacy statement statistical information of the AA pay, including the location of the privacy statement, the included information field, the function that can be provided by using the information corresponding to one information field, and the device permission required for using the information corresponding to one information field. In this way, the privacy statement locating service may obtain the privacy statement statistical information of the AA pay through analysis. When the privacy statement statistical information of the AA pay is required again, the privacy statement locating service may search the privacy statement statistical table without analyzing the privacy statement again. This can improve APP management efficiency, and save computing resources of the electronic device 100.

In some embodiments, the privacy statement statistical table already stores the privacy statement statistical information of the AA pay. After the privacy statement is updated, the AA pay sends an updated privacy statement to the privacy statement locating service. The privacy statement locating service may analyze the updated privacy statement, and update the privacy statement statistical information of the AA pay in the privacy statement statistical table based on privacy statement statistical information obtained through analysis.

For example, compared with the updated privacy statement, a new information field is added to the updated privacy statement of the AA pay. The privacy statement locating service may add, to the privacy statement statistical table, the new information field, a function that can be provided by the AA pay by using the foregoing information field, and device permission required by the AA pay for using the foregoing information field.

For another example, compared with the updated privacy statement, an existing information field is deleted from the updated privacy statement of the AA pay. The privacy statement locating service may delete content corresponding to the foregoing existing information field from the privacy statement statistical table.

For another example, compared with the updated privacy statement, the function that can be provided by the AA pay by using the existing information field and the device permission required by the AA pay for using the existing information field are changed in the updated privacy statement of the AA pay. The privacy statement locating service may correspondingly modify content corresponding to the foregoing existing information field in the privacy statement statistical table.

The privacy statement statistical table shown in Table 3 is merely an example for description of this application, and should not constitute a limitation on this application.

S914: The privacy statement locating service receives a user operation 2, where the user operation 2 is used to view an information field 1 included in the privacy statement of the AA pay.

The user may use the privacy statement locating service to view the privacy statement of the AA pay. For example, the information field 1 is the biological feature information. The user operation 2 may include the user operation performed on the option of the AA pay shown in FIG. 8B and the user operation performed on the biological feature information option shown in FIG. 8C.

S915: The privacy statement locating service may invoke a display module to display a part related to the information field 1 in the privacy statement of the AA pay, and an enabling status of a function that can be provided by the AA pay by using the information corresponding to the information field 1, where the function that can be provided by the AA pay by using the information corresponding to the information field 1 includes a function 1, and the function 1 is in an enabled state.

For example, in response to the user operation performed on the option of the AA pay shown in FIG. 8B in the user operation 2, the privacy statement locating service may search the privacy statement statistical table for an information field included in the privacy statement of the AApay. Based on the information field included in the privacy statement of the AApay, the privacy statement locating service may display, in the information field display area 823 shown in FIG. 8C, options corresponding to one or more types of information related to the privacy statement of the AA pay.

In response to the user operation performed on the biological feature information option shown in FIG. 8C in the user operation 2, the privacy statement locating service may search the privacy statement statistical table with a function corresponding to the information field 1 included in the privacy statement of the AA pay. The privacy statement locating service may determine the enabling status of the function that can be provided by the AA pay by using the information corresponding to the information field 1, and invoke the display module to display the user interface 830 shown in FIG. 8D. For the user interface 830, refer to the description of the foregoing embodiment. The function 1 may be, for example, a face-scanning payment function. The part (the content of the user interface 840 shown in FIG. 8E) related to the information field 1 in the privacy statement of the AA pay may be directly displayed in the user interface 830. Optionally, the electronic device 100 may alternatively be triggered by the user operation performed on the details control 832 shown in FIG. 8D, to display the part related to the information field 1 in the privacy statement of the AA pay.

In a possible implementation, the details control 832 shown in FIG. 8D may be used to trigger the electronic device 100 to open the AA pay, and display a user interface including the privacy statement of the AA pay. In other words, the electronic device 100 may jump, based on a user operation performed on a control for viewing the privacy statement of the AA pay in the privacy statement locating service, to the user interface that is in the AA pay and that includes the privacy statement of the AA pay.

S916: The privacy statement locating service receives a user operation 3, where the user operation 3 is used to disable the function 1.

S917: The privacy statement locating service sends, to the AA pay, an instruction for disabling the function 1.

S918: The AA pay disables the function 1.

For example, the function 1 is a face-scanning payment function. The user operation 3 in step S916 may be a user operation performed on the switch control in the face-scanning payment option shown in FIG. 8D. Disabling the face-scanning payment function may not affect a status in which the AA pay obtains corresponding device permission. If the AA pay has the camera permission, when the face-scanning payment function is disabled, the AA pay still has the camera permission.

In a possible implementation, if the AApay does not have the camera permission, when the privacy statement locating service receives a user operation for enabling the face-scanning payment function, a notification message may be displayed to ask whether to grant the camera permission to the AA pay. If a user operation of granting the camera permission to the AA pay is detected, the electronic device 100 may grant the camera permission to the AA pay. Otherwise, the privacy statement locating service may keep the face-scanning payment function in a disabled state.

In other words, the user may enable or disable a function in the AA pay by using the privacy statement locating service without performing an operation in the AA pay.

It may be learned from the method shown in FIG. 9A-1 and FIG. 9A-2 that the privacy statement locating service can help the user quickly find the location of the privacy statement of the APP, so that the user views the privacy statement. The user may not need to spend time and effort in searching the APP for the location of the privacy statement of the APP. In addition, the privacy statement locating service can help the user determine locations of information corresponding to different information fields in the privacy statement of the APP. In this way, when the user wants to view information corresponding to an information field, the privacy statement locating service may quickly locate content displayed in the user interface to a location of the information corresponding to the information field in the privacy statement of the APP. The user may not need to spend time and effort in searching the lengthy privacy statement for expected information. The foregoing method can help the user quickly understand the privacy statement, and determine which information collected by the APP is not expected to be obtained by the APP, so as to disable a corresponding function of the APP or cancel corresponding device permission. This can help the user better manage the APP, and protect the user information from being leaked.

In some embodiments, the APP in the electronic device 100 may not actively provide the privacy statement locating service with information related to the privacy statement. The electronic device 100 may scan the APP to obtain the privacy statement of the APP, so as to provide the user with a service of viewing the privacy statement of the APP and controlling a function in the APP.

**The following describes another APP management method according to an embodiment of this application.**

Refer to FIG. 9B-1 and FIG. 9B-2. FIG. 9B-1 and FIG. 9B-2 show an example of a flowchart of another APP management method. As shown in FIG. 9B-1 and FIG. 9B-2, the method may include steps S931 to S943.

S931: The privacy statement locating service may scan the AA pay, determine the location of the privacy statement of the AA pay in the AA pay, and obtain the privacy statement of the AA pay.

In a possible implementation, the privacy statement locating service may traverse all controls in the AApay, and perform simulated clicking on the controls in the AA pay, to determine which control in the AA pay can be used to view the privacy statement of the AA pay. It may be learned that the privacy statement locating service may determine, by using an exhaustive method, the path of the user operation of viewing the privacy statement of the AA pay, that is, the location of the privacy statement of the AA pay.

When the control for viewing the privacy statement of the AA pay is determined, the privacy statement locating service may perform simulated clicking on the control to obtain the privacy statement of the AA pay. In this embodiment of this application, a method for the privacy statement locating service to determine the location of the privacy statement of the AApay and the privacy statement is not limited.

S932: The privacy statement locating service may obtain a privacy statement information classification table, and determine, according to the privacy statement information classification table, an information field included in the privacy statement of the AA pay, a function that can be provided by the AA pay by using information corresponding to one information field, and device permission required by the AA pay for using information corresponding to one information field.

S933: The privacy statement locating service may store privacy statement statistical information of the AA pay, where the privacy statement statistical information includes: the location of the privacy statement of the AA pay, the included information field, the function that can be provided by using information corresponding to one information field, and the device permission required for using information corresponding to one information field.

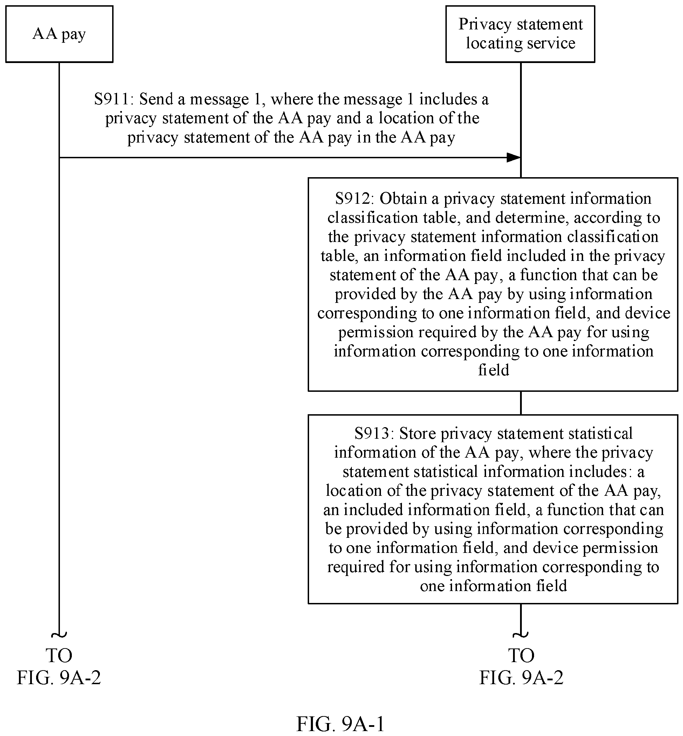

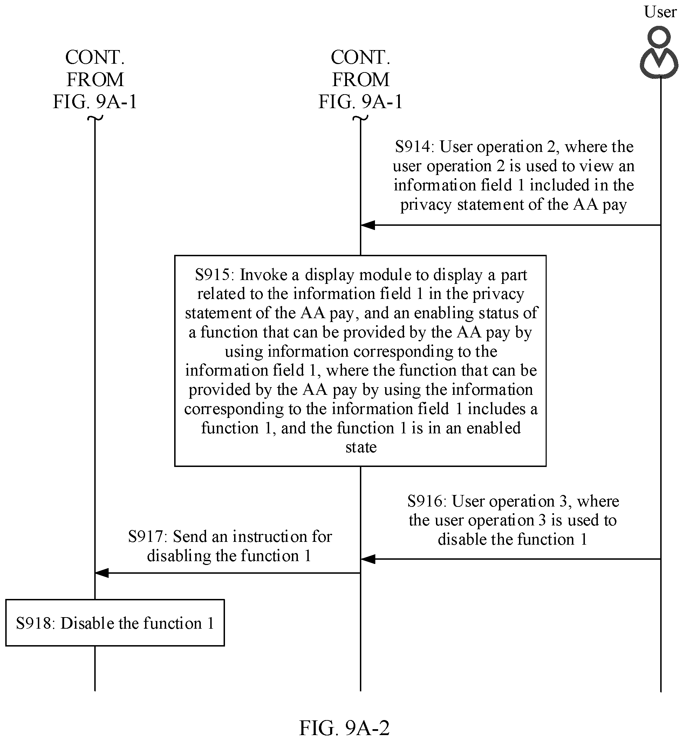

For step S932 and step S933, refer to step S912 and step S913 in FIG. 9A-1 respectively. Details are not described herein again.

S934: The privacy statement locating service receives a user operation 4, where the user operation 4 is used to view the privacy statement of the AA pay.

S935: The privacy statement locating service may send, to the AA pay, an instruction for viewing the privacy statement of the AA pay.

S936: The AA pay may invoke a display module to display the privacy statement of the AA pay.

In a possible implementation, the privacy statement locating service may provide a control A for jumping to a user interface of the privacy statement of the AA pay. The user operation 4 may be a user operation on the control A. In response to the user operation 4, the electronic device 100 may open the AA pay, and display the privacy statement of the AA pay.

Optionally, in response to the user operation 4, the privacy statement locating service may alternatively invoke the display module to display the privacy statement of the AApay. That is, the user may use the privacy statement locating service to view the privacy statement of the AA pay. The electronic device 100 may not need to open the AA pay.

S937: The privacy statement locating service receives a user operation 5, where the user operation 5 is used to view an information field included in the privacy statement of the AA pay.

S938: The privacy statement locating service may invoke the display module to display the information field included in the privacy statement of the AA pay, where the information field included in the privacy statement of the AA pay includes an information field 1.

In a possible implementation, in response to the user operation 5, the privacy statement locating service may search a privacy statement statistical table for the information field included in the privacy statement of the AA pay. Based on the information field included in the privacy statement of the AA pay, the privacy statement locating service may invoke the display module to display the information field included in the privacy statement of the AA pay. For a user interface in which the display module displays the information field included in the privacy statement of the AA pay, refer to the user interface 820 shown in FIG. 8C.

S939: The privacy statement locating service receives a user operation 6, where the user operation 6 is used to view a function 1 that can be provided by the AA pay by using information corresponding to the information field 1.

S940: The privacy statement locating service may send, to the AA pay, an instruction for viewing the function 1.

S941: The AA pay may invoke the display module to display the function 1 and an enabling status of the function 1, where the function 1 is in an enabled state.

In a possible implementation, the privacy statement locating service may display an option (the option corresponding to the function included in the function display area 834 shown in FIG. 8K) corresponding to the function that can be provided by the AA pay by using the information corresponding to the information field 1. The function that can be provided by the AA pay by using the information corresponding to the information field 1 includes the function 1. The user operation 6 may be a user operation performed on an option corresponding to the function 1.

In response to the user operation 6, the privacy statement locating service may send, to the AA pay, an instruction for viewing the function 1. The AA pay may invoke the display module to display the function 1 and the enabling status of the function 1.

For example, the information field is the biological feature information shown in FIG. 8C. The function 1 is the face-scanning payment function shown in FIG. 8K. In response to the user operation performed on the option identifier 834B included in the face-scanning payment option shown in FIG. 8K, the electronic device 100 may open the AA pay, and display a user interface (the user interface 850 shown in FIG. 8L) that is in the AA pay and that includes the function 1 and the enabling status of the function 1.

S942: The AA pay receives a user operation 7, where the user operation 7 is used to disable the function 1.

S943: The AA pay disables the function 1.

In other words, the user may open the AA pay by using a control provided by the privacy statement locating service, and jump to a user interface corresponding to the AA pay, to manage a function of the AA pay.

In another possible implementation, the privacy statement locating service may provide a control for enabling or disabling the foregoing function 1. That is, the user may directly enable or disable the function 1 in the privacy statement locating service without entering the APP payment. For the foregoing implementation, refer to steps S915 to S918 in the method shown in FIG. 9A-2.

It may be learned from the method shown in FIG. 9B-1 and FIG. 9B-2 that if the APP does not actively provide the privacy statement locating service with the privacy statement, the privacy statement locating service may still obtain the privacy statement of the APP and the location of the privacy statement in the APP. The privacy statement locating service can help the user quickly view the privacy statement of the APP based on the obtained privacy statement and the obtained location of the privacy statement. The privacy statement locating service may further analyze the privacy statement, and determine locations of information corresponding to different information fields in the privacy statement of the APP, so as to help the user quickly understand the privacy statement. The foregoing method can help the user search for and read the privacy statement of the APP, and determine which information collected by the APP is not expected to be obtained by the APP, so as to disable a corresponding function of the APP or cancel corresponding device permission. This can help the user better manage the APP, and protect the user information from being leaked.

**Based on the method shown in** **FIG. 9B-1** and FIG. 9B-2, the following describes **a scenario of viewing a privacy statement of an APP according to an embodiment of this application.**

In some embodiments, in response to the user operation performed on the view application option 322 shown in FIG. 8A, the electronic device 100 may display a user interface 1010 shown in FIG. 10A.

As shown in FIG. 10A, the user interface 1010 may include an APP display area 1011. The APP display area 1011 may display options of one or more APPs in the electronic device 100, for example, an option of an email APP, an option of a music APP, an option of a browser APP, and an option of the AA pay.

Some APPs in the electronic device 100 may actively provide the privacy statement locating service with privacy statements. Some other APPs in the electronic device 100 do not actively provide the privacy statement locating service with privacy statements. For the foregoing APPs that do not actively provide the privacy statement locating service with the privacy statements, the privacy statement locating service may obtain the privacy statements of these APPs in response to a user operation of viewing the privacy statements of these APPs.

In a possible implementation, an option corresponding to an APP that is in the APP display area 1011 and that does not actively provide the privacy statement locating service with a privacy statement may include a privacy statement obtaining control. An option corresponding to an APP that is in the APP display area 1011 and that actively provides the privacy statement locating service with a privacy statement may not include a privacy statement obtaining control. The privacy statement obtaining control may be used to trigger the privacy statement locating service to scan the APP, and obtain the privacy statement of the APP and a location of the privacy statement.

For example, the email APP, the music APP, the Huawei Video APP, a Huawei Health APP, and a weather APP actively provide the privacy statement locating service with privacy statements. However, the browser APP and the AA pay do not actively provide the privacy statement locating service with privacy statements. An option corresponding to the browser APP may include a privacy statement obtaining control 1011A. An option corresponding to the AA pay may include a privacy statement obtaining control 1011B.

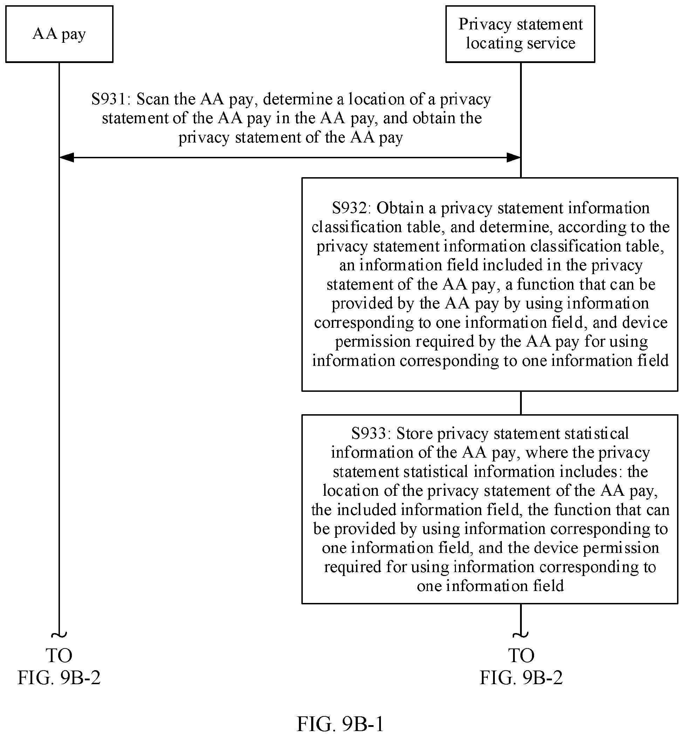

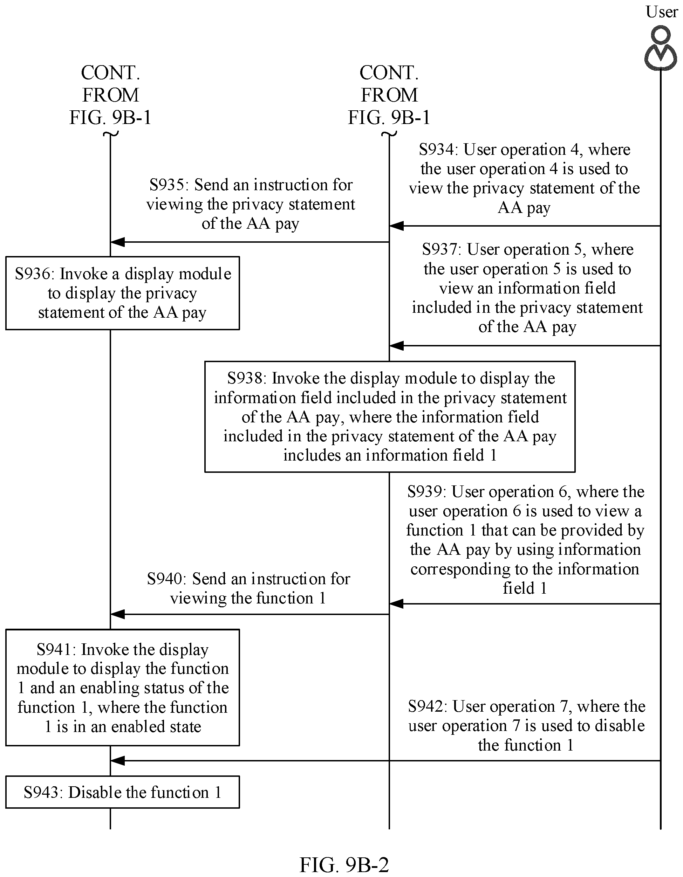

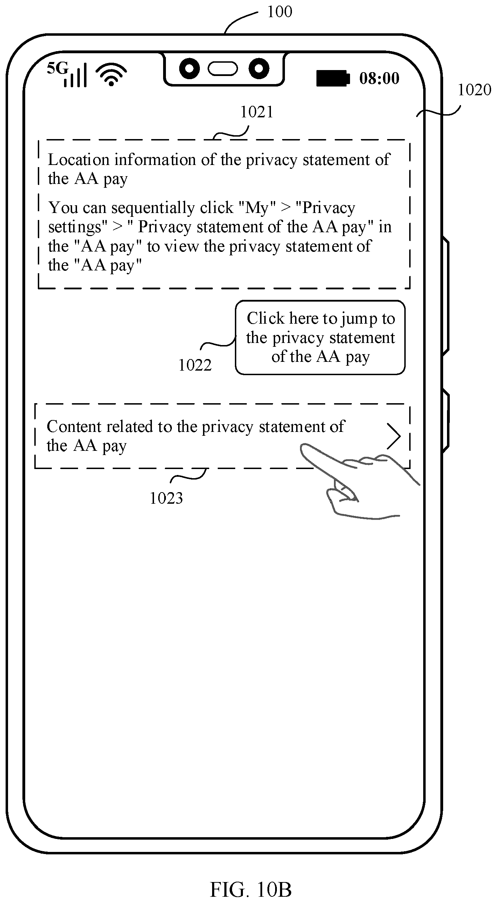

As shown in FIG. 10A, in response to a user operation performed on the privacy statement obtaining control 1011B, the electronic device 100 may display a user interface 1020 shown in FIG. 10B. In response to the user operation performed on the privacy statement obtaining control 1011B, the privacy statement locating service may scan the AA pay. For a specific method, refer to step S931 in the method shown in FIG. 9B-1. When the privacy statement of the AA pay and the location of the privacy statement are obtained, the privacy statement locating service may invoke the display module to display the user interface 1020.

As shown in FIG. 10B, the user interface 1020 may include a privacy statement location 1021, a jump control 1022, and a content analysis control 1023.

The privacy statement location 1021 may indicate the path of the user operation of viewing the privacy statement of the AA pay, that is, the location of the privacy statement of the AA pay.

The jump control 1022 may be used to trigger the electronic device 100 to open the AA pay, and display the privacy statement of the AA pay. A user operation performed on the jump control 1022 may be the user operation 4 in step S934 in the method shown in FIG. 9B-2.

The content analysis control 1023 may be used to trigger the electronic device 100 to display a result of analyzing the privacy statement of the AApay by the privacy statement locating service, for example, which information fields are included in the privacy statement of the AApay, a function that can be provided by the AA pay by using the information corresponding to the information field, device permission required by the AA pay for using the information corresponding to the information field, and a status in which the AA pay obtains the device permission.

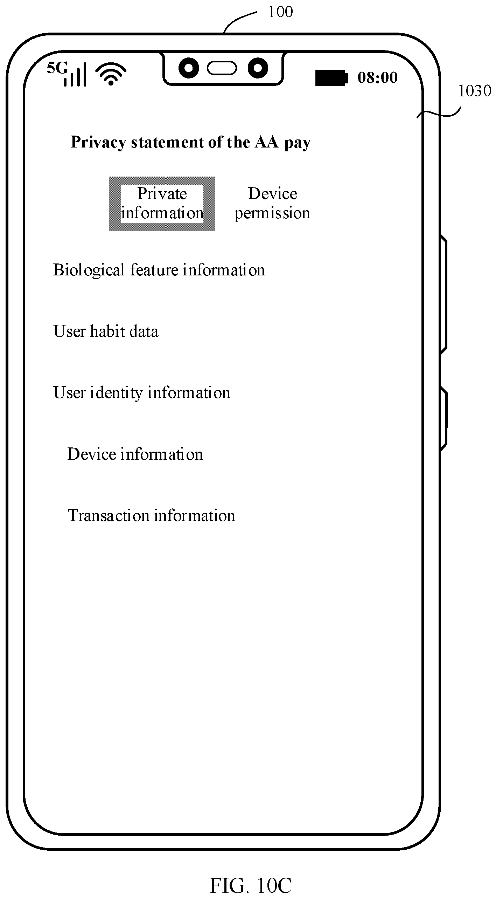

For example, in response to a user operation performed on the content analysis control 1023, the electronic device 100 may display a user interface 1030 shown in FIG. 10C. For the user interface 1030, refer to the description of the user interface 820 shown in FIG. 8C. The user operation performed on the content analysis control 1023 may be the user operation 5 in step S937 in the method shown in FIG. 9B-2.

If the privacy statement locating service actively scans the APP to obtain the privacy statement of the APP, for a scenario in which the privacy statement locating service provides the user with services such as viewing a part related to information corresponding to an information field in the privacy statement, enabling or disabling a function of the APP, and granting or canceling device permission of the APP, refer to the foregoing scenarios in FIG. 8D to FIG. 8N. Details are not described herein again.

It may be learned from the foregoing embodiment that if the APP does not actively provide the privacy statement locating service with the privacy statement, the privacy statement locating service may still obtain the privacy statement of the APP and the location of the privacy statement in the APP. The privacy statement locating service can help the user quickly view the privacy statement of the APP based on the obtained privacy statement and the obtained location of the privacy statement. The privacy statement locating service may further analyze the privacy statement, and determine locations of information corresponding to different information fields in the privacy statement of the APP, so as to help the user quickly understand the privacy statement. The foregoing method can help the user search for and read the privacy statement of the APP, and determine which information collected by the APP is not expected to be obtained by the APP, so as to disable a corresponding function of the APP or cancel corresponding device permission. This can help the user better manage the APP, and protect the user information from being leaked.

**Based on the APP management method in the foregoing embodiment, the following describes a diagram of a structure of the electronic device 100 according to an embodiment of this application.**

FIG. 11A to FIG. 11D are an example diagram of the structure of the electronic device 100.

As shown in FIG. 11A, the electronic device 100 may include an AApay 1110, a system capability invoking service 1120, a privacy statement locating service 1130, and a storage module 1140 that are coupled through a bus. The storage module 1140 may store a privacy statement information classification table 1141, a privacy statement statistical table 1142, and device permission management table 1143. For the privacy statement information classification table 1141, the privacy statement statistical table 1142, and the device permission management table 1143, refer to the description in the foregoing embodiment.

The AA pay 1110 may be used to provide a function related to a payment scenario, for example, a face-scanning login function, a face-scanning payment function, a fingerprint login function, and a fingerprint payment function. When the AA pay 1110 provides a corresponding function, a system capability of the electronic device 100 is usually required. For example, for the face-scanning payment function, the camera of the electronic device 100 needs to be invoked to capture a face image of the user.

In a possible implementation, when the system capability needs to be invoked, the AA pay 1110 may send, to the system capability invoking service 1120, a request for invoking the system capability, to request the system capability invoking service 1120 to provide an API for invoking the system capability.

In a possible implementation, the AA pay 1110 may send information related to the privacy statement to the privacy statement locating service, for example, the privacy statement of the AA pay and the location of the AA pay.

In addition to the AA pay, the electronic device 100 may further include another APP.

The system capability invoking service 1120 may be used to provide the API for invoking the system capability. The system capability invoking service 1120 may determine whether an APP has corresponding device permission for invoking a system capability. For a specific method, refer to step S520 in the method shown in FIG. 5A.

In a possible implementation, when receiving the request for the AA pay 1110 to invoke the system capability, the system capability invoking service 1120 may send, to the privacy statement locating service 1130, a message for indicating the AA pay to request to invoke the system capability, and wait for a request agree instruction or a request rejection instruction of the privacy statement locating service 1130. If the request agree instruction of the privacy statement locating service 1130 is received, the system capability invoking service 1120 may provide the AA pay with the API for invoking the system capability. If the request rejection instruction of the privacy statement locating service 1130 is received, the system capability invoking service 1120 may reject the request for the AA pay to invoke the system capability (for example, send, to the AA pay, a message for indicating a request failure).

The privacy statement locating service 1130 may be used to detect, by using the system capability invoking service 1120, whether an APP in the electronic device 100 requests to invoke a system capability. When it is detected that the APP requests to invoke the system capability, the privacy statement locating service 1130 may determine whether the user is informed that the APP requests to invoke the system capability. For a method for the privacy statement locating service 1130 to determine whether the user is informed, refer to the method shown in FIG. 5B. Details are not described herein again. When it is determined that the user is informed, the privacy statement locating service 1130 may indicate the system capability invoking service 1120 to provide the APP with the API for invoking the system capability. When it is determined that the user is not informed, the privacy statement locating service 1130 may indicate the system capability invoking service 1120 to refuse to provide the APP with the API for invoking the system capability.

Optionally, when it is determined that the user is not informed, the privacy statement locating service 1130 may further prompt the user that the APP requests to invoke the system capability, and ask the user whether to agree. If a user operation indicating that the user agrees is received, the privacy statement locating service 1130 may indicate the system capability invoking service 1120 to provide the APP with the API for invoking the system capability. If a user operation indicating that the user does not agree is received, the privacy statement locating service 1130 may indicate the system capability invoking service 1120 to refuse to provide the APP with the API for invoking the system capability.

The privacy statement locating service 1130 may be further used to analyze the privacy statement of the AA pay 1110 according to the privacy statement information classification table 1141 in the storage module 1140 after receiving information related to the privacy statement of the AA pay 1110. The privacy statement locating service 1130 may determine, from the privacy statement of the AA pay 1110, content such as which user information is obtained by the AA pay 1110, which functions can be provided, and which device permission is required. The privacy statement locating service 1130 may store the analysis result of the privacy statement of the AA pay into the privacy statement statistical table 1142 of the storage module 1140.

The privacy statement locating service 1130 may provide the user with a service of viewing the privacy statement of the AA pay 1110, a service of controlling one or more functions of the AA pay 1110, and a service of granting or canceling device permission of the AA pay 1110. For a scenario in which the privacy statement locating service 1130 provides the foregoing services, refer to the scenarios shown in FIG. 8A to FIG. 8N.

In a possible implementation, if the AA pay 1110 does not actively provide the privacy statement locating service 1130 with the privacy statement, the privacy statement locating service 1130 may further scan the AA pay 1110, to obtain the privacy statement of the AA pay 1110. When the privacy statement of the AApay 1110 is obtained, the privacy statement locating service 1130 may provide the service of viewing the privacy statement of the AA pay 1110, the service of controlling the one or more functions of the AA pay 1110, and the service of granting or canceling the device permission of the AA pay 1110.

The system capability invoking service 1120 and the privacy statement locating service 1130 may be a same service.

Not limited to the modules shown in FIG. 11A, the electronic device 100 may further include more or fewer modules.

It may be learned from the electronic device 100 shown in FIG. 11A that when it is determined that the AA pay 1110 requests to invoke the system capability when the user is not informed, the privacy statement locating service 1130 may notify the user and ask the user whether to agree before the AA pay 1110 invokes the system capability. If the user does not agree, the privacy statement locating service 1130 may reject the request for the AApay to currently invoke the system capability. In this way, the user may learn whether the APP abuses permission and obtains the user information without permission, and prevent the APP from invoking the system capability before the APP invokes the system capability, thereby avoiding a case in which personal information is leaked. The foregoing method can help the user better manage the device permission of the APP, thereby improving security of the user information, and providing the user with better experience.

In addition, the privacy statement locating service 1130 may provide the user with the service of viewing the privacy statement of the AA pay 1110, the service of controlling the one or more functions of the AA pay 1110, and the service of granting or canceling the device permission of the AA pay 1110. This can help the user quickly find the privacy statement of the AA pay 1110 and help the user better understand the privacy statement of the APP. The user may not need to search the lengthy privacy statement of the APP paragraph by paragraph for the content that the user wants to view. In addition, the user may quickly control the functions and the device permission of the AA pay by using the privacy statement locating service 1130. Therefore, there is no need to spend time in the AA pay 1110 to find a method for controlling the functions in the AA pay 1110 and controlling the device permission of the AA pay 1110. This can help the user better manage the functions in the APP, protect security of the user information, and improve user experience.

**Refer to** **FIG. 12. FIG. 12** **is an example diagram of a structure of another electronic device 100 according to an embodiment of this application.**

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB port 130 is an interface complying with a USB standard. The USB port 130 may be configured to connect to a charger to charge the electronic device 100, or may be configured to transmit data between the electronic device 100 and a peripheral device.

The charging management module 140 is configured to receive charging input from the charger. The charging management module 140 may further supply power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The electronic device 100 may receive key input, and generate key signal input related to a user setting and function control of the electronic device 100. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A type of the electronic device 100 is not limited in embodiments of this application. The electronic device 100 may be a portable electronic device that carries iOS^{®}, Android^{®}, Microsoft^{®}, or another operating system, for example, a mobile phone, a tablet computer, a smartwatch, or a smart band, or may be a non-portable electronic device, for example, a laptop computer (Laptop) with a touch-sensitive surface or a touch panel, or a desktop computer with a touch-sensitive surface or a touch panel.

A software system of the electronic device 100 may use a layered architecture, an event-driven architecture, a microkernel architecture, a micro service architecture, or a cloud architecture. An Android system with a layered architecture is used as an example to describe the software structure of the electronic device 100.

**FIG. 13** **is a block diagram of a software structure of the electronic device 100 according to an embodiment of this application.**

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 13, the application packages may include applications such as "Camera", "Gallery", "Calendar", "Map", "WLAN", "Music", "Messages", "Phone", an AA pay, and a privacy statement locating service.

For the privacy statement locating service, refer to the description in the foregoing embodiment.

The application framework layer provides an application programming interface (application programming interface, API) and a programming framework for an application at the application layer. The application framework layer includes some predefined functions.

As shown in FIG. 13, the application framework layer may include a window manager, a content provider, a view system, a phone manager, a resource manager, a notification manager, an activity manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, hanging up, or the like).

The resource manager provides various resources such as a localized character string, an icon, an image, a layout file, and a video file for an application.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or scroll bar text, for example, a notification of an application that is run on a background, or may be a notification that appears on the screen in a form of a dialog window. For example, text information is displayed in the status bar, a prompt tone is made, the electronic device vibrates, or the indicator light flashes.

The activity manager is responsible for managing activities (activities), starting, switching, and scheduling components in the system, and managing and scheduling applications. The activity manager may be invoked by an upper-layer application to enable a corresponding activity.

The Android runtime includes a kernel library and a virtual machine. The Android runtime is responsible for scheduling and managing the Android system.

The kernel library includes two parts: a function that needs to be invoked in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), media libraries (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be noted that if no contradiction or conflict occurs, any feature or any part of any feature in any embodiment of this application may be combined, and a technical solution obtained after combination also falls within the scope of embodiments of this application.

In conclusion, the foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An application management method, wherein the method is applied to an electronic device, the electronic device comprises a first APP, and the method comprises:
receiving, by the electronic device, a first user operation on the first APP, wherein the first user operation is used to use a first function of the first APP, and the first function is a function provided by the first APP by invoking a first system capability;
receiving, by the electronic device, a first request for the first APP to invoke the first system capability, wherein the first request is sent by the first APP in response to the first user operation;
allowing, by the electronic device based on the first request, the first APP to invoke the first system capability;
receiving, by the electronic device, a second request for the first APP to invoke the first system capability, wherein the second request is received by the electronic device when the electronic device does not receive the first user operation; and
refusing, by the electronic device based on the second request, to allow the first APP to invoke the first system capability.

2. The method according to claim 1, wherein after the allowing the first APP to invoke the first system capability, the method further comprises:
displaying, by the electronic device, a first notification, wherein the first notification indicates that the first APP is invoking the first system capability, the first notification comprises a first reject control, and the first reject control is used to trigger the electronic device to interrupt the first APP to invoke the first system capability; or
displaying, by the electronic device, a second notification, wherein the second notification indicates the first APP to complete invoking the first system capability, the second notification comprises a second reject control, and the second reject control indicates the electronic device to refuse, if the electronic device receives again a request for the first APP to invoke the first system capability, to allow the first APP to invoke the first system capability.

3. The method according to claim 1 or 2, wherein after the allowing the first APP to invoke the first system capability, the method further comprises:
displaying, by the electronic device, a first identifier, wherein the first identifier indicates that the first APP is invoking the first system capability; and
if a user interface of the first APP is displayed, receiving, by the electronic device, a user operation of viewing a control bar of the electronic device, and displaying the control bar, wherein the control bar comprises a third reject control, and the third reject control is used to trigger the electronic device to interrupt the first APP to invoke the first system capability.

4. The method according to any one of claims 1 to 3, wherein the first APP has first device permission, the first device permission is device permission required for invoking the first system capability, and after the allowing the first APP to invoke the first system capability, the method further comprises:
displaying, by the electronic device, a third notification, wherein the third notification indicates the first APP to invoke the first system capability, the third notification comprises a first cancel authorization control, and the first cancel authorization control is used to trigger the electronic device to cancel the first device permission to the first APP.

5. The method according to claim 4, wherein the first APP is invoking the first system capability, and the method further comprises:
receiving, by the electronic device, a user operation on the first cancel authorization control, interrupting the first APP to invoke the first system capability, and canceling the first device permission to the first APP.

6. The method according to any one of claims 1 to 4, wherein the first APP has the first device permission, the first device permission is device permission required for invoking the first system capability, and after the allowing the first APP to invoke the first system capability, the method further comprises:
displaying, by the electronic device, a second identifier, wherein the second identifier indicates the first APP to invoke the first system capability; and
if the user interface of the first APP is displayed, receiving, by the electronic device, the user operation of viewing the control bar of the electronic device, and displaying the control bar, wherein the control bar comprises a second cancel authorization control, and the second cancel authorization control is used to trigger the electronic device to cancel the first device permission to the first APP.

7. The method according to claim 6, wherein the first APP is invoking the first system capability, and the method further comprises:
receiving, by the electronic device, a user operation on the second cancel authorization control, interrupting the first APP to invoke the first system capability, and canceling the first device permission to the first APP.

8. The method according to any one of claims 1 to 7, wherein before the refusing, by the electronic device based on the second request, to allow the first APP to invoke the first system capability, the method further comprises:
displaying, by the electronic device, a fourth notification, wherein the fourth notification is used to prompt a user that the first APP requests to invoke the first system capability, the fourth notification comprises a fourth reject control, and the fourth reject control is used to trigger the electronic device to refuse to allow the first APP to invoke the first system capability; and
receiving, by the electronic device, a user operation on the fourth reject control.

9. The method according to claim 8, wherein the first APP has the first device permission, the first device permission is device permission required for invoking the first system capability, and the method further comprises:
canceling, by the electronic device, the first device permission to the first APP in response to the user operation on the fourth reject control.

10. The method according to claim 8 or 9, wherein the fourth notification further comprises a first agree control, and the first agree control is used to trigger the electronic device to allow the first APP to invoke the first system capability.

11. The method according to any one of claims 1 to 7, wherein before the refusing, by the electronic device based on the second request, to allow the first APP to invoke the first system capability, the method further comprises:
displaying, by the electronic device, a fifth notification, wherein the fifth notification is used to prompt a user that the first APP requests to invoke the first system capability, the fifth notification comprises a second agree control, but does not comprise a control for triggering the electronic device to refuse to allow the first APP to invoke the first system capability, and the second agree control is used to trigger the electronic device to allow the first APP to invoke the first system capability, wherein
the electronic device does not receive a user operation on the second agree control in a first time period.

12. The method according to any one of claims 1 to 7, wherein before the refusing, by the electronic device based on the second request, to allow the first APP to invoke the first system capability, the method further comprises:
displaying, by the electronic device, a third identifier, wherein the third identifier indicates that an APP in the electronic device requests to invoke the first system capability;
receiving, by the electronic device, the user operation of viewing the control bar of the electronic device, and displaying the control bar, wherein the control bar comprises first prompt information and a fifth reject control, the first prompt information is used to prompt a user that the first APP requests to invoke the first system capability, and the fifth reject control is used to trigger the electronic device to refuse to allow the first APP to invoke the first system capability; and
receiving, by the electronic device, a user operation on the fifth reject control.

13. The method according to claim 12, wherein the first APP has the first device permission, the first device permission is device permission required for invoking the first system capability, and the method further comprises:
canceling, by the electronic device, the first device permission to the first APP in response to the user operation on the fifth reject control.

14. The method according to claim 12 or 13, wherein the control bar further comprises a third agree control, and the third agree control is used to trigger the electronic device to allow the first APP to invoke the first system capability.

15. The method according to any one of claims 1 to 14, wherein the electronic device further comprises a second APP, and the method further comprises:
receiving, by the electronic device, a third request for the second APP to invoke the first system capability, wherein the third request is received by the electronic device when the electronic device does not receive a second user operation on the second APP, the second user operation is used to use a second function of the second APP, and the second function is a function provided by the first APP by invoking the first system capability;
allowing, by the electronic device based on the third request, the second APP to invoke the first system capability; and
displaying, by the electronic device, a sixth notification, wherein the sixth notification is used to prompt the user that the second APP is invoking the first system capability; or
displaying, by the electronic device, a seventh notification, wherein the seventh notification is used to prompt the user that the second APP completes invoking the first system capability.

16. The method according to claim 15, wherein the sixth notification comprises a sixth reject control, the sixth reject control is used to trigger the electronic device to interrupt the second APP to invoke the first system capability, the seventh notification comprises a seventh reject control, and the seventh reject control indicates the electronic device to refuse, if the electronic device receives again a request for the second APP to invoke the first system capability, to allow the second APP to invoke the first system capability.

17. The method according to any one of claims 1 to 16, wherein before the refusing, by the electronic device based on the second request, to allow the first APP to invoke the first system capability, the method further comprises:
determining, by the electronic device, that the second request does not meet a first condition, wherein the first condition comprises one or more of the following: time during which the first system capability is requested to be invoked is within a second time period, the electronic device is at a first location when the first system capability is requested to be invoked, and a quantity of times of requesting to invoke the first system capability does not exceed a first quantity threshold.

18. The method according to any one of claims 1 to 17, wherein the method further comprises:
receiving, by the electronic device, a fourth request for the first APP to invoke the first system capability, wherein the fourth request is received by the electronic device when the electronic device does not receive the first user operation;
determining, by the electronic device, whether the fourth request meets the first condition, wherein the first condition comprises one or more of the following: the time during which the first system capability is requested to be invoked is within the second time period, the electronic device is at the first location when the first system capability is requested to be invoked, and the quantity of times of requesting to invoke the first system capability does not exceed the first quantity threshold; and
if it is determined that the fourth request meets the first condition, allowing, by the electronic device, the first APP to invoke the first system capability; or
if it is determined that the fourth request does not meet the first condition, refusing, by the electronic device, to allow the first APP to invoke the first system capability.

19. The method according to any one of claims 1 to 18, wherein the method further comprises:
displaying, by the electronic device, P information fields, wherein the P information fields are classifications of to-be-collected information in a privacy statement of the first APP; and
receiving, by the electronic device, a user operation on a first information field in the P information fields, and displaying first content and options of Q functions, wherein the first content indicates an introduction to information corresponding to the first information field in the privacy statement of the first APP, the Q functions comprise a function provided by the first APP for collecting the information corresponding to the first information field, and an option of one function in the options of the Q functions is used to enable or disable the function.

20. The method according to claim 19, wherein the method further comprises:
obtaining, by the electronic device, the privacy statement of the first APP, and determining, based on the privacy statement of the first APP, the P information fields and a function provided by the first APP for collecting information corresponding to the P information fields; and
the obtaining, by the electronic device, the privacy statement of the first APP specifically comprises:
receiving, by the electronic device, a first message from the first APP, wherein the first message comprises the privacy statement of the first APP; or
performing, by the electronic device, simulated clicking on controls comprised in the first APP one by one, to obtain the privacy statement of the first APP.

21. An electronic device, wherein the electronic device comprises a communication apparatus, a memory, and a processor, the memory is configured to store a computer program, and the processor is configured to invoke the computer program, so that the electronic device is enabled to perform the method according to any one of claims 1 to 20.

22. A computer-readable storage medium, comprising instructions, wherein when the instructions are run on an electronic device, the electronic device is enabled to perform the method according to any one of claims 1 to 20.

23. A computer program product, wherein the computer program product comprises computer instructions, and when the computer instructions are run on an electronic device, the electronic device is enabled to perform the method according to any one of claims 1 to 20.
